(19) Europäisches Patentamt
European Patent Office
Office européen des brevets

(11) **EP 0 632 189 B1**

(12) **EUROPEAN PATENT SPECIFICATION**

(45) Date of publication and mention
of the grant of the patent:
**09.07.1997 Bulletin 1997/28**

(51) Int Cl.6: **F01N 9/00**, F01N 3/02

(21) Application number: **94106063.4**

(22) Date of filing: **19.04.1994**

(54) **An exhaust gas purifier**

Abgasreiniger

Purificateur de gaz d'échappement

(84) Designated Contracting States:
**DE ES FR NL**

(30) Priority: **03.06.1993 JP 133437/93**
**07.09.1993 JP 221949/93**
**13.09.1993 JP 227207/93**

(43) Date of publication of application:
**04.01.1995 Bulletin 1995/01**

(73) Proprietor: **KABUSHIKI KAISHA**
**TOYODA JIDOSHOKKI SEISAKUSHO**
**Toyota-shi, Aichi (JP)**

(72) Inventor: **Taniguchi, Hiroyuki,**
**c/o Toyoda Jidoshokki Seisak.**
**Kariya-shi, Aichi-ken (JP)**

(74) Representative: **Tiedtke, Harro, Dipl.-Ing.**
**Patentanwaltsbüro**
**Tiedtke-Bühling-Kinne & Partner**
**Bavariaring 4**
**80336 München (DE)**

(56) References cited:
**EP-A- 0 389 891          EP-A- 0 528 289**

- **PATENT ABSTRACTS OF JAPAN vol. 17, no. 34 (M-1357) 22 January 1993 & JP-A-04 255 518 (TOYOTA MOTOR)**
- **PATENT ABSTRACTS OF JAPAN vol. 17, no. 88 (M-1370) 22 February 1993 & JP-A-04 284 115 (TOYOTA MOTOR) 8 October 1992**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention relates to an exhaust gas purifier for collecting and burning particulates exhausted out of a diesel engine.

Description of the Prior Art

Japanese Unexamined Patent Publication (KOKAI) No.4-255518 discloses an exhaust gas purifier. A filter of the exhaust gas purifier is regenerated by supplying electric power to a heater placed near an upper stream end surface of the filter and by feeding air into an upper stream portion of an exhaust tube placed between the diesel engine and the filter.

Namely, particulates collected in the filter burns from an upper stream side portion of the filter to a down stream portion of the filter.

It is known to keep air supply after cutting off the power supplied to the heater in order to cool the filter.

However, it is difficult to burn out perfectly particulates in every portion of the filter. Especially, it is difficult to burn out particulates collected in an outer peripheral portion of the down stream side of the filter.

If the particulates remain in the filter after the resuscitation operation, it causes a pressure loss through the filter. Further, it causes a high temperature burning in a next resuscitation operation, a possibility of accidental melting or cracking the filter.

The resuscitation means a regeneration in the present specification.

We researched and found that the particulates remains in the outer peripheral portion of the down stream side of the filter, because the outer peripheral portion of the filter is cooled and a burning velocity in the outer peripheral portion of the filter becomes slower than the velocity in a center portion or a middle portion in a radial direction of the filter.

It is possible to increase the air flow rate in order to increase the temperature of the outer peripheral portion of the filter. However, the particulates in the outer peripheral portion of the filter can not be decreased by merely increasing the air flow rate.

Namely, we found that an increase of the air flow rate causes an increase of the burning velocity in the center portion in the radial direction of the filter.

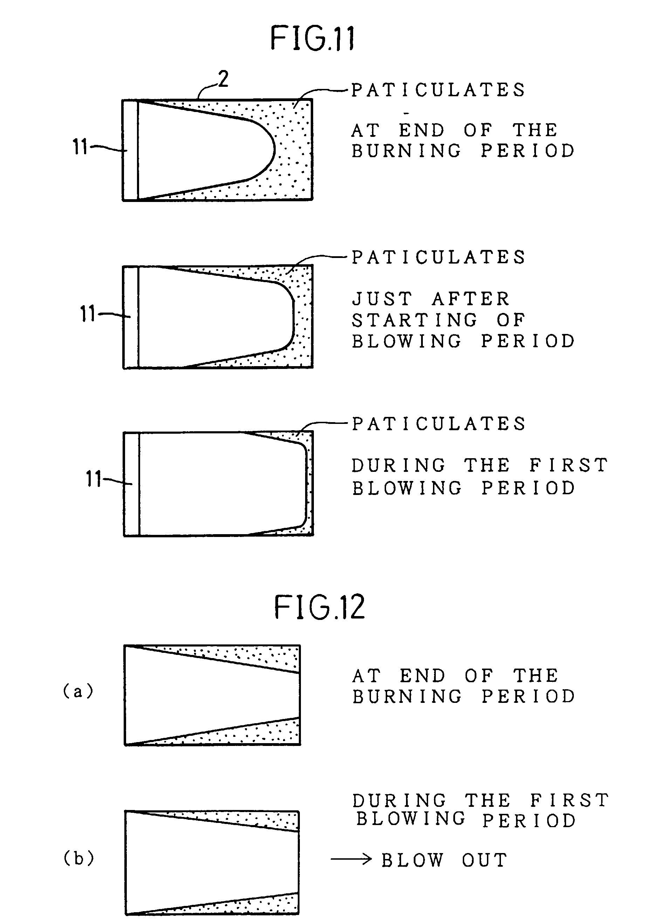

Consequently, as shown Figure 12(a), most of the fed air flows through the center portion in the radial direction of the filter and does not result in an increase of the air flow rate in the outer peripheral portion of the filter and a reduce of the remaining of particulates in the outer peripheral portion of the filter as shown in Figure 12(b).

Further, the increase of the air flow rate causes the melt or crack of the filter due to an increase in the temperature of the filter.

The prior filter resuscitation technologies, which employ a predetermined volume of the air supply and a predetermined heating power to the blower and the heater, causes the melting or cracking of the filter when the value or velocity of the temperature of the filter becomes too high in a burning period in which the particulates collected in the filter are burnt.

In order to solve this problem, we had thought an idea which is to cut off the heating power in order to protect the filter if a detecting temperature detected by a temperature sensor placed near the filter reaches a predetermined threshold value.

However, the above mentioned temperature feedback control system employing the temperature sensed by the temperature sensor is not sufficiently effective to protect the filter because the temperature sensor placed apart from the filter can not respond rapidly and a response velocity of the feedback control system is too slow.

Further, we found that the resuscitation efficiency gradually decreases in spite of employing every control method because the filter is gradually choked by particulates which are not burned.

Document EP-A-0 528 289 discloses a device for catching and for removing particulates of a diesel engine, wherein a filter is disposed in the exhaust line for trapping particulates included in the exhaust gas of the diesel engine. A heating element is placed adjacent to the filter so as to heat up the filter means for obtaining an optimal incineration process leading to an elimination of the diesel particulates in the exhaust gas. In order to ensure a constant ability for fully incinerating the particulates of the entire filter portion and to avoid a reduction in the effective filter area, an amount of air which is also necessary for cooling a filter is introduced into the exhaust passage, and the air speed thereof is controlled to maintain optimal incineration conditions of the filter, even if the incineration process is frequently repeated.

In particular, an effective flow area of the filter of the exhaust gas is determined after the end of the incineration process and the amount of air introduced into the filter during the incineration process in accordance with the detected value of the effective area before commencement of a new trapping is controlled in such a manner that a speed of the air passed through the filter for obtaining a desired particulate trapping performance is reached.

Summary of the Invention

The present invention is achieved in order to solve the above mentioned problems.

The first object of the present invention is to realize the exhaust gas purifier which can burn out the particulates almost completely.

The second object of the present invention is to realize the exhaust gas purifier which can prevent the filter from cracking or melting.

The third object of the present invention is to realize the exhaust gas purifier having high resuscitation efficiency.

According to the present invention, these objects are attained by an exhaust gas purifier as claimed in claim 1.

The features of the present invention are briefly described below.

The air flow rate in the present invention is not constant but varies in accordance with each resuscitation stage in order to correspond with the favorable value of each resuscitation stage.

For example, if a large volume of air is supplied before the firing of the particulates, the filter is cooled by the air.

Accordingly, the firing of the particulates is delayed and it is necessary to increase the heating power.

If the air flow rate is decreased too much before the firing of the particulates, differences of the temperatures at the respective portions of the filter become large and result in the remaining of the particulates after the burning.

Further, if a large volume of air is supplied in a burning period (for example, the air flow rate in the burning period is larger than the optimum air flow rate in a preheating period which is a period before the firing of the particulates), a burning velocity at the center portion in the radial direction of the filter is further increased in comparison with a burning velocity of the particulates at the outer peripheral portion of the filter. Consequently, the supplied air is blown through the center portion of the filter after all of the particulates collected in the center portion of the filter has burned out, the air flow rate supplied at the outer peripheral portion decreases and some of the particulates collected at the outer peripheral portion in the down stream side of the filter remain.

Consequently, the present invention makes it possible to operate a preferred resuscitation of the filter.

(Features of some embodiments)

As for the first embodiment, the particulates collected at the center portion in the radial direction in the downstream side of the filter are burned very slowly by means of controlling the heating means and the air supply means.

For example, the temperature of the center portion of the down stream side is suppressed to lower than a temperature at which the particulates can be burned (normally, about 600°C).

Then, if a burning area approaches the down stream end surface of the filter, the air flow rate is increased and the burning velocity at the center portion in the radial direction of the filter is increased sufficiently.

Therefore, the air is supplied sufficiently to a middle portion and the outer peripheral portion in the radial direction in the down stream side of the filter and the particulates in those portions are burned sufficiently.

Accordingly, the remaining particulates collected in every portion, especially, in the down stream side of the outer peripheral portion decrease sufficiently.

As for the second embodiment, a filter resuscitation period includes a burning period and the first blowing period.

The first blowing period starts after the burning period. In the burning period, the air flow rate is decreased.

Therefore, lack of the supplied air in the down stream portion of the filter occurs because oxygen in the air is consumed in the upper stream portion and middle stream portion of the filter before oxygen in the air reaches the down stream portion of the filter. Further, differences between the temperature and the burning velocity at the center portion and the temperature and the burning velocity at the outer peripheral portion become small. The burning period is maintained till the burning area approaches the down stream side end surface of the filter.

In the first blowing period, the air flow rate is increased and the burning of the particulates at the center portion in the down stream portion of the filter is resumed and the burning in the outer peripheral portion and the middle portion in the radial direction is kept. Therefore, the remaining particulates in the filter are burned quickly. Namely, by decreasing the air flow rate, the burning period of the invention has a slower burning velocity and less heat generation than those in the burning period of the prior resuscitation apparatus. Therefore, on account of the above mentioned decreasing of the temperature difference and above mentioned decreasing of the air supply, the difference between the burning velocity at the center portion and the burning velocity at the outer peripheral portion is reduced.

Accordingly, the particulates in the outer peripheral portion and the middle portion can be burned before the burning area approaches the down stream side end surface in the center portion of the filter.

The particulates collected at the outer portion in the down stream portion of the filter can not be burned before the particulates collected at the center portion in the down stream portion of the filter are perfectly burned out. However, most of particulates collected in the outer peripheral portion of the filter has been already burned out and the particulates remaining at the outer peripheral portion can be burned out by feeding a large volume of air which compensates for the blowing out through the center portion of the filter.

As above mentioned, the invention achieves the following objects ; the decrease of the remaining particulates, and the protection of the filter.

As for the third embodiment, the heating power supplied in the first blowing period is reduced in comparison with the heating power supplied in the burning period or the heating power supplied in a period which starts after the first blowing period. Therefore, it is possible to save the heating power and to prevent the temperature of the filter from rising excessively.

As for the 4th embodiment, the second blowing period is set after the first blowing period. The air flow rate in the second blowing period is greater than the air flow rate in the first blowing period. Therefore, the filter can be rapidly cooled after the completion of the burning of the particulates.

As for the 5th embodiment, the air flow rate supplied in a pre-heating period which is set in a period between the commencement of supply of the heating power and firing of the particulates is further increased in comparison with the air flow rate supplied in the burning period. Therefore, a difference of the temperature, a difference of the firing timing and the difference of the burning condition between each portion of the filter can be reduced.

As for the 6th embodiment, a pre-heating period is set in the period between the commencement of the supply of the heating power to the heater and firing of the particulates. In the pre-heating period, the heating power which is less than the heating power supplied in the burning period is supplied. Therefore, the period for burning of the particulates is extended.

However, the differences of the temperature among portions of the filter are reduced. Therefore, the differences of the temperature among portions of the upper stream side end surface of the filter are reduced.

Further, the differences of the burning velocity in the portions in a radial direction of the filter are reduced. The air supply in the pre-heating period decreases the differences of the temperature and the burning velocity.

If the differences of the temperature among portions of the filter are large, there is the possibility of its crack.

As for the other embodiment, the heating power supplied in the pre-heating period is controlled in accordance with a detected air flow rate. Namely, if the air flow rate varies in the pre-heating period, the temperature of the particulates and the filter are varied in the pre-heating period. Therefore, the highest temperature of the filter is varied and the possibility of the crack or melt of the filter occurs.

Further the particulates remaining after complexion of the burning increases (the resuscitation efficiency decreases). In the present embodiment, the heating power is increased if the air flow rate is increased and the heating power is decreased if the air flow rate is reduced. Accordingly, the variation of the temperature of the filter and the particulates can be reduced in spite of the variation of the air flow rate.

As for the other embodiment, the air flow rate is controlled by means of a feedback control method.

In our experiments, the most important factor which relates to the temperature rise of the filter is not the heating power but the air flow rate (a quantity of supplied oxygen).

The variation of the supplied quantity of air supply causes the variation of the temperature of the filter, the damage of the filter and the decreases of the resuscitation efficiency.

The decrease of the variation of the air flow rate is difficult because there are many causes. For example, the variation of the air flow rate is caused by variation of the voltage applied to the motor for driving the blower (the air supply means), accumulation of the particulates in the exhaust tube and accumulation of ashes in the filter.

Namely, in order to correspond the air flow rate with the predetermined air flow rate, the present embodiment detects the real air flow rate in the resuscitation period and controls the air flow rate in accordance with the detected value of the air flow rate by means of the feedback control method.

For example, a relation between the air flow rate and the voltage applied to the motor driving the blower is memorized as the map in the memory.

Therefore, it is prevented that the air flow rate varies on account of the above causes. Accordingly, the crack and melt of the filter and the decrease of the resuscitation efficiency are decreased.

As for the other embodiment, the mass of air supply (called the air mass flow ) is calculated or searched by correcting the detected air flow rate in accordance with a detected temperature of air. Further, the air flow rate is controlled by means of the feedback control method in accordance with the mass of air supply to correspond the mass of air supply with the predetermined mass value.

Therefore, it is prevented that the mass of air supply varies in accordance with the variation of the temperature of air.

Accordingly, the crack or melt of the filter and the decrease of the resuscitation efficiency caused by the variation of the temperature of air are prevented in spite of operation of the apparatus in a cold area or a hot area.

As for the other embodiment, the mass of the air supply is calculated or searched by correcting the detected air flow rate in accordance with a detected pressure of air.

Further, the air flow rate is controlled by means of the feedback control method in accordance with the mass of air supply for corresponding the mass of air supply with the predetermined mass value.

Therefore, it is prevented that the mass of air supply varies in accordance with the variation of the pressure of air.

Accordingly, the crack or melt of the filter and the decrease of the resuscitation efficiency caused by the variation of the pressure of air are prevented in spite of operation of the apparatus in any altitude.

As for the other embodiment, a pre-cooling period is set before supplying of the heating power to the heater. In the pre-cooling period, the blower (the air supply means) is driven during a predetermined period and the filter is previously cooled.

Therefore, the variation of the temperature of the filter at commencement the pre-heating period is reduced in spite of the variation of temperature of the filter before starting of the resuscitation operation.

Accordingly, the crack or melt of the filter and the decrease of the resuscitation efficiency caused by the variation of the temperature of the filter are prevented in spite of the resuscitation operation being started immediately after stopping of the engine.

BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:

Figure 1 is a basic block diagram illustrating the preferred embodiment 1 of an exhaust gas purifier according to the present invention;

Figure 2 is a flow chart illustrating a main routine of an resuscitation operation of the exhaust gas purifier showing in Figure 1.

Figure 3 is a flow chart illustrating a timer control sub routine showing in Figure 2. The subroutine means a subroutine in the present specification.

Figure 4 is a schematic elevation of the filter shown in an radial direction. Figure 4 shows an arrangement of temperature sensors in a filter employed by the preferred embodiment 1.

Figure 5 is a schematic side view of the filter shown in an axial direction. Figure 4 shows arrangement of temperature sensors in the filter employed by the preferred embodiment 1.

Figure 6 is a graph showing variation of the temperature at the center portion in the radial direction of the filter employed by the preferred embodiment 1.

Figure 7 is a graph showing variation of the temperature at the middle portion in the radial direction of the filter employed by the preferred embodiment 1.

Figure 8 is a graph showing variation of the temperature at the outer peripheral portion in the radial direction of the filter employed by the preferred embodiment 1.

Figure 9 is a graph showing the relation between the highest temperature of the filter and a weight of particulates collected in the filter employed by the preferred embodiment 1.

Figure 10 is a graph showing a relation between the highest temperature of a filter and weights of particulates collected in a filter employed by prior arts.

Figure 11 is a schematic sectional side elevation of the filter shown in a radial direction. Figure 11 shows particulates in the filter employed by the preferred embodiment 1.

Figure 12 is a schematic sectional side elevation of the filter shown in the radial direction. Figure 11 shows particulates in the filter employed by prior arts.

Figure 13 is a flow chart illustrating an air flow rate control sub routine employed by the preferred embodiment 2.

Figure 14 is a flow chart illustrating a timer control sub routine employed by the preferred embodiment 3.

Figure 15 is a flow chart illustrating a timer control sub routine employed by the preferred embodiment 4.

Figure 16 is a flow chart illustrating a timer control sub routine employed by the preferred embodiment 5.

Figure 17 is a flow chart illustrating a pre-heating temperature control sub routine employed by the preferred embodiment 5.

Figure 18 is a flow chart illustrating a another pre-heating power control sub routine employed by the the preferred embodiment 6.

Figure 19 is a basic block diagram illustrating the preferred embodiment 7 of the exhaust gas purifier.

Figure 20 is a flow chart illustrating a timer control sub routine employed by the preferred embodiment 7.

Figure 21 is a flow chart illustrating a pre-heating power control sub routine showing in Figure 20.

Figure 22 is a flow chart illustrating a main routine employed by the preferred embodiment 8.

Figure 23 is a flow chart illustrating a main routine employed by the preferred embodiment 8.

Figure 24 is a flow chart showing a weight of the collected particulates detection sub routine illustrated in Figure 22.

Figure 25 is a flow chart showing an air flow rate control sub routine employed by the preferred embodiment 8.

Figure 26 is a flow chart showing a valve close detection sub routine illustrated in Figure 22.

Figure 27 is a flow chart showing a valve open detection sub routine illustrated in Figure 23.

Figure 28 is a flow chart showing a valve close detection sub routine employed by the preferred embodiment 9.

Figure 29 is a basic block diagram illustrating the preferred embodiment 10 of the exhaust gas purifier.

Figure 30 is a flow chart showing a power control sub routine employed by the embodiment 11.

Figure 31 is a basic block diagram illustrating the preferred embodiment 12 of an exhaust gas purifier.

Figure 32 is an expanded side sectional elevation illustrating an area near a catalytic heater of an exhaust gas purifier illustrated in Figure 31.

Figure 33 is an expanded sectional elevation illustrating an area near a catalytic heater of an exhaust gas purifier illustrated in Figure 31.

Figure 34 is a expanded cross-sectional view in radial direction illustrating an area near a catalytic heater of an exhaust gas purifier illustrated in Figures 32 and 33.

Figure 35 is a flow chart showing a timer controlling sub routine employed by an exhaust gas purifier of the preferred embodiment 12.

Figure 36 is a flow chart showing a pre-heating sub routine employed by an exhaust gas purifier of the embodiment 13 illustrated in Figure 35.

Figure 37 is a flow chart showing a heater testing sub routine employed by an exhaust gas purifier of the embodiment 14.

Figure 38 is a block diagram illustrating the preferred embodiment 15 of an exhaust gas purifier.

Figure 39 is a timing chart illustrating an operation of an exhaust gas purifier of the preferred embodiment 15.

Figure 40 is a circuit diagram showing an example of a Schmitt trigger circuit shown in Figure 38.

Figure 41 is a block diagram showing an exhaust gas purifier of the preferred embodiment 16.

Figure 42 is a flow chart showing a heater testing sub routine employed by an exhaust gas purifier of the preffered embodiment 16.

Figure 43 is a flow chart illustrating an operation of CPU after exchanging of a heater employing by the preferred embodiment 16 of the exhaust gas purifier.

Figure 44 is a flow chart illustrating an operation of CPU after exchanging of the heater employing by the preferred embodiment 16 of the exhaust gas purifier.

Figure 45 is a block diagram showing an exhaust gas purifier of the preferred embodiment 17.

Figure 46 is a flow chart showing a resuscitation operation timing decision sub routine employed by an exhaust gas purifier of the embodiment 17.

Figure 47 is a flow chart showing a resuscitation operation employed by a exhaust gas purifier of the embodiment 17.

Figure 48 is a flow chart showing a resuscitation operation employed by an exhaust gas purifier of the embodiment 17.

Figure 49 is a flow chart showing a resuscitation operation employed by an exhaust gas purifier of the embodiment 17.

Figure 50 is a flow chart showing a resuscitation operation employed by an exhaust gas purifier of the embodiment 17.

Figure 51 is a flow chart showing a resuscitation operation employed by an exhaust gas purifier of the embodiment 18.

## DETAILED DESCRIPTION OF THE PREFERRED EMBODIMENTS

Having generally described the present invention, a further understanding can be obtained by reference to the specific preferred embodiments which are provided herein for purposes of illustration only and are not intended to limit the scope of the appended claims.

Preferred Embodiment 1

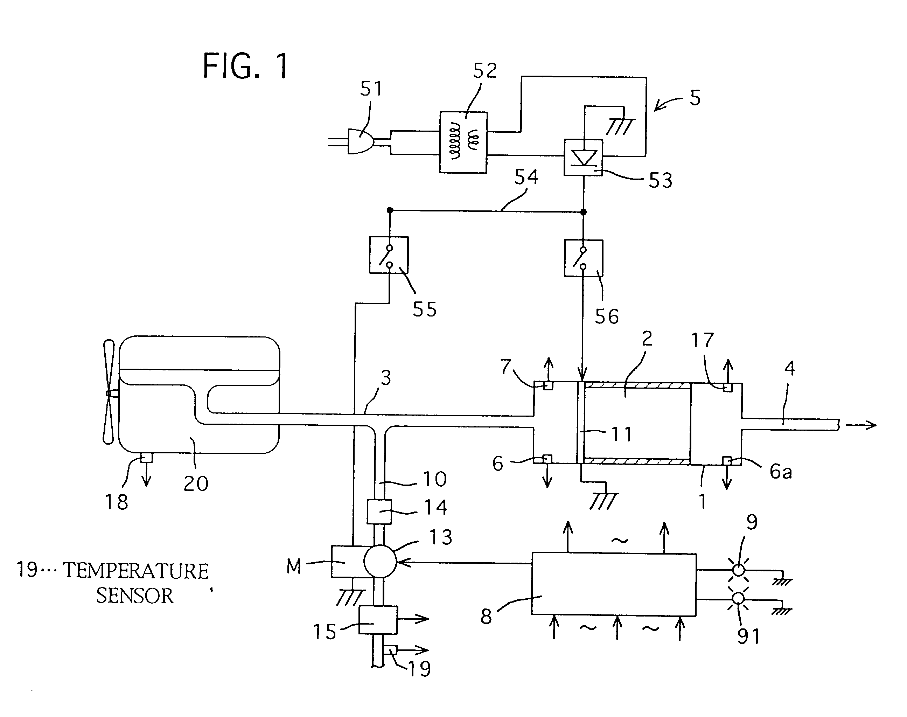

Figure 1 illustrates the Preferred Embodiment 1 of the exhaust gas purifier according to the present invention.

The exhaust gas purifier has a case 1 for accommodating a filter. The both of end surfaces of the case 1 are almost closed. An upper stream side pressure sensor 7, a temperature sensor 6, a heater(the heating means) 11, a filter 2, a down stream side pressure sensor 17 and a temperature sensor 6a are sequentially arranged from the upper stream side toward the down stream side in the case 1.

An outlet of an upper stream portion of the exhaust tube 3 of diesel engine 20 is connected to an upper stream side end (terminal) wall of the case 1.

One end of air supply tube 10 is connected to the upper stream portion of the exhaust tube 3. The other end of the air supply tube 10 is connected, via electromagnetic valve 14, to an outlet of a blower (or an air pump) 13.

The inlet of the blower 13 is communicated with the atmosphere via an inlet tube which has an air flow rate sensor 15 and an air temperature sensor 19 for sensing an air flow rate and a temperature of the air.

Electric power supplied to the heater 11 and a motor M for driving the blower 13 are controlled by the controller 8. A rotation speed sensor 18 attached on the diesel engine 20 outputs a rotation speed signal to the controller 8.

The controller 8 has an I/O interface and an A/D converter( not shown). The controller 8 controls switches 55 and 56 for controlling the heater 11 and the blower 13 and turns on an alarm lamp 9 when an accident occurs. 91 is a lamp for indicating a resuscitation timing.

The controller 8 controls a voltage applied to the motor M in accordance with a signal of the air flow rate sensor 15 by means of a well known feedback control method employing a duty ratio and controls the air flow rate of the blower 13 to correspond with a predetermined level.

A power supplying equipment 5 consists of a plug 51, a transformer 52 and a full wave rectifier 53. The plug 51 is connected to a commercial power source (not shown). A direct voltage outputted by the full wave rectifier 53 is supplied to the motor M and the heater 11 via the semiconductor power switches 55 and 56.

The filter 2 consists of a ceramic filter having a honeycomb structure and a column shape and is made of porous cordierite and is supported by the case 1.

An expandable ceramic mat (not shown) is inserted between an outer peripheral surface of the filter 2 and an inner peripheral surface of the case 1.

The filter 2 has many small through holes (not shown) formed in the axial direction. The edge portions of one half of the holes facing the upper stream side are blocked by plugs (not shown) and the edge portions of another half of the holes facing the down stream side are blocked by plugs (not shown).

Further, each hole of which the edge portion facing the upper stream side is blocked is adjacent to each hole of which the edge portion facing the down stream side is blocked. The exhaust gas penetrates through a porous wall between the two types of holes and the particulates are collected the porous wall in the holes. THe both of end surfaces of the filter 2 are respectively opposed to the inner end surfaces of the case 1.

The heater 11 consists of a resistance line made of kanthal line and is arranged along the end surface facing the upper stream side.

The operation of the above apparatus is described bellow.

(Collection of particulates)

The exhaust gas exhausted out of the diesel engine 20 flows in the case 1 via the upper stream portion of the exhaust tube 3. The particulates included in the exhaust gas are collected by the filter 2. A purified exhaust gas is discharged from the down stream portion of the exhaust tube 4.

(Resuscitation of the filter)

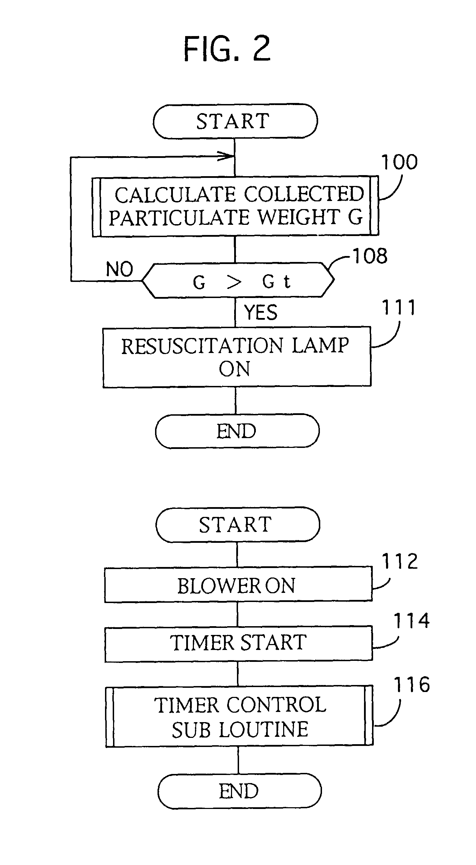

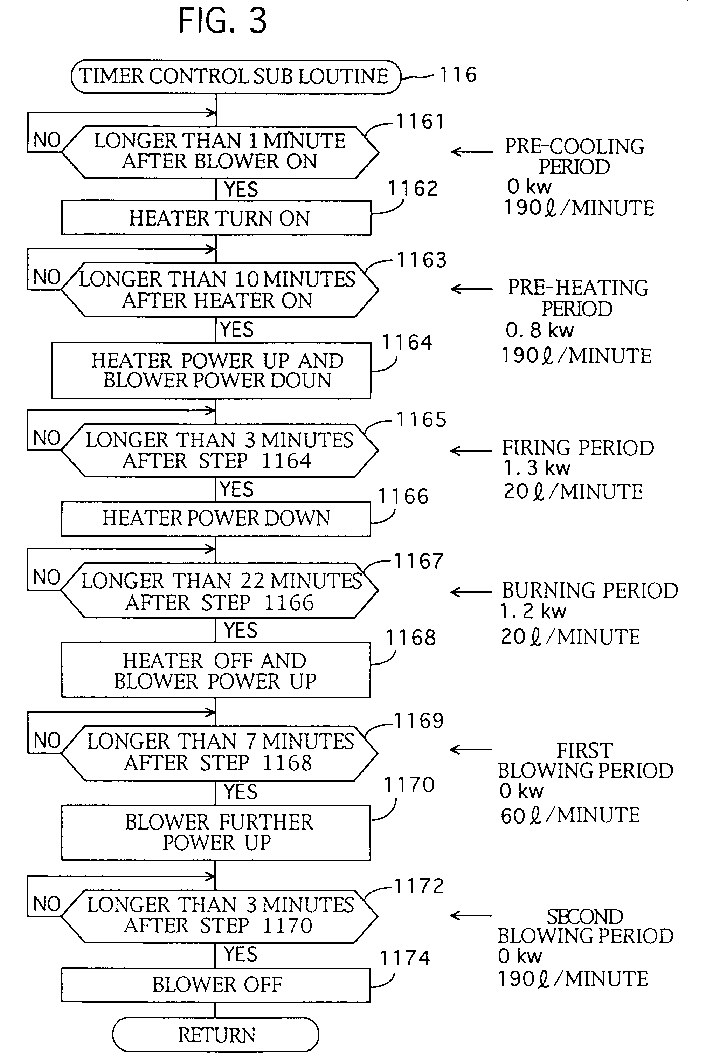

The resuscitation operation of the filter 2 is in flow chart shown as Figure 2 and 3. The electric power is supplied to the apparatus by an outer power source during engine stop period. The apparatus is started by a manual operation.

The controller 8 opens the electromagnetic valve 14 when the resuscitation operation is commenced and closes it after resuscitation operation has ended.

Figure 2 shows a filter resuscitation subroutine consisting of a filter resuscitation timing decision sub routine having steps from 100 to 111 and a filter resuscitation operation subroutine having steps from 112 to 116.

When driving of the engine 20 is started, the a filter resuscitation timing decision sub routine having steps from 100 to 111 is commenced.

Initially, at the step 100, weight of the collected particulates detecting sub routine is operated. In the weight of the collected particulates detecting sub routine, a weight of the collected particulates G is searched from the map stored in the memory of the controller 8 by inputting the pressures P1 and P2 of the exhaust gas detected by the pressure sensors 7 and 17, the engine rotation speed n detected by the rotation speed sensor 18 and the temperature T of the exhaust gas detected by the temperature sensor 6.

Next, at the step 108, it is judged whether the searched weight of the collected particulates G is greater than the predetermined value Gt or not. If G is not greater than Gt, the step 100 is executed. If G is greater than Gt, the step 111 is executed.

At the step 111, the lamp 91 is turned on and indicates a filter resuscitation. Then the routine is over.

Then, if an operator who finds the illumination of the lamp 91 turns on a resuscitation switch (not shown) while the engine 20 is stopped, the filter resuscitation operation sub routine is started.

In the filter resuscitation operation sub routine, the blower 13 is driven at the step 112 initially, next the timer (not shown) of the controller 8 is started at the step 114 and timer control sub routine for resuscitating the filter is executed at the step 116. Then the resuscitation operation is over.

The above mentioned timer control sub routine is shown in Figure 3. The timer control sub routine executes a power supply control and an air flow rate control in accordance with the timer. The timer control sub routine executes a pre-cooling period, a pre-heating period, a firing period, a burning period and an after-cooling period in order. The after-cooling period consists of the first blowing period and the second blowing period.

(The pre-cooling period)

Initially, at the step 1161, the power is supplied to the blower 13 for 1 minute. The air flow rate (volume of the air supply) of the blower 13 is 190 liters per minute. The temperatures of the filter 2 and the heater 11 cooled by the air become almost equal to a temperature of the fresh air (namely a room temperature) in spite of variation of the temperatures of the filter 2 and the heater 11 before starting of the resuscitation operation.

Therefore, the variation of the firing timing of the collected particulates and the excessive temperature of the filter 2 are prevented.

(The pre-heating period)

At the step 1162, the heating power which is 0.8kW is supplied to the heater 11. The air flow rate of the blower 13 is 190 liters per minute. At the next step 1163, the routine waits 10 minutes after supplying the heating power to the heater 11.

Then, the next step 1164 is executed. Therefore, every portion of the filter 2 is heated by the air from the heater 11.

(The firing period)

At the step 1164, the heating power of 1.3kW is supplied to the heater 11 and the air flow rate of 20 liters per minute is supplied by the blower 13. At the next step 1165, the routine waits 3 minutes after increasing the heating power at the step 1164. Therefore, the temperature of particulates collected at the front end surface (the upper stream side end surface) of the filter 2 rises rapidly and the particulates fires.

Especially, by decreasing of the air flow rate, the temperature of the particulates collected near the front end surface of the filter 2 can be increased quickly.

(The burning period)

At the next step 1166, the heating power of 1.2kW is supplied to the heater 11 and the air flow rate of 20 liters per minute is supplied by the blower 13. Therefore, the burning occurs from the front (the upper stream side)

end surface of the filter 2 toward the down stream direction.

However, the burning velocity decreases gradually as proceeding of the burning toward the down stream direction, because the air flow rate and heat generation of the burning particulates is not sufficient.

The oxygen gas density of the gas which exists at the extreme front point of the burning gradually decreases as proceeding of the burning toward the down stream direction because the oxygen gas is consumed gradually by the particulates remaining in the upper stream portions of the filter. Further, as the down stream portion is apart from the heater 11, the down stream portion of the filter receives less heat generated by the heater 11.

Therefore, the burning velocity becomes slow in the down stream portion of the filter 2 and almost stops near the back end surface (the down stream side end surface) of the filter 2.

However, the burning velocity at the center portion, in the radial direction, of the filter 2 is faster in comparison with the burning velocity at the outer peripheral portion of the filter 2 because the outer peripheral portion of the filter 2 loses the heat from the outer peripheral surface of the filter 2.

Accordingly, after the burning at the center portion has stopped on account of lack of the heat supplying, in the radial direction, near the back end surface of the filter 2, the burning at the outer peripheral portion and the middle portion, in the radial direction, is still going on. The temperature of the center portion, in the radial direction, in the down stream portion of the filter 2 drops less than 600 °C.

Therefore, it is prevented that the burning reaches at the back end surface of the filter and the supplied air is blown out through the center portion of the filter 2 in the radial direction while the burning of the particulates in the middle portion and the outer peripheral portion can be continued on account of the sufficient amount of air being supplied.

Namely, after the burning at the center portion has mostly stopped near the back end surface of the filter 2 on account of the filter 2, the burning at the middle portion and the outer peripheral portion of the filter 2 is continued.

In the emobodiment, the highest temperature of the filter is 900°C if the weight of the collected particulates is 8.6 g.

(The after-cooling period)

(the first blowing period)

At the next step 1168, the supply of the heating power is stopped and the air flow rate of the blower 13 is 60 liters per minute. At the next step 1169, the routine waits for 70 minutes after the step 1168.

On account of the increasing of the air supply, burning of the particulates existing in each burning portion of the filter 2 are accelerated quickly and they can be perfectly burned out in short period. After the ending of the burning of the particulates in the center portion of the filter 2, some of the supplied air blows out through the center portion of the filter 2.

However, the burning of the particulates in the middle portion and the outer peripheral portion of the filter 2 has already been commenced and the temperature of the outer peripheral portion of the filter 2 has been heated sufficiently to maintain the burning.

(the second blowing period)

At the next step 1170, the air supply of the blower 13 is increased to 190 liters per minute. At the next step 1172, the routine waits 3 minutes after the step 1170.

On account of the increase of the air supply, the filter 2 and the heater 11 having the high temperature are rapidly cooled. Therefore, deterioration of the filter 2 and the heater 11 is prevented and the resuscitation period can be shortened.

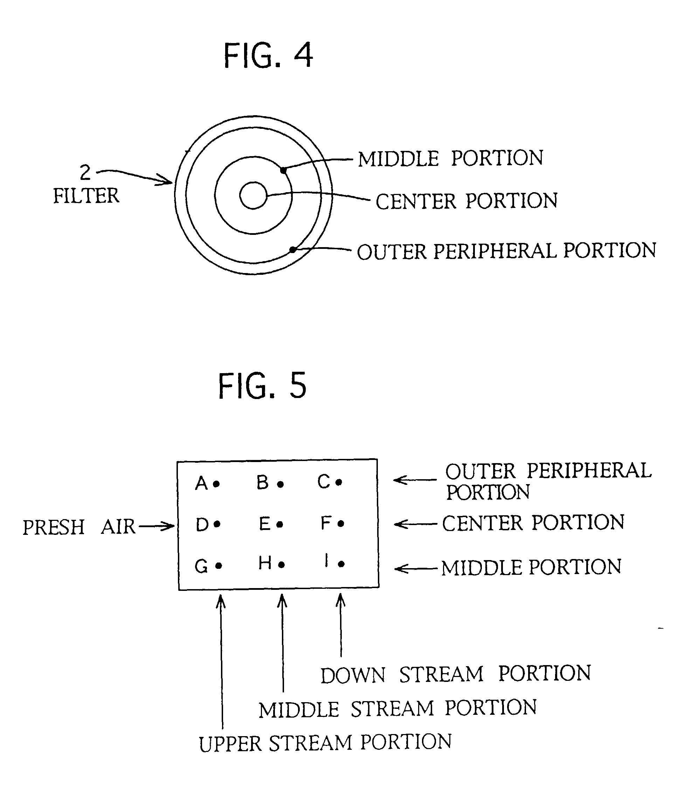

The experimental results are shown from Figure 4 to Figure 12.

The length, in the axial direction, of the filter 2 is 152 mm and the diameter of the filter is 144mm. The center points D, E and F are positioned on the circle which has the diameter 40 mm. The middle points G, H and I are positioned on the circle which has the diameter of 80 mm. The outer peripheral points A, B and C are positioned on the circle which has the diameter of 120 mm.

The upper stream points A, D and G are positioned at portions 12 mm from the upper side end surface (the front end surface) of the filter 2. The middle stream points B, E and H are positioned at portions 77 mm from the upper side end surface (the front end surface) of the filter 2.

The down stream points C, F and I are positioned at portions 15mm from the down stream side end surface (the back surface) of the filter 2 as shown in Figure 4 and Figure 5.

The weight of the collected particulates G is about 8.6 g per liter and patterns of the heating power supplying and air supply are similar to the above mentioned patterns.

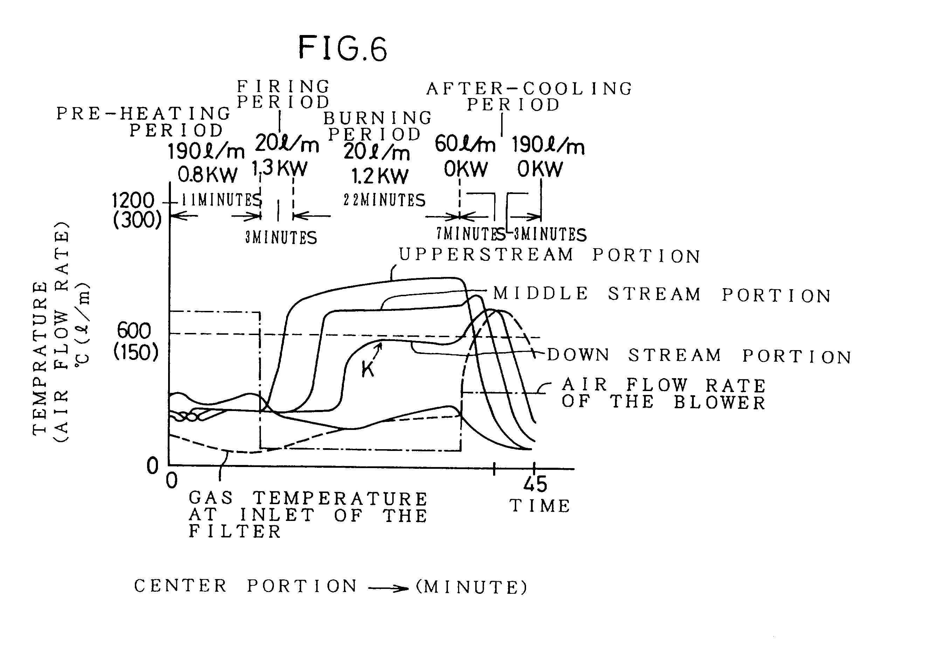

Figure 6 shows the variation of the temperature at the center portion in the radial direction.

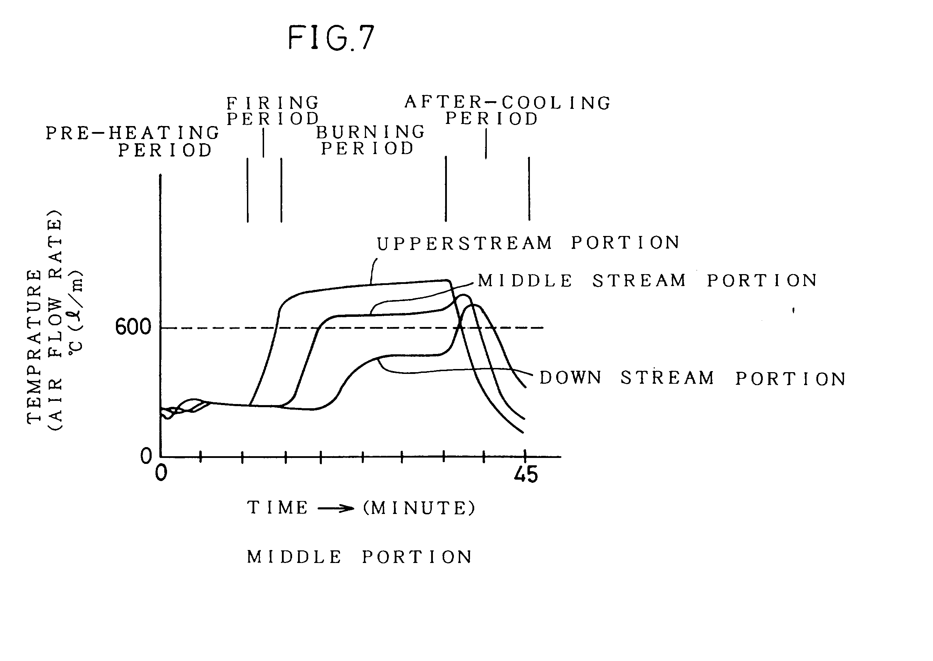

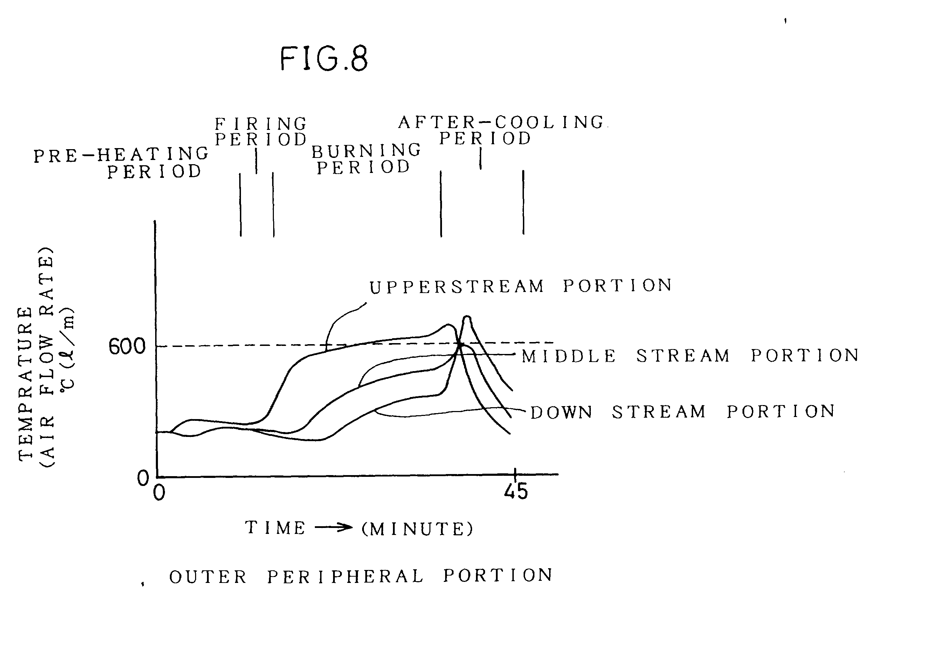

Figure 7 shows the variation of the temperature at the middle portion in the radial direction. Figure 8 shows the variation at the temperature at the outer peripheral portion. The point K shown in Figure 6 indicates the state that the burning in the center portion, in the radial direction, in the down stream portion of the filter 2 has almost stopped or has a slow burning velocity.

Figure 7 indicates the state that the particulates collected at the middle portion H, in the radial direction and the axial direction had been mostly burned already.

Figure 8 indicates the state that the particulates collected at the outer peripheral portion H in the the axial direction had been mostly burned already.

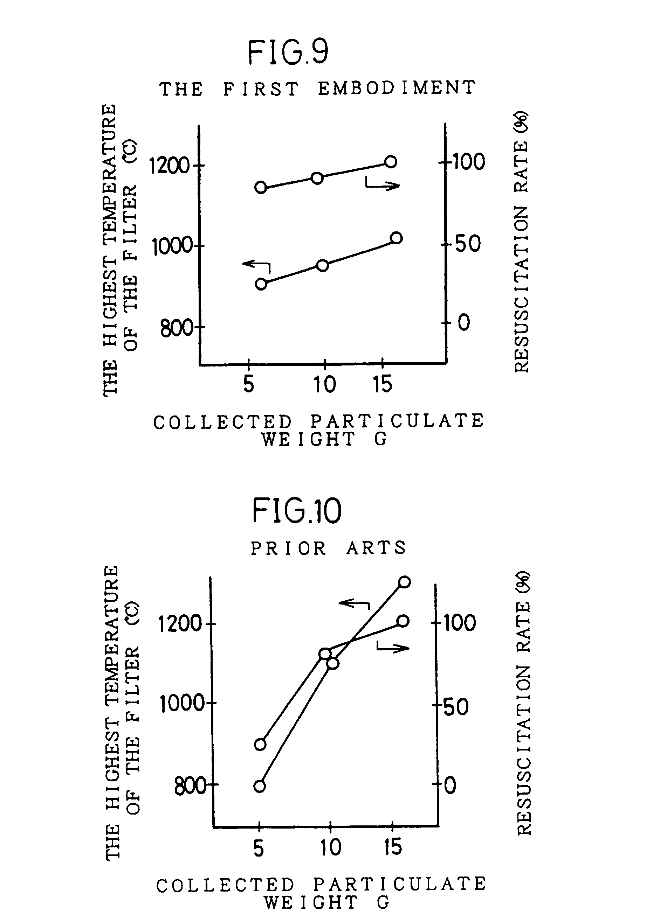

Figure 9 shows the relation among the highest temperatures, the resuscitation efficiency and the weight G of the collected particulates. The resuscitation efficiency is shown by (1-X) X (100%). The value X is the remaining weight of particulates per the weight of the collected particulates.

In Figure 9, it is clear that the temperature of the filter 2 can be less than 1000°C which is the allowable highest temperature of the filter 2 the weight of the collected particulates is less than 10g.

Figure 10 shows the relation among the highest temperatures, the resuscitation efficiency and the weight G of the collected particulates in the resuscitation operation of the prior arts supplied a predetermined constant air flow rate (60 liters per minute).

In Figure 10, the temperature of the filter 2 exceeds 1000°C when the weight of the collected particulates is 10g. Therefore, danger of damage of the filter 2 occurs.

Namely, in the prior art keeping the air flow rate constant (for example 30 liters per minute) of air supply is necessary to prevent the cessation of the burning in the down stream portion of the filter 2.

However, as the air flow rate is high, if the particulate weight is a little over the allowable volume, the temperature of the filter 2 exceeds allowable temperature easily and the crack or melt of the filter 2 occurs. The above mentioned problem is solved by the present embodiment.

Figure 11 is a schematic sectional view indicating the particulates remaining state in the filter 2 in the burning period and the first blowing period.

Figure 12 is a schematic sectional view indicating the remnant state in the filter in the burning period and the first blowing period. The filter 2 of the prior arts shown in Figure 12 is supplied air flow at a constant rate.

Further, if an outer peripheral heater is wound around the outer peripheral surface of the filter 2 additionally, the resuscitation efficiency can be increased.

The air flow rate can be increased step by step or continuously between the first blowing period and the second blowing period.

Preferred Embodiment 2

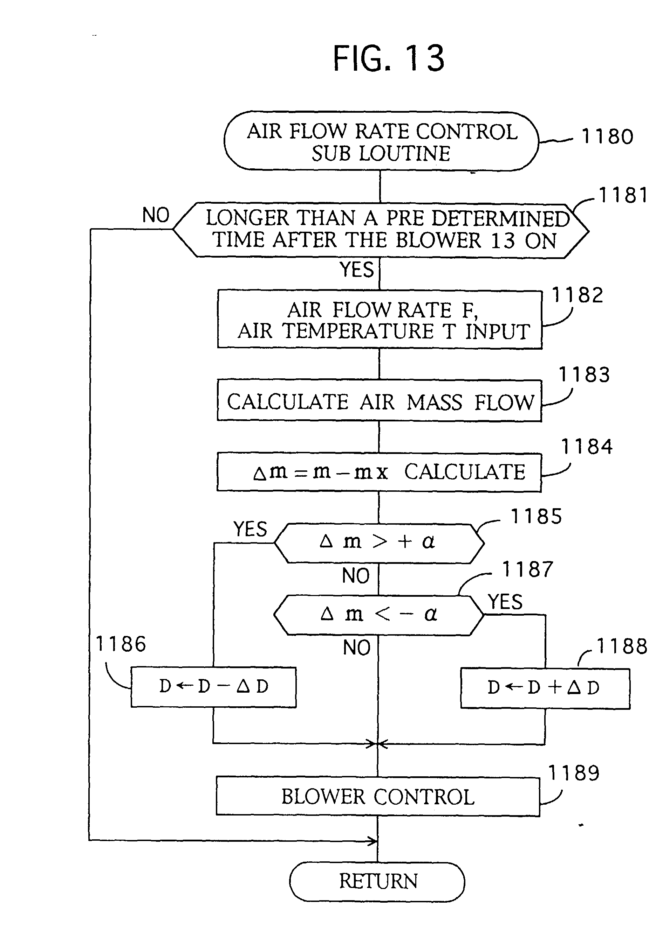

Figure 13 illustrates the Preferred Embodiment 2 showing an air flow rate controll sub routine added to the embodiment, which is executed every constant intervals.

Initially, at the step 1181, the starting of the blower 13 is judged. If it has not been started, the sub routine returns to the main routine and if it has been started, the sub routine waits a predetermined constant period (for example 10 minutes).

At the next step 1182, the air flow rate F and the temperature of the supplied air T are read in the controller from the air flow rate sensor 15 and the air temperature sensor 19.

At the next step 1183, a mass of the air supply (air mass flow) m is calculated in accordance with the next formula.

$$m = F \times 29 / (T \times R)$$

R is a constant value which is 0.082 in the present embodiment.

At the next step 1184, the difference value $\Delta m$ between the calculated mass m and the predetermined mass mx which is the memorized mass value is calculated. The value of the air mass flow mx is set at 224g per minute in the present embodiment.

At the next step 1185, the difference $\Delta m$ and the predetermined threshold value $+ \alpha$ are compared. If the $\Delta m$ is larger than $+ \alpha$, the predetermined constant duty ratio $\Delta D$ is decreased from the present duty ratio D of the voltage applied to the blower 11.

If the $\Delta m$ is not larger than $+ \alpha$, at the step 1187, the difference $\Delta m$ and the predetermined threshold value $- \alpha$ are compared. If the $\Delta m$ is not smaller than $- \alpha$, the routine goes on to the step 1189 and if the $\Delta m$ is smaller than $-\alpha$, at the step 1188, $\Delta D$ is added to duty ratio D.

At the step 1189, the duty ratio of the voltage applied to the motor M for driving the blower 13 is corresponded with the duty ratio D corrected at the step 1186 or 1187 or 1188. Therefore, the mass of the air supply keeps constant value by controlling of the rotation speed of the motor M and a heat quantity generated by burning of the particulates is corresponded with a constant level.

Consequently, the melt or crack of the filter 2 and the decrease of the resuscitation efficiency are prevented.

The heating power supplied in the pre-heating period is less than the heating power supplied in the firing period and the burning period.

Further, the blower 13 is driven in the pre-heating period. Therefore, differences of the temperature among the pre-heated portions of the filter and and a heat stress of the filter are decreased.

Further, deferences of the burning velocity among the portions in the filter and the remaining particulates are decreased.

Preferred Embodiment 3

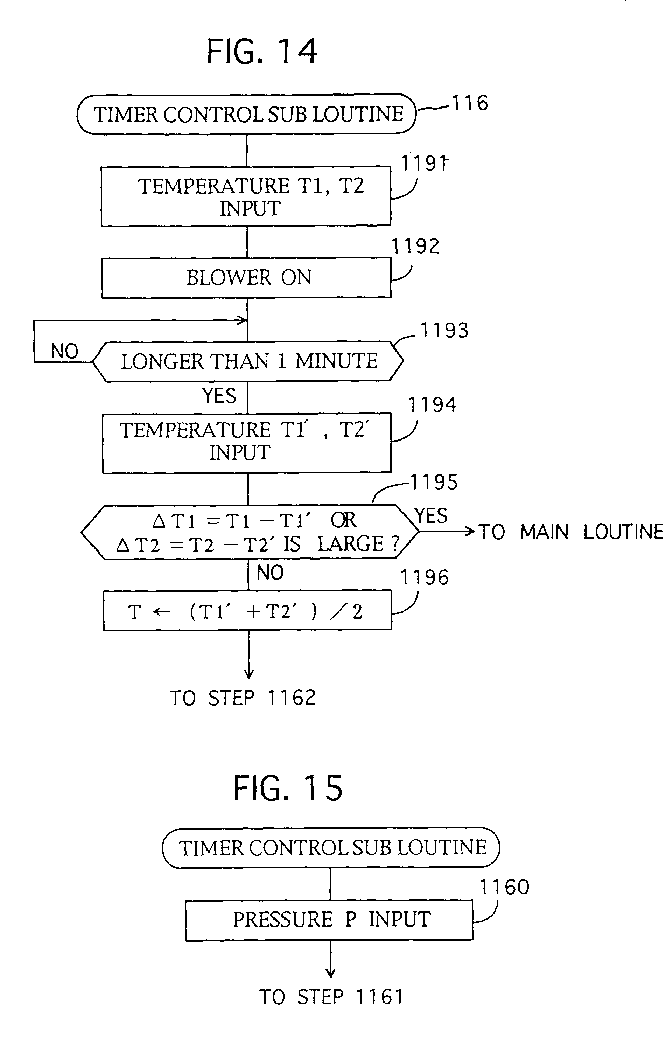

Figure 14 illustrates the Preferred Embodiment 3 showing another timer control sub routine for detecting the temperature of the air by the temperature sensor 6, 6a instead of the temperature sensor 19 shown in Figure 1.

Initially, at the step 1191 after beginning of the timer control sub routine, the temperature T1, T2 outputted from the sensor 6, 6a are read in the controller 8. Then, the motor M of the blower 13 is driven at the step 1192.

At the next step 1193, the routine waits 1 minute.

Then, at the step 1194, the temperature T1', T2' outputted from the sensor 6, 6a are read.

At the next step 1195, the difference of the temperature $\Delta$ T1 between T1 and T1' is calculated. Similarly, the difference of the temperature $\Delta$ T2 between T2 and T2' is calculated.

Further, the $\Delta$ T1 and $\Delta$ T2 are compared with a predetermined value To.

If the $\Delta$ T1 or $\Delta$ T2 is greater than To, it is determined that the filter 2 is hot . Then, the routine goes on to the main routine. If the $\Delta$ T1 or $\Delta$ T2 is not greater than To, it is determined that the filter 2 is cold and goes on to the step 1196. At the next step 1196, the average value of T1' and T2' is calculated as the temperature T of the air and goes on to the step 1162.

The temperature T of the air is used at the step 1182 shown in Figure 13. Therefore, the temperature 19 can be abbreviated.

Preferred Embodiment 4

Figure 15 illustrates the Preferred Embodiment 4 showing another timer control sub routine. In the present embodiment, at the step 1160 after the beginning of the timer control sub routine, the pressure P outputted from the pressure sensor 17 are read in.

Then, the routine goes on to the step 1161. At the next step 1183 shown in Figure 13, the air mass flow is determined in accordance with the air flow rate F, the temperature T and the pressure P. In the present embodiment, the mass of air supply is searched from the map installed in the controller 8 by parameters F, P and T.

Naturally, the mass of the air supply can be calculated.

Therefore, the correct mass of the air supply can be determined and the efficiency of the resuscitation can be increased without the accident of the filter2. The pressure of the air is detected in the period in which the engine 20 and the blower 13 are stopped.

Preferred Embodiment 5

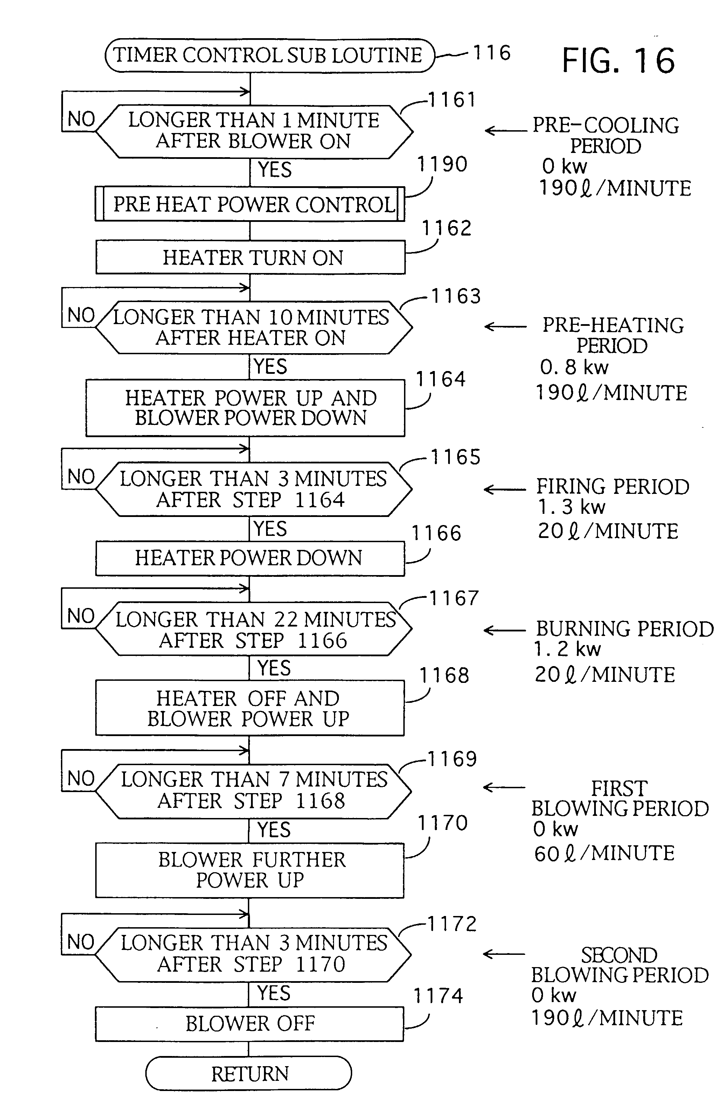

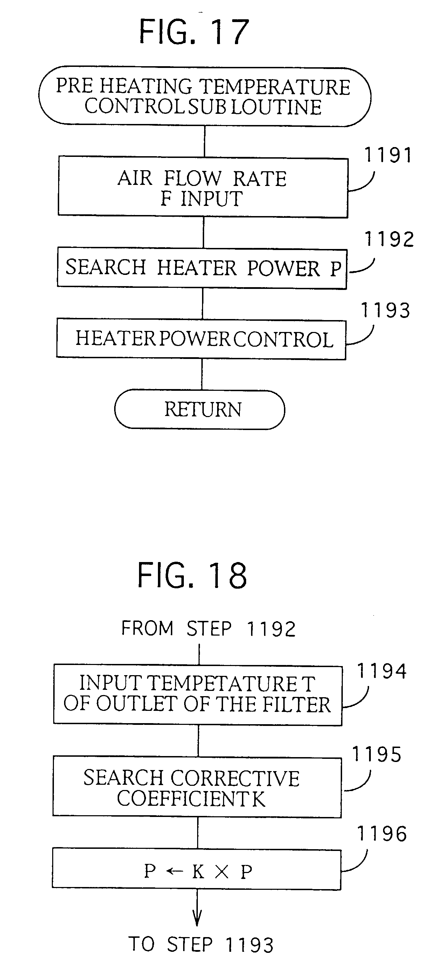

Figure 16 and Figure 17 illustrate the Preferred Embodiment 5 showing another timer control sub routine. In the present embodiment, the step 1190 is added to the flow chart shown in Figure 3 of the embodiment 1. The step 1190 is the pre-heating control sub routine shown in Figure 17.

The step 1190 detects the air flow rate of the blower 13 in the pre-heating period in accordance with a signal of the air flow rate sensor 15 and controls the heating power supplied to the heater 11 in order to pre-heat the filter till the temperature of the heater 2 reaches a predetermined constant temperature.

At the step 1191, the air flow rate is read from the air flow rate sensor 15. At the next step 1192, the heating power P or its duty ratio is searched in the map (not shown) stored in the memory (not shown) in order to correspond the temperature of the air supply with predetermined constant level.

At the next step 1193, the duty ratio of the switch 56 for controlling the heating power supplied to the heater 11 is controlled. Then the routine returns to the main routine.

Therefore, the filter 2 and the heater 11 are protected on account of decreasing of the heating power supplied to the heater 11 even if the air flow rate is decreased by known or unknown causes in spite of employing the feedback control system.

Namely, in the present embodiment, the heating power supplied to the heater 11 is controlled in accordance with the air flow rate.

Consequently, after the expiration of the pre-heating period, the filter 2 is heated a correct pre-heating temperature.

Preferred Embodiment 6

Figure 18 illustrates the Preferred Embodiment 6 showing another embodiment of the pre-heating power control sub routine shown at the step 1190 in the Figure 16. In the present embodiment, the temperature of the filter is detected by the temperature sensor 6a and the heating power supplied to the heater in the pre-heating period is controlled in accordance with the temperature of the filter.

Initially, at the step 1194 after executing the step 1192, the outlet temperature of the filter 2 is read from the sensor 6a. At the next step 1195, the correction coefficient K is searched from the map stored in the memory. At the next step 1196, the heating power P is multiplied by the correction coefficient K in order to correct the heating power P .

Then the routine goes on to the step 1193. The controller with the map employed at the step 1195 decreases the heating power P relatively if the outlet temperature is high. Further, the controller increases the heating power P relatively if the outlet temperature is low. Therefore, it is prevented that the temperature of the filter 2 rises too high by pre-heating even if the filter 2 is hot before pre-heating.

Namely, because the pre-heating power is controlled in accordance with the parameter related to the air flow rate, the temperature of the filter 2 after the pre-heating is corresponded to the predetermined constant temperature.

Preferred Embodiment 7

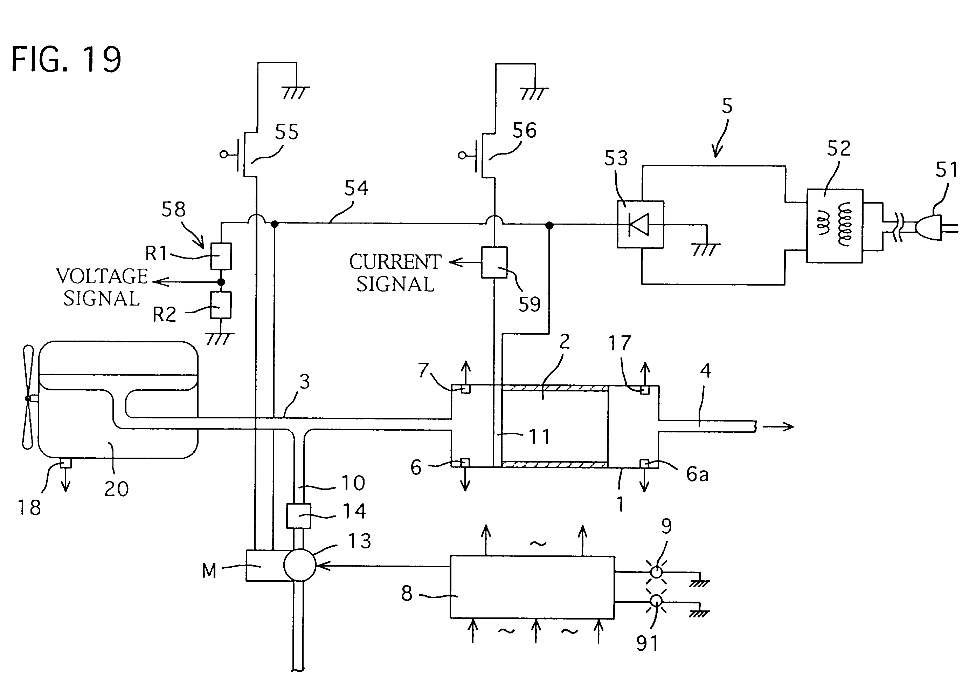

Figure 19 , 20 and 21 illustrate the Preferred Embodiment 7. Figure 19 shows the other embodiment of the apparatus shown in Figure 1. The apparatus shown in Figure 19 shows the voltage division circuit 58 and the current sensor 59 . The air flow rate sensor 15 shown in the Figure 1 is abbreviated. The voltage division circuit 58 detects a voltage applied to the heater 11 and the current sensor 59 detects a current supplied to the heater 11. The switches 55, 56 consist of low side switches.

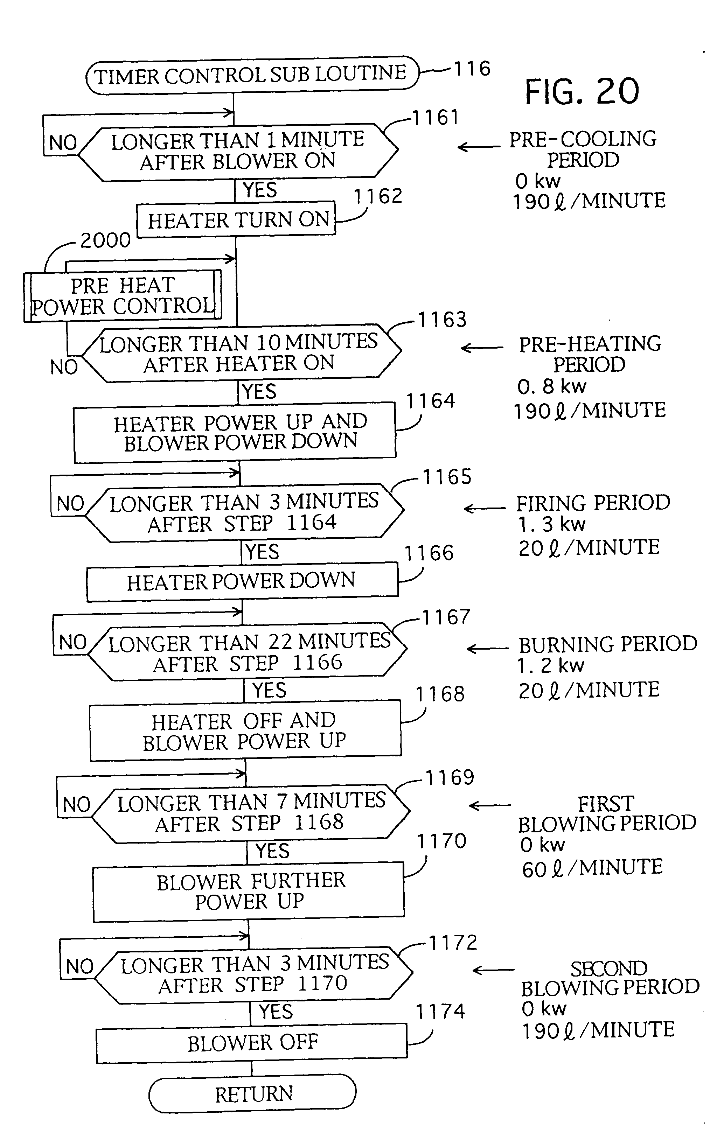

The flow chart shown in Figure 20 shows the operation of the apparatus shown in Figure 19. In the flow chart shown in Figure 20, the step 2000 is added instead of abbreviating of the step 1190 of shown in the Figure 16. The step 2000 shows the pre-heating power control sub routine.

The step 2000 is executed in the pre-heating period. Namely, in the present embodiment, the step 2000 is executed if the present time is within 10 minutes after starting of the power supply to the heater. The step 1163 judges whether or not the present time is within 10 minutes from the starting of the heating power supply. Namely, the pre-heating period has been executing within 10 minutes.

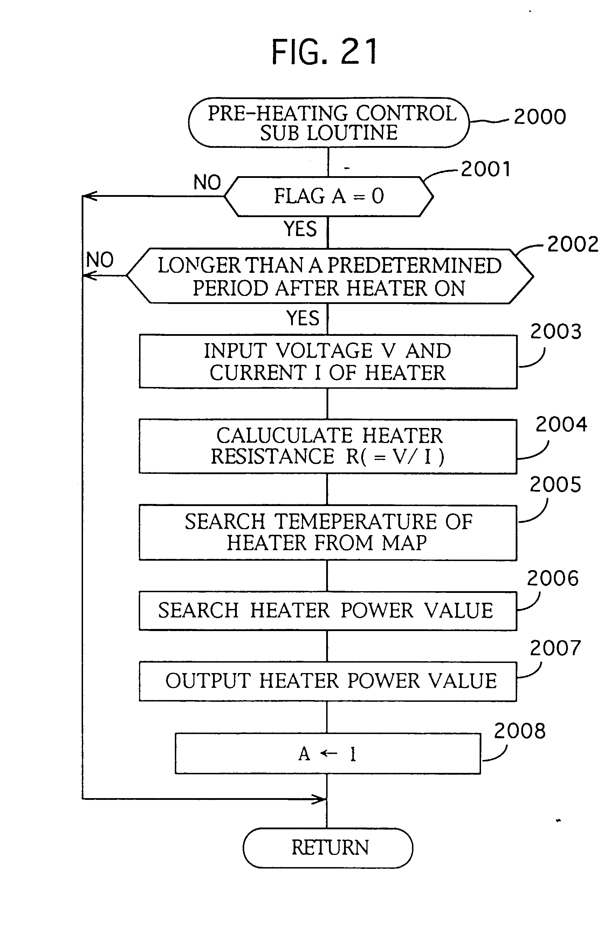

Figure 21 shows the pre-heating power control sub routine in the present embodiment.

Initially, at the step 2001, the value of the flag A is searched. The flag A is set to 0 at the time of starting the resuscitation operation. If the flag A is not 0, the routine returns to the main routine. At the next step 2002, if the flag is 0, it is judged whether the time detected from starting of the heating power supply is longer than the predetermined period (30 seconds in the present embodiment) or not. If the time is shorter than the predetermined period, the routine goes on to the main routine.

If the time is longer than the predetermined period, the applied voltage V and the supplied current I are read at the step 2003. At the next step 2004, the resistance value R of the heater 11 is calculated in accordance with the voltage V and current I. At the next step 2005, the temperature Th of the heater 11 is searched from a map stored in the memory in accordance with the calculated resistance value R.

At the next step 2006, the heater power is searched in the map in accordance with the temperature Th. The temperature Th is a parameter related to the air flow rate. If the air flow rate is greater than the constant air flow rate the temperature Th becomes lower than the constant temperature Tth.

If the air flow rate is greater than the constant air flow rate, the temperature Th becomes lower than the constant temperature Tth.

Accordingly, in the present embodiment, the heating power to the heater 11 can be controlled in accordance with the difference of the temperature $\Delta T$ between the detected temprature Th and the constant temperature Tth. Namely, if the difference of the temperature $\Delta T$ is greater than a predetermined value, the heating power can be decreased in accordance with the difference of the temperature $\Delta T$. If the difference of the temperature $\Delta T$ is smaller than the predetermined value, the heating power can be increased in accordance with the difference of the temperature.

At the next step 2007, the searched heater power is outputted. Then the routine returns to the main routine shown in Figure 20 after the flag A is set to 1 at the step 2008.

Accordingly, in the present embodiment, the heating power is controlled in accordance with the temperature difference $\Delta T$ between the detected temperature Th and the constant temperature Tth in order to keep the temperature of the supplied air to the constant value in spite of abbreviating of the air flow rate sensor 15. Furthermore, the influence of the filter temperature is reduced.

Preferred Embodiment 8

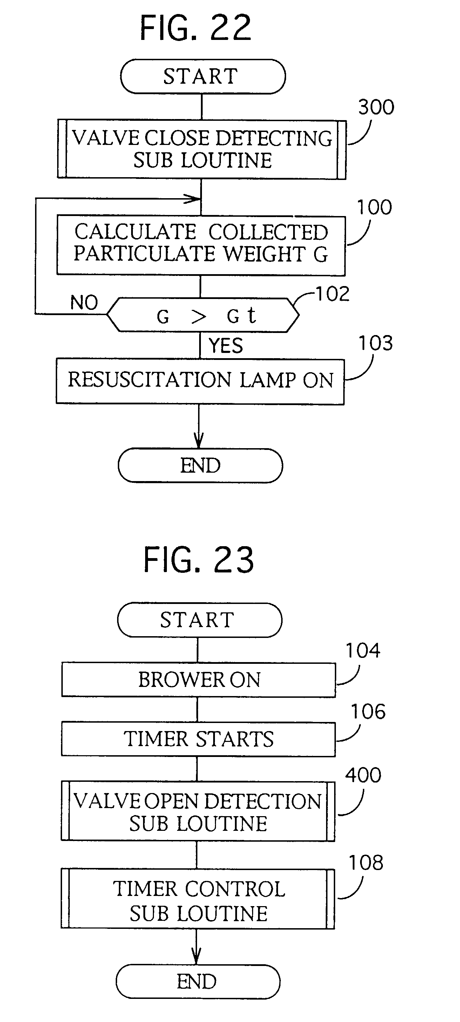

Preferred Embodiment 8 is illustrated in Figures 22 - 27. The present embodiment adds the valve check sub routine to the routine shown in the Figure 2. In Figure 22, after executing the valve close detection sub routine at the step 300, the step 100 - 103 are executed.

The step 100 in the Figure 22 is equal to the step 100 in the Figure 2. The step 102 in the Figure 22 is equal to the step 108 in the Figure 2. The step 103 in the Figure 22 is equal to the step 111 in the Figure 2.

In Figure 23, the resuscitation operation is executed. The step 104 in the Figure 23 is equal to the step 112 in the Figure 2. The step 106 in the Figure 23 is equal to the step 114 in the Figure 2. The step 108 in the Figure 23 is equal to the step 116 in the Figure 2.

The valve open detection sub routine shown at the step 400 is added between the step 106 and the step 108.

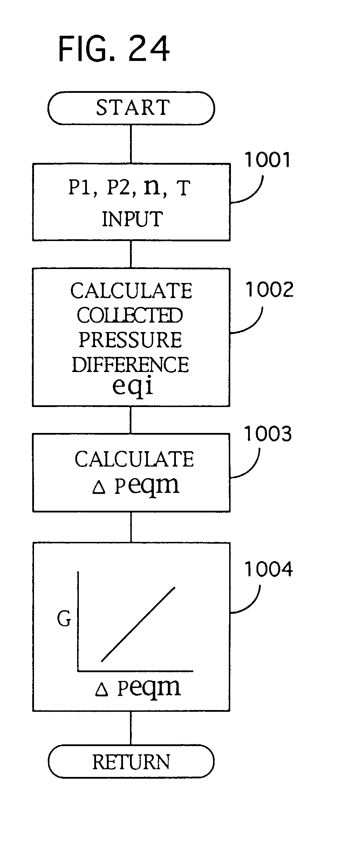

Next, the collected particulates detection sub routine shown in Figure 24 is described bellow.

Initially, at the step 1001, the exhaust pressure P1, P2, the rotation speed n, the exhaust gas temperature T detected by the sensor 7, 17, 18 and 6 are inputted.

At the next step 1002, the corrected pressure difference $\Delta$ Peqi is calculated in accordance with the following formula in order to decrease the influence of n and T against the filter pressure loss $\Delta P$ (= P1 - P2 ).

$$\Delta Peqi = \Delta P * (523 / T) * (2600 / n).$$

The exhaust temperature T is described as an absolute temperature (°K). The rotating speed n is described in revolutions per minute. Accordingly, the pressure difference $\Delta P$ is equal to the corrected pressure difference $\Delta$ Peqi at the condition that T is 523 and n is 2600. The corrected pressure difference $\Delta$Peqi is calculated every 50 m sec.

At the next step 1003, the average difference $\Delta$ Peqm being the average value of 64 data which are the corrected pressure differences $\Delta$ Peqi calculated just before. At the next step 1004, the weight of the collected particulates G is searched from the table showing the relation between the average difference $\Delta$ Peqm and the

weight G of the collected particulates. The table is stored in the memory (not shown) of the controller 8.

Therefore, the heat quantity generated by the burning particulates is controlled to a constant value in spite of the variation of the T or n.

Accordingly, the damage of the filter 2 is prevented on account of the increase of the generated heat. Further, it is prevented that the resuscitation efficiency decreases on account of the lack of the generated heat quantity.

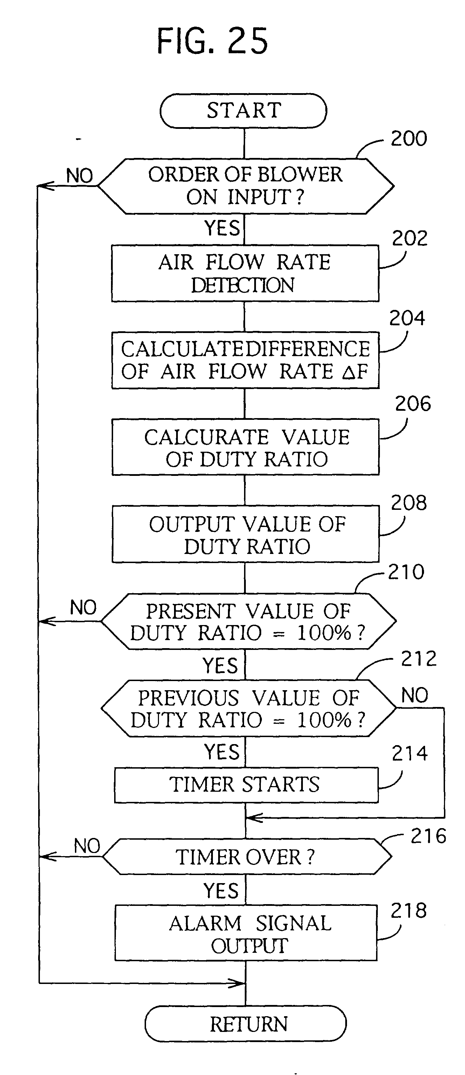

Figure 25 shows the blower control and test sub routine executed at each short interval.

At the initial step 200, it is judged whether or not the driving order of the blower is inputted. If the order is not inputted, the routine returns to the main routine at once. Else if the order is inputted, the air flow rate outputted from the sensor is read at the step 202.

At the next step 204, a difference $\Delta F$ between the detected air flow rate and the predetermined air flow rate is calculated. At the next step 206, the duty ratio of the power which corresponds to the $\Delta F$ is calculated.

At the next step 208, the calculated duty ratio of the power is outputted to the power switching controller which controls the duty ratio of power supplied to the motor M for driving the blower 13. The power switching controller (not shown) which is a part of the controller 8 has a gate controller and a MOS power trangister circuit.

The gate controller holds the inputted duty ratio of the power and outputs 3 phase pulse signals having the above duty ratio. The MOS power trangister is switched by the 3 phase pulse signals. Because these gate controller and MOS power trangister circuit is well known, the detail description of them is abbreviated.

Therefore, the blower 13 is controlled by means of the feedback control method and the difference $\Delta F$ is 0.

At the next step 210, it is judged whether the new duty ratio of the power calculated at the step 206 in the present routine is 100% or not. If the new duty ratio is 100%, the routine goes to the step 212. If the new duty ratio is not 100%, the routine returns to the main routine.

At the step 212, it is judged whether the previous duty ratio of the power calculated at the step 206 in the previous routine is 100% or not, by reading out of the memory which memories the previous duty ratio.

If the previous duty ratio is not 100%, the routine goes to the step 216. If the new duty ratio is 100%, the routine goes to the step 216 after starting of a timer at the step 214.

At the step 216, it is judged whether a time counted by the timer reaches a predetermined time (3 seconds in the present embodiment) or not. If the time of the timer does not reach the predetermined time, the routine goes to the main routine. If the time of the timer reaches the predetermined time, the routine goes to the step 218. At the step 218, the alarm lamp 9 is turned on for indication of trouble with the blower 13 , the timer is turned off and the the power supplied to the heater 11 is stopped. Then the routine is over.

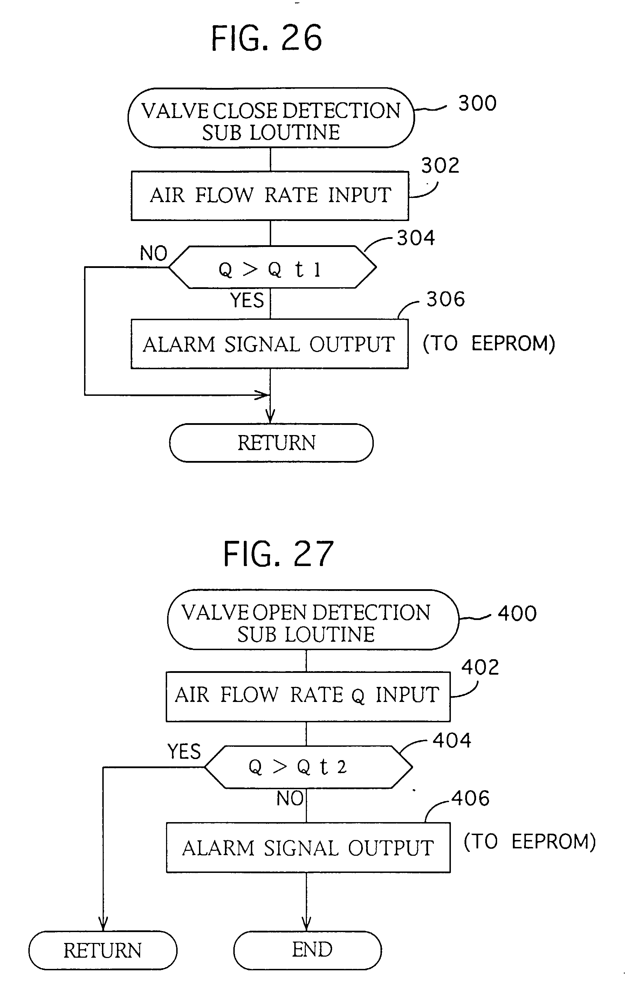

Figure 26 shows the above mentioned valve close detection sub routine 300.

Initially, at the step 302, the air flow rate Q which is outputted from the air flow rate detection sensor 19 is inputted in the condition that the valve 14 is closed and the blower 13 the engine is driven.

At the next step 304, it is judged whether the air flow rate Q is larger than the predetermined air flow rate Qt1 or not.

If the air flow rate Q is not larger than Qt1, the routine returns to the main routine because the valve 14 has been closed.

If the air flow rate Q is larger than the predetermined volume Qt1, a valve-opening signal which indicates the opening of the valve 14 is memorized to the non volatile memory (EEPROM).

The non volatile memory outputs the alarm signal for turning the alarm lamp 9 on when the valve-opening signal is inputted.

Therefore, the alarm lamp 9 is turned on and the routine returns to the main routine.

Figure 27 shows the valve open detection sub routine 400.

Initially, at the step 402, the air flow rate Q which is outputted from the air flow rate detection sensor 19 is inputted at a condition that the valve 14 is opened and the blower 13 is driven.

At the next step 404, it is judged whether the air flow rate Q is larger than the predetermined air flow rate Qt2 or not.

If the air flow rate Q is larger than the predetermined volume Qt2, the routine returns to the main routine because the valve 14 opens.

If the air flow rate Q is not larger than the predetermined volume Qt2, a valve-closing signal which indicates the closing of the valve 14 is memorized to the non volatile memory (EEPROM).

The non volatile memory outputs an alarm signal for turning the alarm lamp 9 on when the valve-closing signal is inputted.

Therefore, the alarm lamp 9 is turned on and the routine ends. As described above, in the present embodiment, the air flow rate can be controlled exactly be means of the feedback control method. Therefore, in resuscitation of the filter, the temperature of the filter does not become too high or too low. If the temperature of the filter becomes too high, the crack or melt of the filter often occurs.

If the temperature of the filter becomes too low, the resuscitation efficiency decreases.

Namely, we found that the most important parameter determining the temperature of the filter is the air flow rate in the burning period. Consequently, variation of the temperature of the filter is mainly caused by the variation of the air flow rate.

Further, in the present embodiment, the trouble of the valve 14 can be detected by using the sensor 19 which is employed for controlling the air flow rate.

Namely, if the air flow rate is lower than the predetermined value, the resuscitation operation may be inhibited as the valve can not be opened. If the air flow rate is greater than the predetermined value while the engine is driven, it is judged that the valve 16 can not be closed.

Further the trouble that the valve 14 can not been closed is detected by detecting the air flow rate in the condition that the valve close signal is outputted and the blower 13 is driven.

In the present invention, the over-heating of the heater 11 and the blower 13 is prevented even if the valve 14 does not open. Also, an accumulation of the particulates in the blower 13 is prevented even if the valve 14 does not closed.

Preferred Embodiment 9

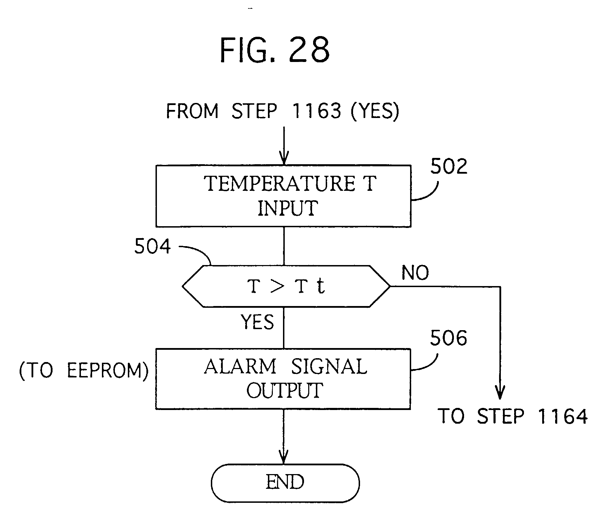

Preferred Embodiment 9 is illustrated in Figures 28. The present embodiment detects a trouble with the valve 14 by the temperature detected by the temperature sensor 6 in the pre-heating period.

Initially, the pre-heating is executed at the step 1163. At the next step 502, the temperature T is detected by the temperature sensor 6. If the valve 14 is closed, the temperature rises extremely high. At the step 504, it is judged whether the detected temperature T is higher than the predetermined temperature Tt or not.

If T is not higher than Tt, the routine returns to the main routine (at the step 1164) as the valve has been opened. On the other hand, If T is higher than Tt, the valve-closing signal is memorized in the non volatile memory (EEPROM) as the valve is not opened. The non volatile memory outputs an alarm signal for turning the alarm lamp 9 on at the step 506. Then, after the alarm lamp 9 is turned on, the routine ends.

Preferred Embodiment 10

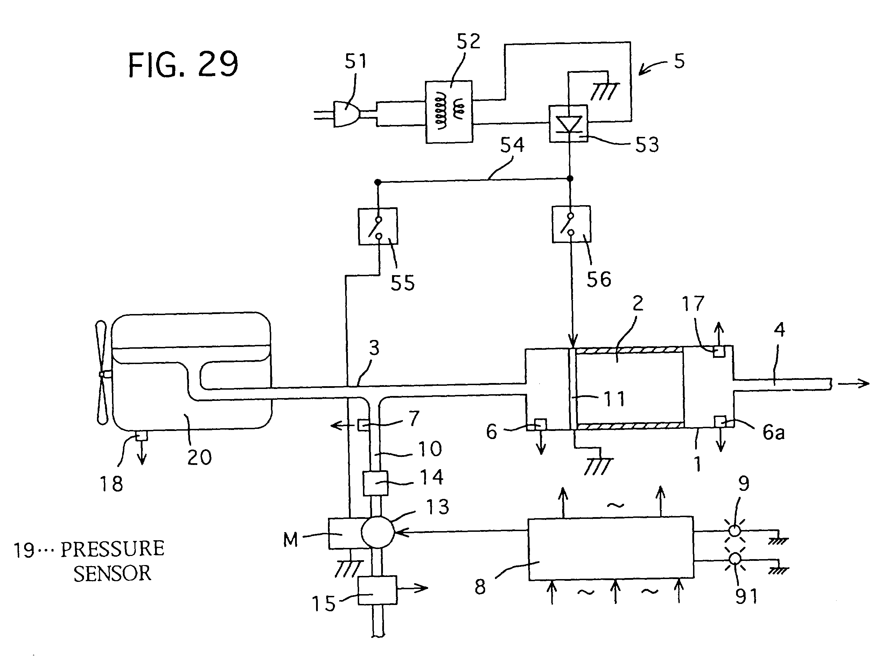

Preferred Embodiment 10 is illustrated in Figures 29. In the present embodiment, the upper stream side pressure sensor 7 is disposed in a portion of the blowing tube 10, which is positioned at the down stream side of the valve 14.

The pressure sensor 7 may be disposed in a tube diverging from the blowing tube 10.

Therefore, the particulates attached to the pressure sensor 7 are removed by the supplied fresh air.

Accordingly, the pressure sensor 7 is always kept clean. Further, because the valve 14 is closed while the engine 20 is driven, the particulates attached to the pressure sensor 7 are decreased. Accordingly, the trouble of the pressure sensor 7 is decreased.

Also, the temperature sensor 6 for detecting the temperature of the exhausted gas may be disposed in the blowing tube 10.

Preferred Embodiment 11

Preferred Embodiment 11 is illustrated in Figures 19. The present embodiment is related to a power supply system for the resuscitation operation.

After the plug 51 is connected to a commercial power er source line (AC 200 V), the drop transformer 52 drops the voltage and the rectifier 53 rectifies the voltage and outputs a direct voltage 24 V to the high level power line 54. However. the battery of a car (not shown) supplies the power to the controller 8.

In the present invention, the blower motor M and the heater 11 are supplied the power via the switches 55 and 56 from the high level power line 54.

The switches 55 and 56 are switched by the duty ratio signal. The voltage divider 58 which consists of the resistors R1 and R2 connected in series is connected between the high level power line 54 and the earth line.

The divided voltage outputted from the voltage divider 58 is inputted to the controller 8 as the signal of the applied voltage and is converted to the digital signal by an A/D converter (not shown). Further, the current sensor 59 is disposed in the power supply line which connects the heater 11 and the switch 56.

The current sensor 59 detects the current supplied to the heater 11.

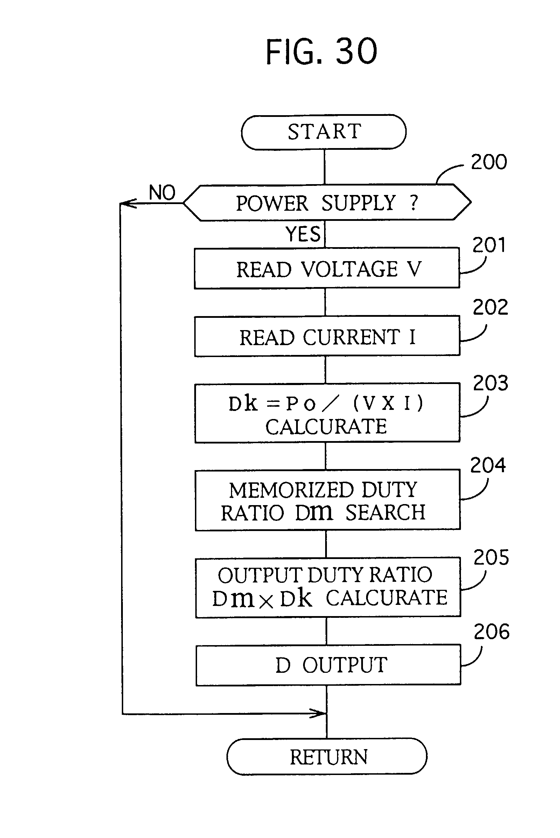

Figure 30 shows the duty ratio control sub routine which is executed at predetermined intervals (for example 500 m seconds).

Initially, at the step 200, it is judged whether the power is supplied to the heater 11 or not. If the power is not supplied, the the routine operation returns to the main routine. If the power is supplied to the heater 11, the voltage V applied to the high level power line 54 is detected by the voltage divider 58 at the step 201. Further, the current supplied to the heater 11 is detected by the current sensor 59 at the step 202. At the next step 203, the duty ratio corrective coefficient Dk which is the coefficient for correcting the duty ratio is calculated in accordance with the next formula.

$$Dk = Po/(V \times I)$$

Po is the standard power value which must be supplied at the condition that the duty ratio is 100%. The value of "(V x I)" indicates an actual heating power value.

At the next step 204, the present duty ratio Dm which is stored in the memory is searched. At the next step 205, the output duty ratio D = Dm x Dk is calculated.

Then, at the step 206, the calculated output duty ratio D is outputted and the switch 56 is switched by the constant frequency carrier signal having the output duty ratio D.

Therefore, the variation of the heat quantity that the heater 11 generates is prevented in spite of a variation of the voltage applied to the heater 11 and a variation of the resistance of the heater 11.

Consequently, the highest temperature of the filter becomes constant in spite of above mentioned causes.

Namely, in the present embodiment, the voltage and the current applied and supplied to the heater 11 are detected.

Further, the duty ratio is controlled in accordance with a corrective ratio between the actual heating power P (= V x I) and a necessary heating power.

Furthermore, the duty ratio: of the switch for controlling the heating power is controlled in accordance with the corrective ratio to correspond the actual heating power with the necessary heating power.

Therefore, the variation of the heating power is prevented in spite of the variation of the resistance of the heater and the variation of the voltage applied to the heater 11.

Preferred Embodiment 12

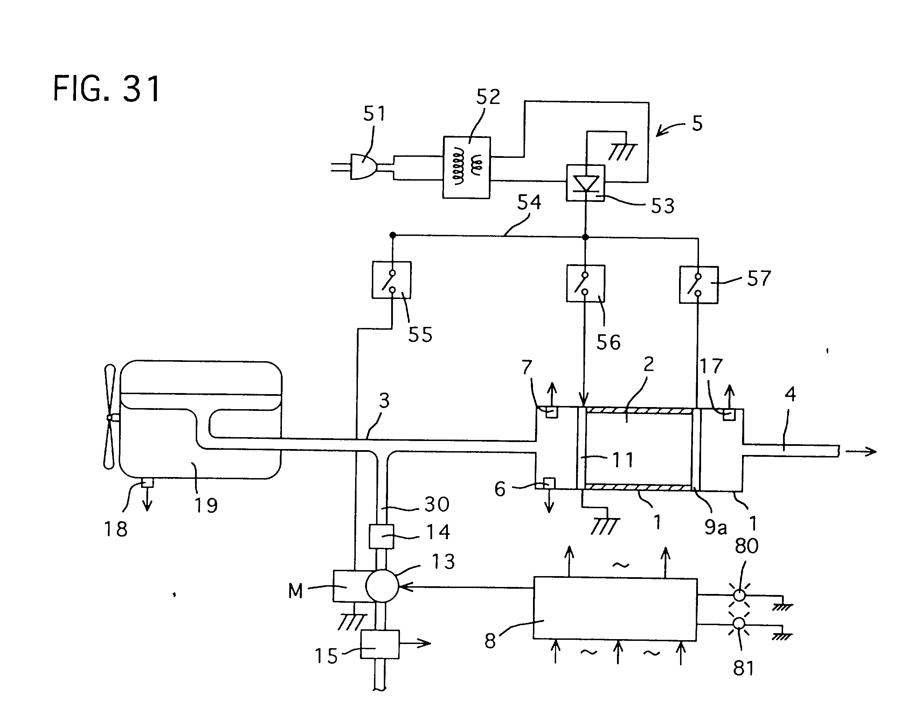

Preferred Embodiment 12 is illustrated in Figures 31 - 33. The Figure 31 shows a catalyst heater 9a disposed near the down stream side end surface of the filter 2.

The catalyst heater 9a consists of the holder 91 and the electric heating line 92. The holder 91 consists of a ceramic honeycomb body having catalyst particles. The electric heating line 92 is made of kanthal.

In the present embodiment, the heater 11 for the firing has fundamentally the same structure and material as the catalyst heater 9a, but does not have the catalyst particles.

The heater 11 is disposed near the upper stream side end surface of the filter 2.

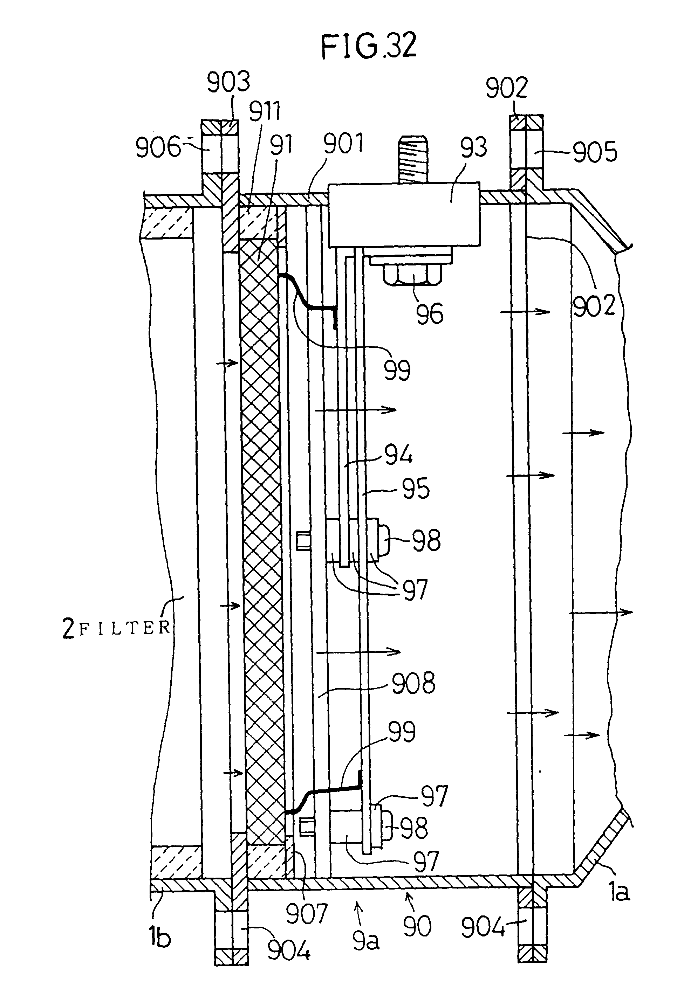

The structure of the catalyst heater 9a is described as referred to Figure 32 - 34.

The catalyst heater 9a has the case 90. The case 90 is disposed between the funnel shape tube 1a and the cylindrical portion 1b. The tube 1a is connected to the tail pipe 4 which consists of the down stream portion of the exhaust tube.

The cylindrical portion 1b accommodates the filter 2. The filter accommodating case 1 consists of the case 90, the funnel shape tube 1a and the cylindrical portion 1b.

The case 90 accommodates the honeycomb shape holder 91 holding the electric heating line 92. Accordingly. the case 90, the holder 91 and the electric heating line 92 are the main members of the catalyst heater 9a.

The case 90 consists of the cylinder 901 and the ring plates 902, 903. The cylinder 901 is made of stainless steel.

The ring plates 902, 903 are fixed to the both ends of the cylinder 901 by welding. The outer peripheral portion of the ring plates 902 and 903 have the through holes 904.

The through holes 904, the through holes 905 of the tube 1a and the through holes 906 of the cylinder portion 1b are fixed by bolts (not shown).

The holder 91 consists of the honeycomb structure made of the same material and same production process with the filter 2. However, the holder 91 has the catalyst particles.

The holder 91 has a number of cells (through holes) 912. The holder 91 is accommodated in the down stream side portion of the cylinder 901. The mat 911 made of expandable ceramic material is disposed between an outer peripheral surface of the holder 91 and an inner peripheral surface of the cylinder 901.

The down stream side end surfaces of the mat 911 and the outer peripheral portion of the holder 91 are attached to the ring plate 903. The ring plate 907 is fixed in the cylinder 901. The mat 911 and the holder 91 are disposed between the ring plates 907 and 903.

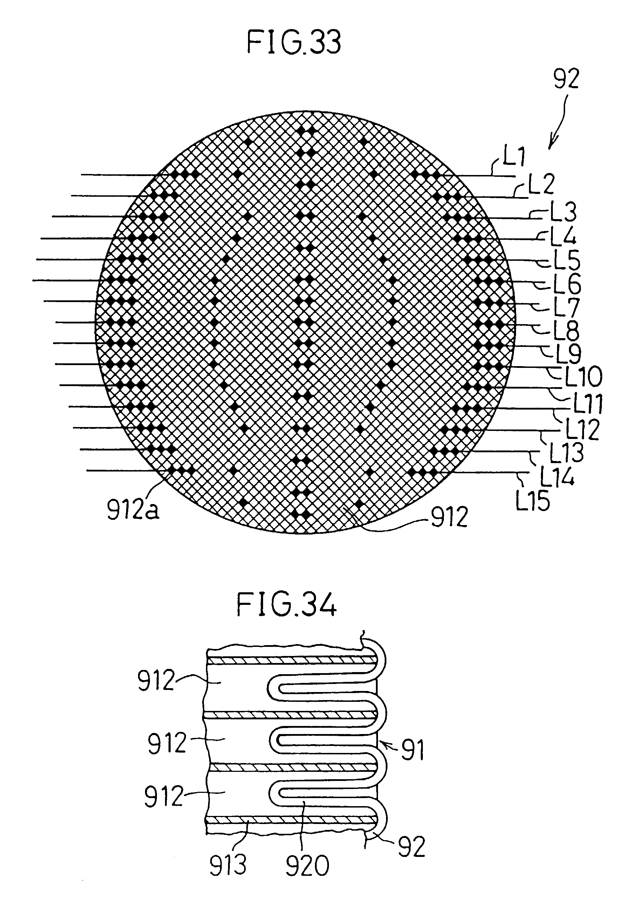

Figure 34 shows the electric heating line 92.

The electric heating line 92 which is made of the bare kankhal line, has a number of bending portions 920. Each bending portion 920 has the character U shape and is inserted into each cell 91 from the down stream side end surface of the holder 91.

Figure 33 shows the down stream side end surface of the holder 91.

The heating lines L1 - L15 are disposed in a horizontal direction of Figure 33 along the upper side end surface of the holder 91. Each heating line L1 - L15 has the bending portion 920 accommodated in each of cells 912.

The electric heating line 92 consists of these heating lines L1 - L15 connected each other in series (or in parallel).

Further, cells 912a shown as black points in Figure 33, which are cells accommodating the bending portion 920, are filled up by ceramic filling material (name of the product is SUMICERAM which is produced by SUMITOMO THREE M company CO,LTD.). The ceramic filing material hardened fixes the electric heating line 92.

Furthermore, the holding plate 908 is disposed in the radial direction at the down stream side of the ring plate 907. The both ends of the holding plate 908 are fixed to the inner peripheral surface of the cylinder 901. Further, the insulator 93 is fixed at the cylinder 901. The insulator 93 is screwed by two bolts 96 combinning terminals. The bolts 96 fixes individually one ends of the terminal bars 94, 95. The other ends of the terminal bar 94, 95 are fixed to the holding plate 908.

97 is an insulator tube and 98 is a screw for fixing the terminal bars 94, 95. Further, the power supply lines 99 individually connect the terminal bars 94, 95 to both ends of the electric-heating line 92.

The holder 91 made of porous cordierite material has the catalyst particles. In the present embodiment, platinum (pt) particles are employed as the catalyst particles. There are 2 g of the platinum particles per liter of the holder 91. The platinum particles are fixed to the porous wall 913 of the holder 91.

In order to increase a surface area, the catalyst powder is fixed after coating $\gamma$- alumina on the surface of the holder 91.

As following, the process fixing catalyst to the holder 91 is described.

Initially, the holder 91 (made by NGK CO,LTD.) made of porous cordierite is sunk in slurry. The slurry consists of γ- alumina powder (JAC 400, made by CATALER INDUSTRY CO., LTD.), alumina sol (made by NISSAN CHEMICAL CO., LTD.) and aluminum nitrate aqueous solution and has the viscosity of 100 - 400 PSI.

The formed holder is dried at 120°C and had been burned at 650°C.

Then, by absorbing platinum anmonium complex, the holder 91 has 2g of platinum per liter.

Next, the holder 91 is heated for 1 hours at 500°C in the electric furnace after the holder 91 had been dried for 2 hours at 120°C.

The resuscitation operation of the filter is described as bellows.

The resuscitation operation is fundamentally the same as the resuscitation operation of the preferred embodiment 1 except for the timer control sub routine.

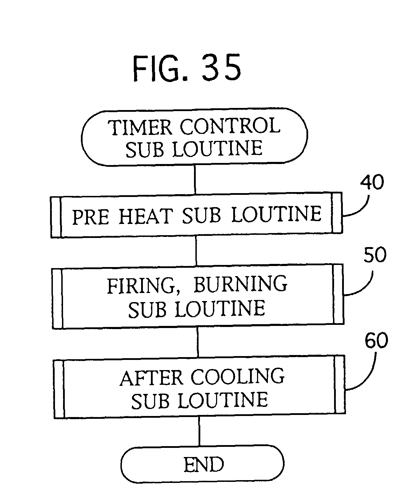

The timer control sub routine of the present embodiment shown in Figure 35 consists of the pre-heating sub routine 40, the firing and burning sub routine 50 and the after-cooling sub routine 60.

The pre-heating sub routine 40 rises of the temperature of the filter 2 by driving the heater and the blower. The firing and burning sub routine executes the burning of the particulates. The after-cooling sub routine executes the cooling of the filter.

In the present embodiment, the period for the pre-heating sub routine 40 is 10 minutes. In the pre-heating sub routine 40, the power of 0.9 kW is supplied to the firing heater 11 and the power of 0.9 kW is also supplied to the catalyst heater 9a. Further, the air flow rate of 200 liters per minute is supplied.

In the present embodiment, the period for the firing and burning sub routine 50 is 40 minutes. In the firing and burning sub routine 50, the power of 2 kW is supplied to the firing heater 11 and the power of 0.3 kW is supplied to the catalyst heater 9a. Further, the air flow rate of 20 liters per minute is supplied.

In the present embodiment, the period for the after-cooling sub routine 60 is 10 minutes. In the after-cooling sub routine 60, the power supplied to the heater 9 is cut off and the power of 0.3 kW is supplied to the catalyst heater 9a. Further, the air flow rate of 200 liters per minute is supplied.

In the period of the pre-heating sub routine, S.O.F including in the particulates is vaporized and becomes the resuscitation smoke after the temperature of the filter 2 has risen above 200°C. However, the catalyst heater 9a has been heated to about 500°C.

Therefore, the resuscitation smoke is resolved by the catalyst particles. In the periods of the firing and burning sub routine and after-cooling period, the catalyst heater 9a also resolves the resuscitation smoke.

Preferred Embodiment 13

The catalyst heater 9a can resolve exhaust fumes and blue-white smoke which are generated when a diesel engine is started cold.

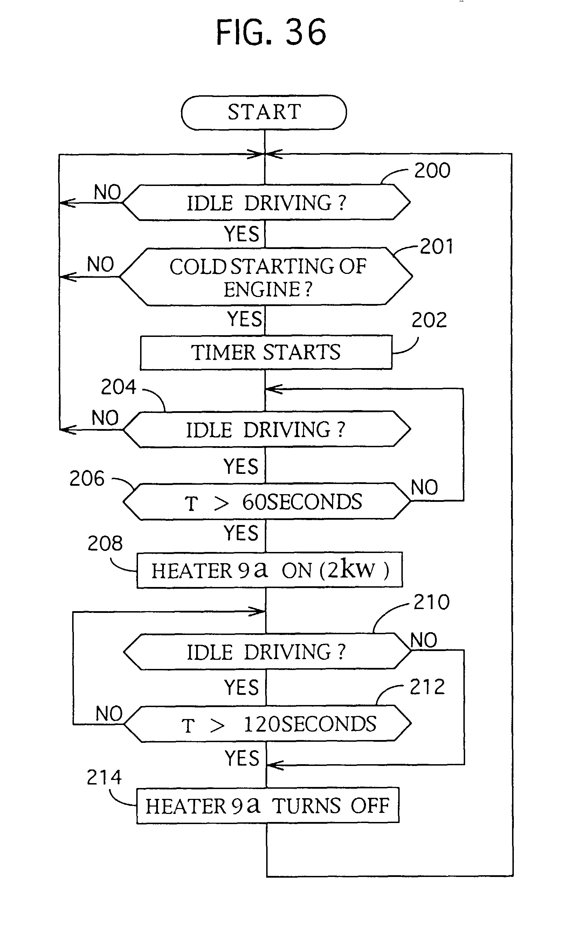

The flow chart illustrated in Figure 36 shows the resolving operation of the exhaust fumes and the blue-white smoke.

The diesel engine employed in the present embodiment has a heater for heating supplied air in an intake manifold and a glow plug in a burning chamber similar to an ordinary diesel engine for a car.

The heater in the manifold for supplying air to the diesel engine is called a diesel engine heater. The power is supplied to the diesel engine heater for about 1 minute from starting the engine in order to heat the supplied air. Also, the power is supplied to the glow plug for about 1 minute from starting of engine in order to help combustion operation of the diesel engine.

In the present embodiment, the power supplied to the catalyst heater 9a is cut off or decreased for a predetermined period (for example about 1 minutes) from the starting the cold diesel engine in which cooling water has a temperature less than 0°C.

In the flow chart shown in Figure 36, initially, the routine is started by a signal of starting the diesel engine.

At the step 200, the engine rotating speed Ne is inputted and it is judged whether rotating speed of the diesel engine is in the idle rotation speed range or not. If the engine rotation speed Ne is higher than the idle rotation speed range, the temperature of the exhaust gas is hot.

Accordingly, it is determined that the resolving operation of the blue-white smoke and the exhaust fumes are not significant.

If the rotating speed of the diesel engine is in the idle rotation speed range, the routine goes on to the step 201 . At the step 201, the temperature of the cooling water in the diesel engine is inputted from a cooling water temperature sensor (not shown) and it is judged whether the temperature of the cooling water is less than 40°C or not.

If the temperature of the -cooling water is not less than 40°C, the routine returns to the step 200. If the temperature of the cooling water is less than 40°C, the timer is started at the step 202 as the diesel engine is cold.

At the next step 204, it is also judged whether the engine rotation speed is in the idle rotation speed range or not. If the rotation speed is not in the idle rotation speed range, the routine returns to the step 200.

If the rotation speed is in the idle rotation speed range, it is judged whether the counted time of the timer reaches 60 seconds or not, at the step 206.

If the counted time T of the timer has not reached 60 seconds, the routine returns to the step 204. If the counted time T of the timer has reached 60 seconds or more at the step 208, the power of 2kW is supplied to the catalyst heater 9a because a power supply to the diesel engine heater and the glow plug has quitted.

Therefore, the rapidly heated catalyst particles resolves the blue-white smoke and the exhaust fumes including the exhaust gas. Further, the catalyst particles resolves the HC, CO and Formaldehyde included in the exhaust gas.

At the next step 210, it is judged again whether the rotating speed of the engine is in the idle rotation speed range or not. If the rotating speed is not in the idle rotation speed range, the routine go on to the step 214.

If the rotating speed is in the idle rotation speed range, it is judged at the step 212 whether or not the timer started at the step 202 exceeds 120 seconds. If the time T counted by the timer is not longer than 120 seconds, the routine returns to the step 210.

If the time T counted by the timer is longer than 120 seconds, the routine goes on to the step 214. At the step 214, the power supplied to the catalyst heater 9a is cut off and the routine returns to the step 200.

Namely, in the present embodiment, the power supplied to the catalyst heater 9a for reducing the blue-white smoke and the exhaust fumes is delayed for 1 minutes from the starting of the engine. Accordingly, the synchronous supplying of the power to the grow plug and the catalyst heater 9a can be prevented.

Further, the heat stress of the filter 2 is decreased.

As described above, the catalyst heater 9a of the present embodiment resolves all of the blue-white smoke and the exhaust fumes generated at the cold starting of the diesel engine and the resuscitation smoke generated at the resuscitation operation.

Further, the catalyst heater of the present embodiment decreases the remaining particulates in the down stream portion of the filter 2 by heating the down stream portion.

Furthermore, the catalyst heater 9a has the bare electric heating line 92 having a number of bending portions which have character U shape and are inserted into the cells of the holder.

Therefore, it is possible to supply the power to the catalyst heater without the increase of hydrodynamical resistance.

Preferred Embodiment 14

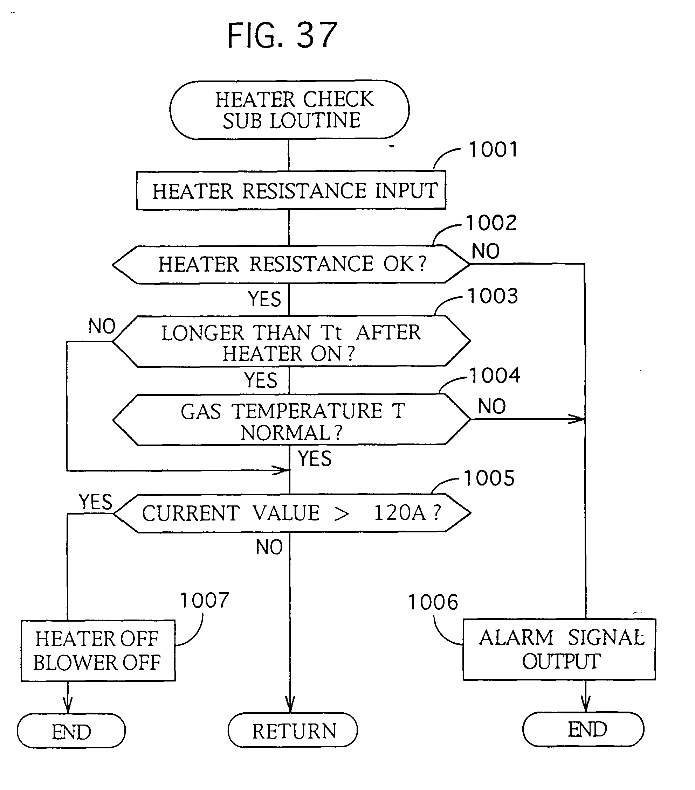

Figure 37 illustrates the flow chart showing the heater check sub routine of the preferred embodiment 14. The present sub routine is executed before the execution of the step 1161 shown in Figure 20, namely just after starting of the timer control sub routine.

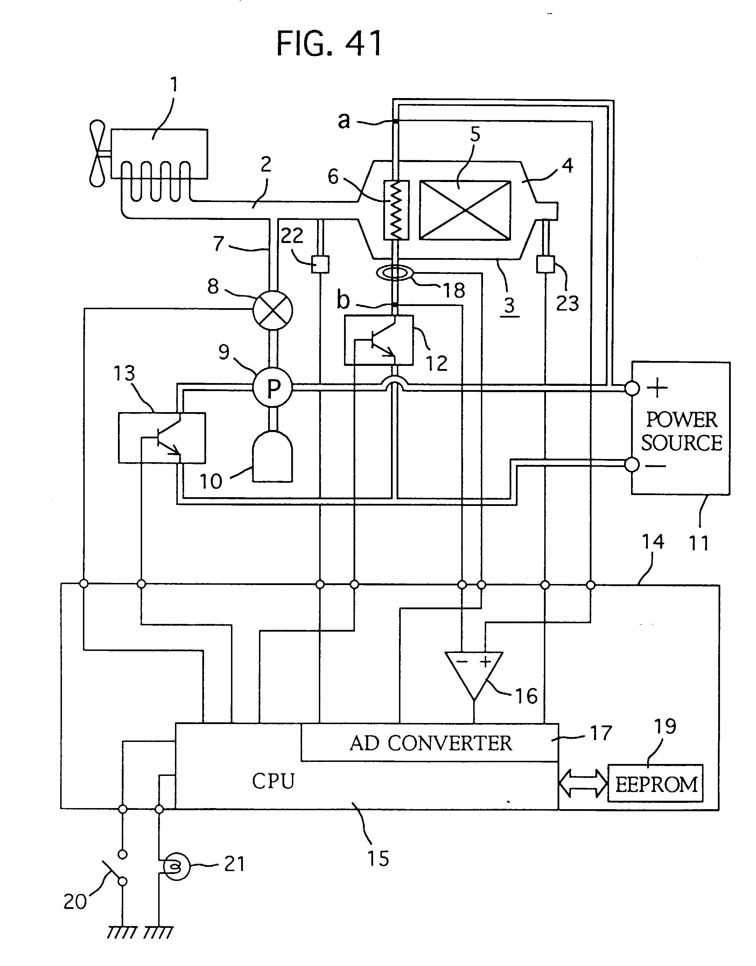

Initially, as shown in Figure 41 the signal which is proportional to a voltage drop of the resistance of the heater having a low resistance value is inputted by the differential amplifier 16 at the step 1001. At the next step 1002, it is judged whether the voltage drop signal being proportional to the resistance value of the heater 11 is in the predetermined allowable range or not.

The predetermined allowable range has been memorized into the memory previously and is the range of resistance which is equal to 90 - 110% of an initial resistance value of the heater 11 in the present embodiment. If the voltage drop is not in the allowable range, it is judged that the heater 11 is abnormal.

Accordingly, the routine ends after the alarm lamp 9 is turned on at the step 1006. If the voltage drop is in the allowable range, the routine goes on to the step 1003.

A predetermined constant value of a direct voltage is applied to the heater 11 in the pre-heating period operated just after the timer control sub routine.

At the step 1003, it is judged whether a predetermined constant time Tt (for example 8 minutes) since starting the power supply to the heater 11 has passed or not. If the time has not passed, the routine goes on to the step 1005. If the time has passed, at the next step 1004, it is judged whether the temperature of the supplied air, which is detected in the pre-heating period by the temperature sensor 6, is in the range of 220 - 280°C or not.

If the temperature is not in the range, it is judged that the heater 11 is abnormal. Accordingly, the alarm lamp 9 is turned on at the step 1006 and the routine ends. If the temperature is in the range, at the next step 1005, it is judged whether the signal which means the voltage drop is larger than a previously memorized constant value of the voltage drop or not.

In the present embodiment, the constant value of the voltage drop is equal to the value of "(120 A) x (initial resistance value of the heater 11)", in the present embodiment.

If the signal is larger, it is judged that the supplied current is not less than 120 A. Accordingly, the power supply to the heater 11 and the blower 13 (for example shown in Figure 1) are cut off and the alarm lamp 9 turns on at the step 1007. Then, the routine ends.

If the current is less than 120 A at the step 1005, it is judged that the heating quantity generated by the heater 11 is in a predetermined normal range.

Accordingly, the routine returns to the main routine for executing the timer control sub routine.

In the above described present embodiment, the errors of the heater 11 , for example a short circuit error, a variation of the resistance and cut-off of the line, are detected in accordance with the resistance of the heater 11 and the temperature from the temperature sensor 6 placed near the heater 11.

Consequently, it is possible to monitor the heater 11 and protect the filter without an additional sensor.

Namely, by monitoring of the resistance value of the heater 11, it is possible to detect a trouble of the heater 11 while the power is supplied to the heater 11.

Preferred Embodiment 15

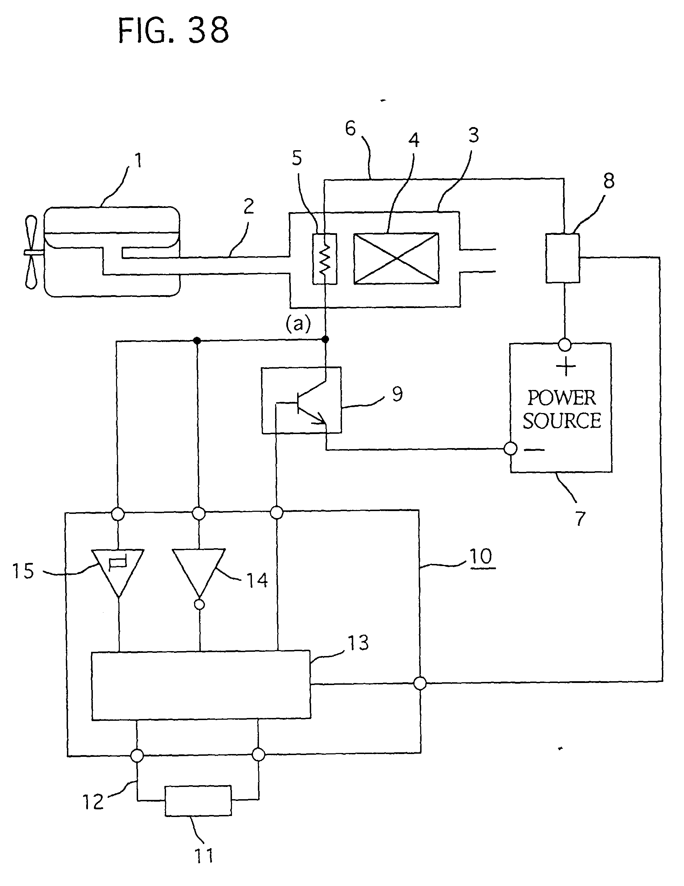

Figure 38 -40 illustrate the preferred embodiment 15.

Figure 38 illustrates a block diagram shown the exhaust apparatus of the present embodiment.

An exhaust tube 2 of a diesel engine 1 includes an exhaust gas purifier portion 3. In the exhaust gas purifier portion 3, a filter 4 and the electric heater 5 are disposed. The filter 4 is made of porous ceramic material. The heater 5 is connected to the battery 7 of a car via a power control circuit 6.

The power control circuit 6 has a circuit break switch 8 and a switching trangister 9. The base electrode of the switching trangister 9 is connected to the electronic control unit (called ECU simply) 10. Further, an alarm lamp circuit 12 is connected to the ECU 10.

ECU 10 consists of a CPU 13, a NOT circuit 114, a Schmitt circuit 15 and other circuits elements including ROM, RAM and a wave generator (not shown). The NOT circuit 14 and the schmitt circuit 15 are connected to the CPU 13. CPU 13 deals with inputted signals in accordance with a predetermined program and outputs control signals for controlling a duty ratio of the switching trangister 9 and a alarm signal for turning on the alarm lamp circuit 12.

A connecting point (a) of the power control circuit 6, which connects the heaters to the switching trangister 9, is connected to a input terminal of the Schmitt circuit 15. An output terminal of the Schmitt circuit 15 is connected to the CPU 13.

The operation of the exhaust gas purifier in the present embodiment is mentioned as follows.

The CPU 13 controls the duty ratio of the switching trangister 9. Therefore, the power supplied to the heater 5 is controlled.

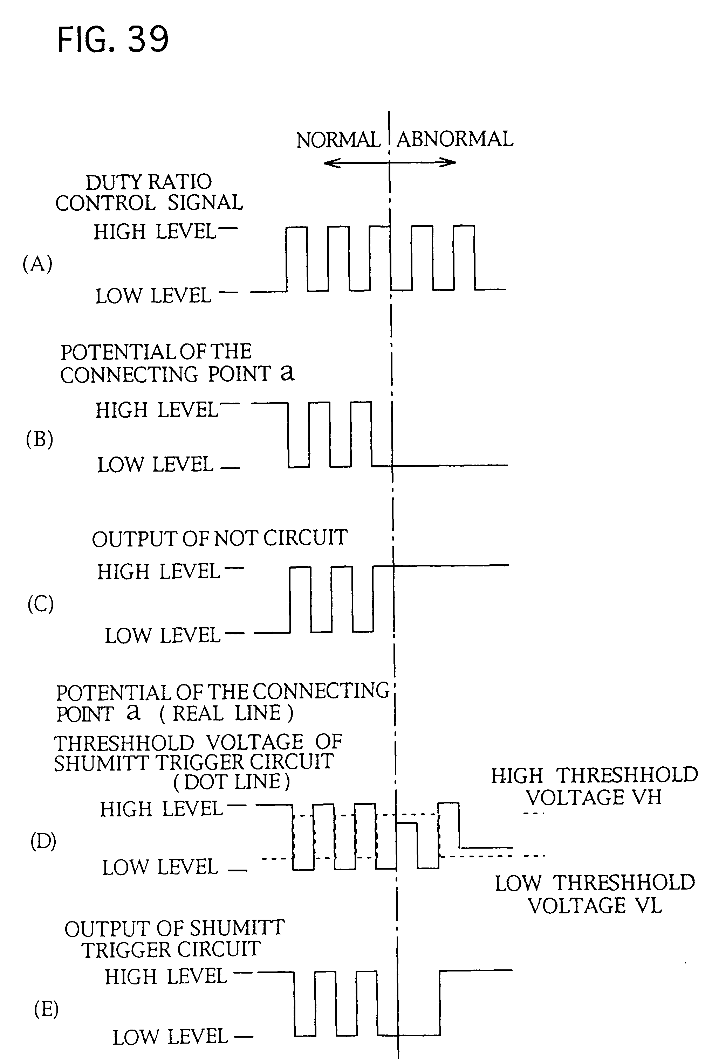

As showing in a timing chart (A), (B), (C) illustrated in Figure 39, if a high duty ratio control signal is outputted from the CPU 13 in order to turn on the switching trangister 9, the power control circuit 6 is turn on and the power is supplied to the heater 5.

At that time, a potential at the connecting point (a) of the power control circuit 6 becomes a low level. If the duty ratio control signal is a low level state, the switching trangister 9 and the heater 5 are cut off and a potential of the connecting point (a) becomes high level.

The potential of the connecting point (a) is inputted to the CPU 13 after the potential is inverted by the NOT circuit 14. Accordingly, the duty ratio control signal outputted from the CPU 13 and the potential signal inputted to the CPU 13 are synchronized in the transient period in which the level of the signals changes from high to low or from low to high.

Further, both of the signals have the same level in the stable period.

If the switching trangister 9 short-circuits, the potential of the connecting point (a) is low level as shown in Figure 39 (B), even if the duty ratio control signal is low. Accordingly, the potential signal outputted from the NOT circuit 14 to the CPU 13 becomes high.

Consequently, by comparing the duty ratio control signal outputted from the CPU 13 with the potential signal inputted to the CPU 13 from the NOT circuit 14, it is possible to test the exhaust gas purifier.

Namely, if both of the two signals have same level, the purifier operates in normal conditions. However, if the both of the two signals have a different level, it is judged that the purifier operates in abnormal conditions.

Next, a motion of the Schmitt circuit 15 is described as follows. A threshold voltage of the Schmitt circuit 15 becomes the high threshold voltage value VH at the moment when the potential of the connecting point (a) becomes lower than the low threshold voltage value VL. Similarly, the threshold voltage of the Schmitt circuit 15 becomes the low threshold voltage value VL at the moment when the potential of the connecting point (a) becomes higher than the high threshold voltage value VH as shown in the timing charts (D) and (E) in Figure 39.

When the exhaust gas purifier is operated normally, the potential of the connecting point (a) is higher than the high threshold voltage value VH of the Schmitt circuit 15 in the period supplying power to the heater 5. Similarly, the potential of the connecting point (a) is lower than the low threshold voltage value VL of the schmitt circuit 15 in the period cutting off the power supply to the heater 5.

Therefore, the variation of the level of the signal inputted from the Schmitt circuit 15 to the CPU 13 becomes the same as the variation of the level of the potential signal at the connecting point (a) and becomes opposite to the level of the duty ratio control signal outputted from CPU 13.

However, if the heater 5 or the switching trangister 9 is abnormal, the potential of the connecting point (a) can not cross over the threshold voltage value VI or VH of the schmitt circuit 15. For example, if the switching trangister 9 is not cut off and has some resistance value at the timing when the duty ratio control signal varies from high level to low level, the potential of the connecting point (a) varies from a low level level to a high level.

However, an absolute potential value of the connecting point (a) becomes lower in comparison with the normal condition and can not cross over the high threshold voltage VH of the Schmitt circuit 15, in some case. For example, as shown in the timing chart (A) or (E) illustrated in Figure 39, if the duty ratio control signal becomes low, the level of the signal inputted from the Schmitt circuit 15 into CPU 13 keeps a low level without synchronous change.

Further, if the duty ratio control signal has changed from the low level to the high level, the potential of the connecting point (a) changes the high level to the low level. However, if the switching trangister 9 turned on has a larger resistance value than a normal resistance value, the potential of the connecting point (a) becomes higher than the normal potential.

Accordingly, the potential of the connecting point (a) can not cross over the low threshold voltage value VL of the Schmitt circuit 15, in some case. In this case, even if the duty ratio control signal outputted from the CPU 13 become to the high level, the signal inputted from the schmitt trigger circuit 15 into the CPU 13 is keeping the high level without synchronous change.

Therefore, by comparing the duty ratio control signal outputted from the CPU 13 with the signal inputted from the Schmitt circuit 15 into the CPU 13, it is possible to judge that the exhaust gas purifier is normal, if both of the two compared signals have an opposite level.

Also, it is possible to judge that the exhaust gas purifier is abnormal, if both of the two compared signals have the same level.

Accordingly, if both of the signals have the same level, the power control circuit 6 is cut off by turning off the switch 8 and the alarm lamp 11 of the alarm lamp circuit 12 is turned on.

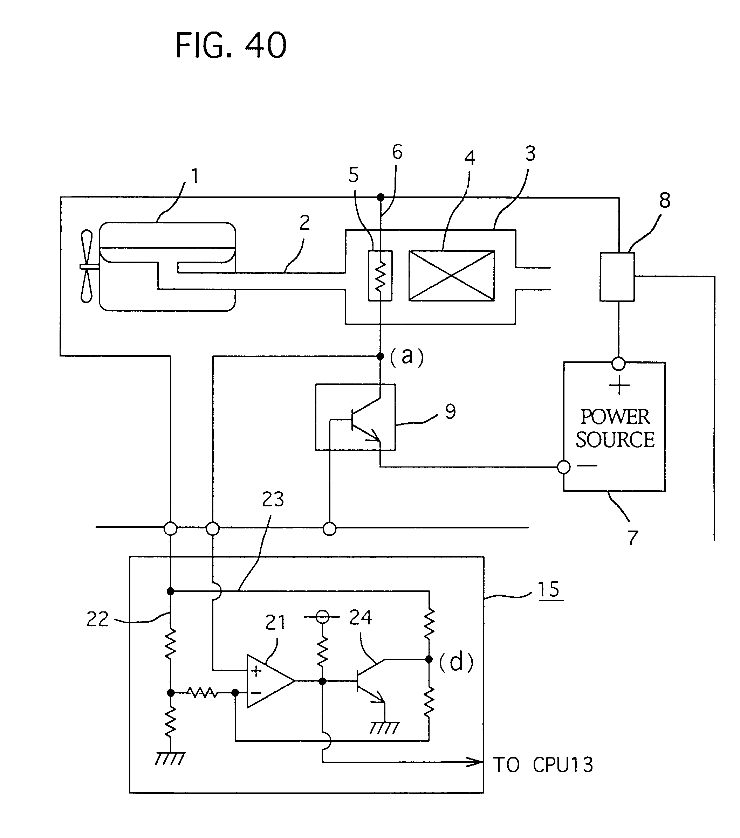

Figure 40 shows a example of the schmitt trigger circuit employed in the present embodiment. A voltage divider 22 and divide a voltage of a power source (battery) 7.

A divided voltage signal divided by the voltage divider 22 and 23 is applied to an inverting (-) input terminal of a differential amplifier 21. A connecting point (a) of power control circuit 6 is connected to a non-inverting (+) input terminal of the differential amplifier 21.

Accordingly, the divided voltage signal applied to the inverting (-) input terminal becomes the thresh hold voltage. when the potential of the connecting point (a) is low, the differential amplifier 21 outputs a low level and the switching trangister 24 is cuts off.

Therefore, a potential of a connecting point (d) of the voltage divider 23 becomes a potential determined by resistance values of resistances of the divider 22 and 23. Similarly, the threshold voltage of a potential of the (-) input terminal of th differential amplifier 21 becomes a potential decided by resistance values of the divider 22 and 23.

When the potential of the connecting point (a) is high, an output voltage of the differential amplifier 21 is high.

Therefore, the switching trangister 24 is turned on and the connecting point (d) is contacted to the earth. Therefore, the threshold voltage has a different value from the value of the threshold voltage at the condition that the potential of the connecting point (a) is the low level. Namely, the variation of the threshold voltage shown in the timing chart D of Figure 39 is realized by adjusting resistance values of the resistances of the voltage dividers 22 and 23.

As for the present embodiment, when the threshold voltage is fixed and the voltage drop of the battery is in a normal range, the potential of the connecting point (a) can not exceed the threshold voltage, in some case, even if the potential of the connecting point (a) varies from a low level to a high level.

Accordingly, it may be judged that the exhaust gas purifier is not normal.

However, because the variation of the threshold voltage of the Schmitt trigger circuit in the present invention is corresponded with the variation of the voltage of the battery 7 and values of the resistances, the above mentioned misjugement is prevented. Some other semiconductor switching power devices can be employed instead of the switching trangister 9 and 24.

As mentioned in the present embodiment, the voltage drop of the heater supplied the power controlled by means of the duty control method is detected by the voltage detection means.

Further, the changing timing of the voltage drop is compared with a control timing when the heater is turned on or off by a judging means.

Further, the voltage drop detected by the voltage detecting means is compared with both of a predetermined voltage value in a power supply period and a predetermined voltage value in no-power supply period by a voltage level judging means.

Further, a controller for controlling, monitoring the exhaust gas purifier and alarming of troubles of the exhaust gas purifier alarms in accordance with an output signal of the judging means or an voltage level judging means.

Consequently, it is possible to increase a reliability of the exhaust gas purifier.

Further, because a standard voltage of the voltage level judging means includes the voltage of the power source, the standard voltage can follow with the variation of the voltage of the power source.

For example, because the threshold voltage compared with the voltage of the power source includes the voltage of the power source, the reliability of the exhaust gas purifier increases.

Preferred Embodiment 16

Figure 41-44 illustrate the Preferred embodiment 16.

Figure 41 shows the block diagram of the exhaust gas purifier of the present embodiment.

A housing 4 of the exhaust gas purifier 3 is connected in the exhaust tube 2 . The exhaust gas flows through the housing 4. a filter 5 is disposed in a housing 4. The filter 5 is made of porous ceramic material.

The filter 5 collects the particulates. A electric heater 6 is disposed in the housing 4. The heater 4 faces a upper stream side end surface of the filter 5.

The particulates collected in the filter 5 is fired by the heater 6. One end of air supply tube 7 is connected to the upper stream portion of the exhaust tube 2. The other end of the air supply tube 7 is connected via the electromagnetic valve 8, to an outlet of a air pump 10 for air supply. The electromagnetic valve 8 is a valve for preventing that the exhaust gas blow out through the air supply tube 7. The air pump 9 has a motor for driving the air pump when the power is supplied to the motor.

If the electromagnetic valve is opened, air is supplied through an air cleaner 10 and the air supply tube 7 into the exhaust tube 2 by the air pump. Further, the heater 6 is connected ,via the semiconductor switching device 12, to the power source 11.

A predetermined power having required duty ratio can be supplied to the heater 6 by switching the semiconductor switching device 12. The motor of the air pump 9 is connected, via the semiconductor switching device 13, to the power source 11.

A predetermined power having required duty ratio can be supplied to the motor of the air pump 9 by switching the semiconductor switching device 13.

The electronic control unit (ECU) 14 has CPU 15 and a differential amplifier 16. The CPU 15 has an AD converter 17.

The CPU 15 is connected to a base electrode of the semiconductor switching device 12 and a base electrode of the semiconductor switching device 13. The CPU 15 controls the duty ratio of the semiconductor switching device 12 and 13.

The connecting point (a) is connected to the positive input terminal of a differential amplifier 16. the connecting point b is connected to the negative input terminal of the differential amplifier 16.

The connecting point (a) is a point on an upper stream line connecting the positive terminal of the power source 11 and one end of the heater 6 connected to the upper stream line.

The connecting point (b) is a point on a down stream line connecting the negative terminal of the power source 11 and the other end of the heater 6 connected to the down stream line.

The output terminal of the differential amplifier 16 is connected to an AD converter 17. The CPU 15 is connected to the EEPROM 19.

The EEPROM 19 can memory the data in spite of cut-off of the power supply. A manual switch 20 is connected to the CPU 15.

By closing the switch 20, the CPU 15 detects an initial resistance of the heater 6. Further, the CPU 15 is connected to the lamp 21 for alarming troubles of the heater 6. The CPU 15 is connected to the electromagnetic valve 8 and controls it.

A pair of pressure sensors 22 and 23 are disposed in the exhaust tube 2. The pressure sensor 22 is located near the upper stream side of the filter 5 and the pressure sensor 23 is located near the down stream side of the filter 5.

The pressure sensors 22 and 23 detect an upper stream side pressure and a down stream side pressure of the filter 5 of the exhaust gas purifier 3.

The pressure sensors 22 and 23 output pressure signals to the CPU 15.

In the present embodiment, a resistance detection means consists of the differential amplifier 16, the current sensor 18 and the A/D converter 17.

Operation of the above mentioned exhaust gas purifier of the diesel engine is described as follows.

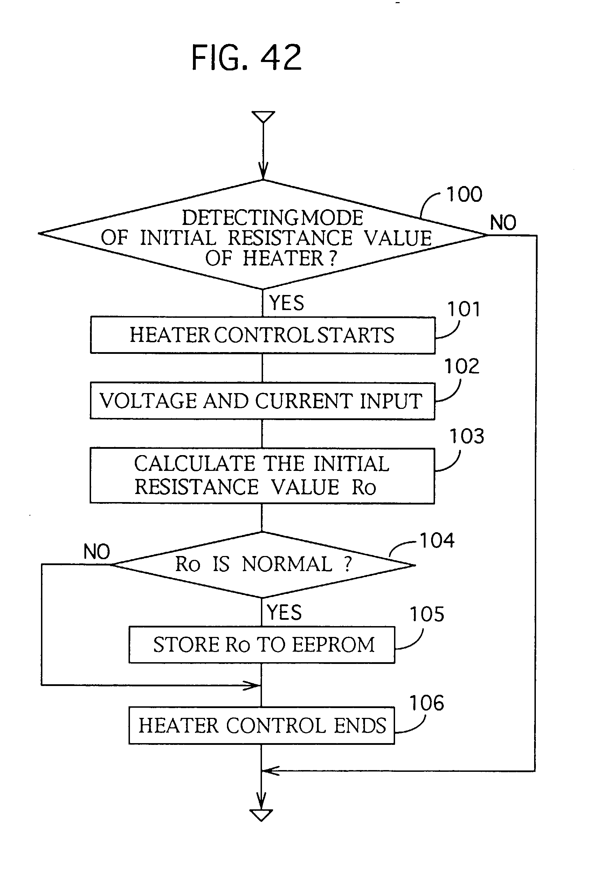

Figure 42 shows a routine detecting the initial resistance of the heater 6. Initially, at the step 100, it is judged whether switch 20 closes or opens. If the switch 20 closes, it is judged that the execution of the routine detecting the initial resistance of the heater 6 is indicated.

If the switch 20 opens, the CPU 15 does not operate this routine. Normally, the switch 20 is closed when a new heater 6 is disposed.

At the step 101, the CPU 15 outputs a heater-driving signal to the semiconductor switching device 12 for keeping the power supplied to the heater 6 at a predetermined constant power value.

At the next step 102, the CPU 15 reads the output signal of the differential amplifier 16 via the A/D converter 17, as the voltage applied to the heater 6. Similary, the CPU 15 reads the output signal of the current sensor 18 via the A/D converter 17 as a normal current supplied to the heater 6.

At the step 103, the initial resistance value Ro of the heater 6 is calculated by dividing the applied voltage by the normal current.

At the next step 104, if the initial resistance value Ro of the heater 6 is within the predetermined range, the initial resistance value Ro of the heater 6 is holded in the EEPROM 19 at the step 105.

Then, at the step 106, the power supplied to the heater 6 is cut off and the routine ends.

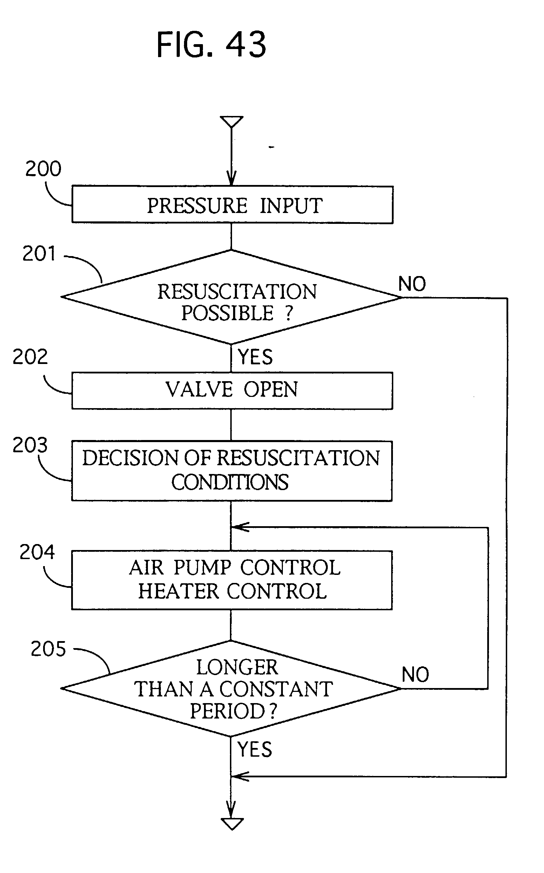

Figure 43 shows a routine executed after exchanging the heater 6. Initially, at the step 200, the pressure signals of the pressure sensors 22 and 23 are inputted when the diesel engine is driven.

At the next step 201, a pressure loss of the filter 5 is detected and the weight of the collected particulates in the filter is calculated in accordance with the pressure loss.

Further, the resuscitation timing of the filter 5 is judged in accordance with collected particulates weight. If it is the resuscitation timing, the resuscitation of the filter 5 is started, when the diesel engine 1 has stopped. At the next step 202, the electromagentic valve 8 is opened. At the next step 203, the resuscitation conditions for operating the resuscitation of the exhaust gas purifier 3 is determined. In the present embodiment, the predetermined value of the air flow rate of the air pump 9 and the predetermined power value supplied to the heater 6 are determined.

At the next step 204, air flow rate of the air pump 9 is controlled by the semiconductor switching device 13 operated by the duty ratio control method. Similarly, the heater 6 is controlled by the semiconductor switching device 12 operated by the duty ratio control method. Therefore, both of the air flow rate of the air pump 9 and a generated heat quantity of the heater 6 are kept individually to the predetermined value.

Then, the particulates collected in the filter 5 are fired and the resuscitation is executed.

At the next step 205, it is judged whether the resuscitation operation has ended or not, namely whether the time from the starting of the resuscitation is longer than the predetermined period or not. If the resuscitation operation has not ended, the routine returns to the step 204. If the resuscitation has ended, the routine ends.

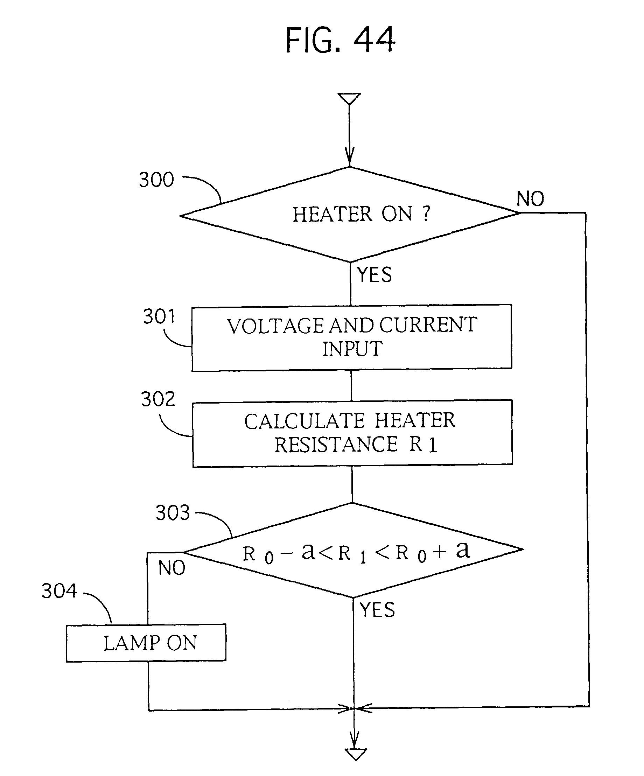

Figure 44 shows a routine which detects abnormal states of the heater 6.

Initially, at the step 300, it is judged whether the power has been supplied to the heater 6 or not. If the power has been supplied to the heater 6, the routine goes to the step 301.

At the next step 301, the CPU 15 reads the output signal of the differential amplifier 16, via AD converter 17, as an applied voltage to the heater 6. Similarly, the CPU 15 reads the output signals of the current sensor 18, via A/D converter 17, as the value of the supplied current of the heater.

At the step 302, the resistance value R1 of the heater 6 is calculated by dividing the applied voltage by the supplied current.

At the next step 303, it is judged whether the resistance value R1 of the heater 6 is within a range which is greater than a value of (Ro - a) and less than a value of (Ro + a) or not. a is a predetermined constant value.

If the resistance R1 is not within the range, the lamp 21 is turned on at the step 304.

As mentioned above, in the present embodiment, the filter 5 for collecting the particulates is disposed in the exhaust tube and the heater 6 is disposed near the end surface of the filter 5. Further, a resistance detection means consists of the differential amplifier 16, the current sensor 18 and the A/D converter 17. The CPU 15 calculates the initial resistance Ro and the initial resistance Ro is memorized at EEPRPM 19.

Further, CPU 15 compares the resistance R1 of the heater 6 with the initial resistance Ro of the heater 6.

Therefore, in the present embodiment, the malfunction of the heater can be detected correctly and simply.

Further, the resistance R1 and the initial resistance Ro are detected by same apparatus which consists of the differential amplifier 16, the current sensor 18 and the A/D converter 17 shown in Figure 41. Accordingly, the error is prevented by employing same detecting means.

Further, each heater has a different initial resistance value but the initial resistance value is memorized in the EEPROM 19.

Further, if the abnormal value of the resistance of the heater 6 is detected, the resuscitation operation can be quitted.

Preferred Embodiment 17

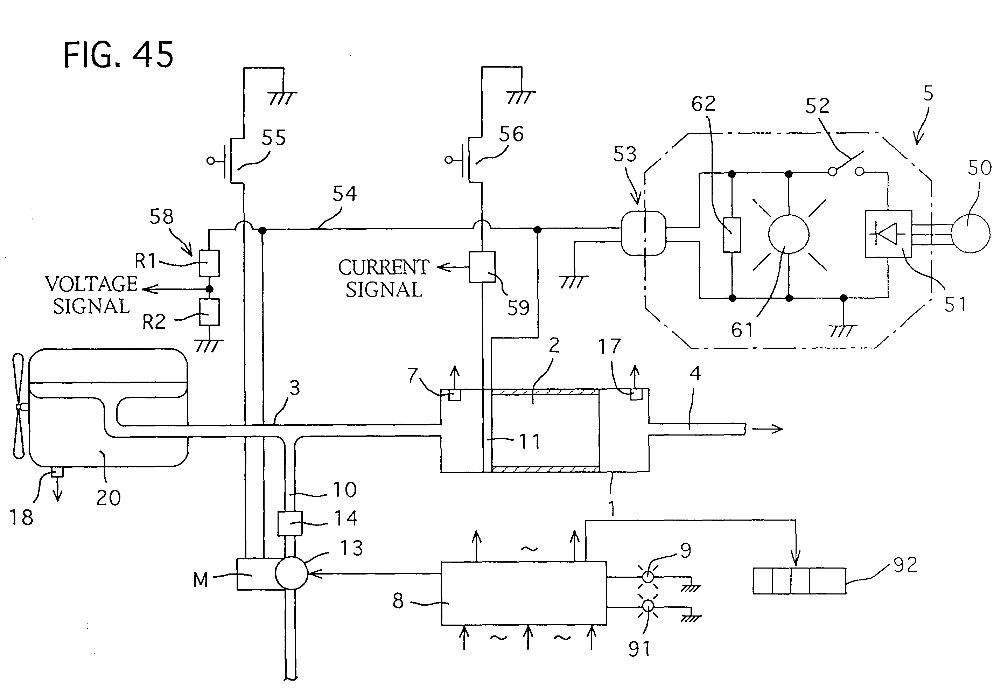

Figure 45 -51 illustrate the Preferred Embodiment 17.

The present embodiment is a embodiment for decreasing errors of the CPU (not shown in Figure 45) in the controller 8. The exhaust purifier shown in Figure 45 is similar to the exhaust purifier shown in Figure 1.

However, An outer power source 5 in Figure 45 has the rectifier 51 rectifying three phase alternative voltages of 200 V to a direct voltage of 24 V. The high potential output terminal of the rectifier 51 is connected to the power feeder (the high potential line) 54 of the exhaust gas purifier of the present embodiment via a magnet switch 52 and the connector 53. A low potential output terminal of the rectifier 54 is contacted to the earth.

The output terminal of the magnet switch 52 is contacted to the earth via a power indicating lamp 61 and assistant resistance 62. The power feeder 54 supplies the power to the high potential terminal of the heater 11 and the blower motor M. A low potential terminal of the heater 11 is contacted to the earth via the relay switch 56. A low potential terminal of the blower motor M is contacted to the earth via the relay switch 55.

Further, the voltage of the power feeder 54 is divided by the divider 58 which consists of the resistances R1 and R2 connected in series. A divided voltage by the divider 58 is outputted to a micro computer via a A/D converter.

The micro computer and the A/D converter are installed in the controller 8 but not shown.

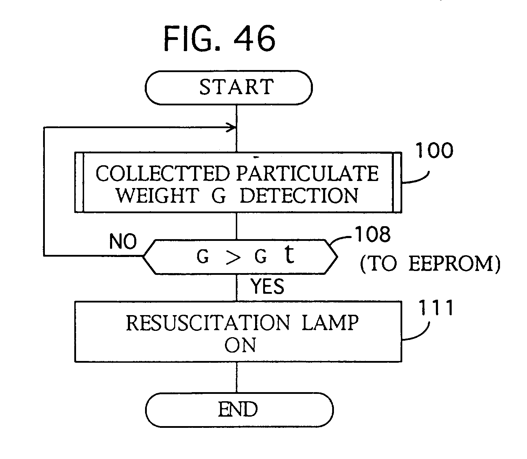

Next, A resuscitation timing judgment sub routine for judging the resuscitation timing is shown in Figure 46.

A resuscitation timing judgment sub routine is started with the starting of the engine 20. At the step 100, the exhaust pressures P1, P2 detected by the pressure sensors 7,17 and the rotation speed n detected by the rotation speed sensor 18 are outputted to the controller 8. Then, the weight G of the collected particulates is searched by using a map in which P1, P2 and n are inputted as input parameters.

At the next step 108, it is judged whether the searched weight of the collected particulatess G is heavier than a predetermined threshold value Gt or not. If G is not heavier than Gt, the routine returns to the step 100. If G is heavier than Gt, the routine goes on the step 111.

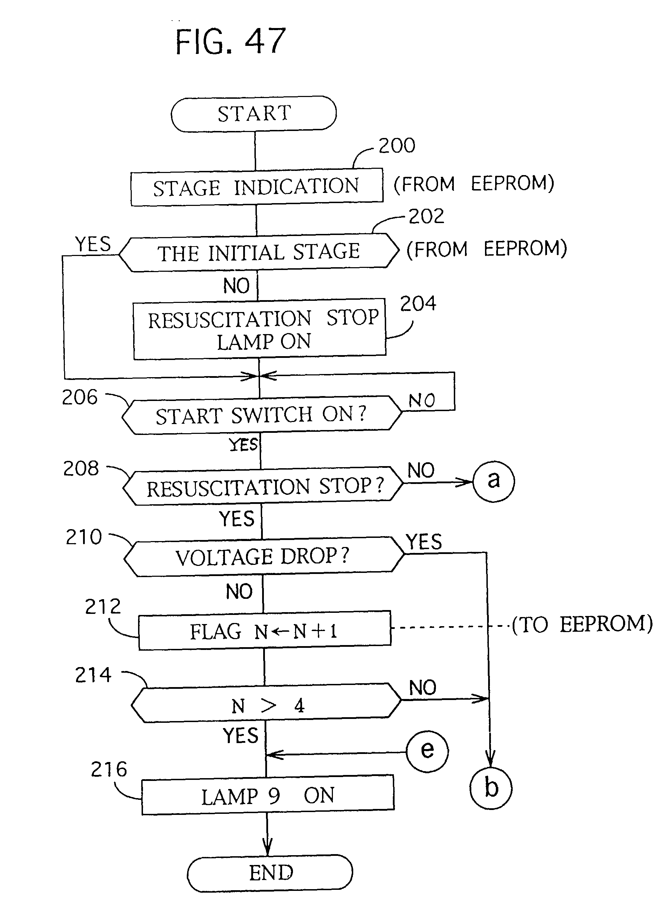

At the next step 111, the lamp 91 is turned on and the routine ends. Next, the filter resuscitation operation sub routine shown in Figure 47 - 50 is described.

The present resuscitation operation sub routine starts when the voltage of the car battery (not shown) is applied to the controller 8. It is judged before going on to the step 200 is whether the engine 20 is running or not. If the engine 20 is running, the routine waits. If the engine 20 is not running, the routine goes on to the step 200.

Initially, at the step 200, the controller 8 is reset and the inner state of the controller 8 becomes a initial state.

Next, a stage of resuscitation operation, which is memorized in a non-volatile memory stored in the controller 8 is indicated by the stage indication lamp 92.

In the present embodiment, a non-volatile memory consists of 2 bit EEPROM.

Further, the data "00" memorized in the EEPROM indicates a completion stage indicating completion of the resuscitation operation. The data "01" memorized in the EEPROM indicates a pre-heating stage. The data "10" memorized in the EEPROM indicates a burning stage. The data "11" memorized in the EEPROM indicates an after-burning stage.

At the next step 202, it is judged whether the data of EEPROM is "oo" or not. If the data is not "00", the routine goes on to the step 204.

At the step 204, the a resuscitation break lamp (not shown) is turn on and the routine goes on to the step 206 because a previous resuscitation operation had been broken. If the data is "00", the routine goes on to the step 206 because the previous resuscitation operation had ended completely.

At the next step 206, it is juged whether the operator turns a start switch on or not. The routine goes on to the step 208 after turning the start switch on. At the step 208, it is judged whether the previous resuscitation operation had been broken in accordance with the data memorized in the EEPROM or not. If the resuscitation operation had ended completely (the data is "00"), the routine goes on to the step 220. If the previous resuscitation operation had been broken (the data is not "00"), the routine goes on to the step 210.

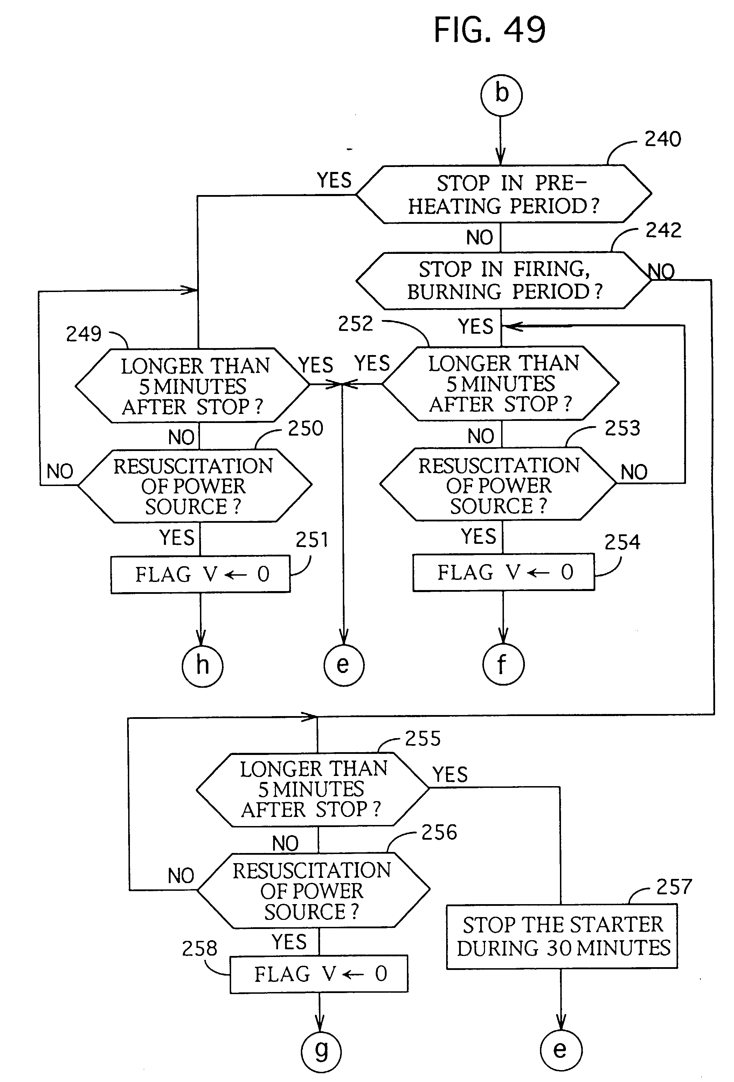

At the step 210, it is judged whether the previous resuscitation break had occurred on account of the cutting off of the power supplied to the feeder 54 from the outer power source 5 or not in accordance with the power drop flag shown in Figure 49. If the flag V is "1", the previous resuscitation break had occurred because the power had been cut off. If the flag V is "0", the previous resuscitation break had occurred because a noise had invaded the CPU (a noise drop).

If the flag V is "1", the routine goes on to the step 240 as a power drop. If the flag V is "0", the routine goes on to the step 212 as a noise drop. The noise drop means that the controller 8 is reset at the initial state by the noise (example electromagnetic noise) invading the controller 8.

At the next step 212, 1 is added to a parameter N which indicates a number of the noise drop times. At the next step 214, it is judged whether N is greater than 4 or not. If N is not greater than 4, the routine goes on to the step 240 and the resuscitation operation is executed again. If the N is greater than 4, the alarm lamp 9 is turned on in order to indicate the occurrence of the noise drop (the step 216). Then the routine ends.

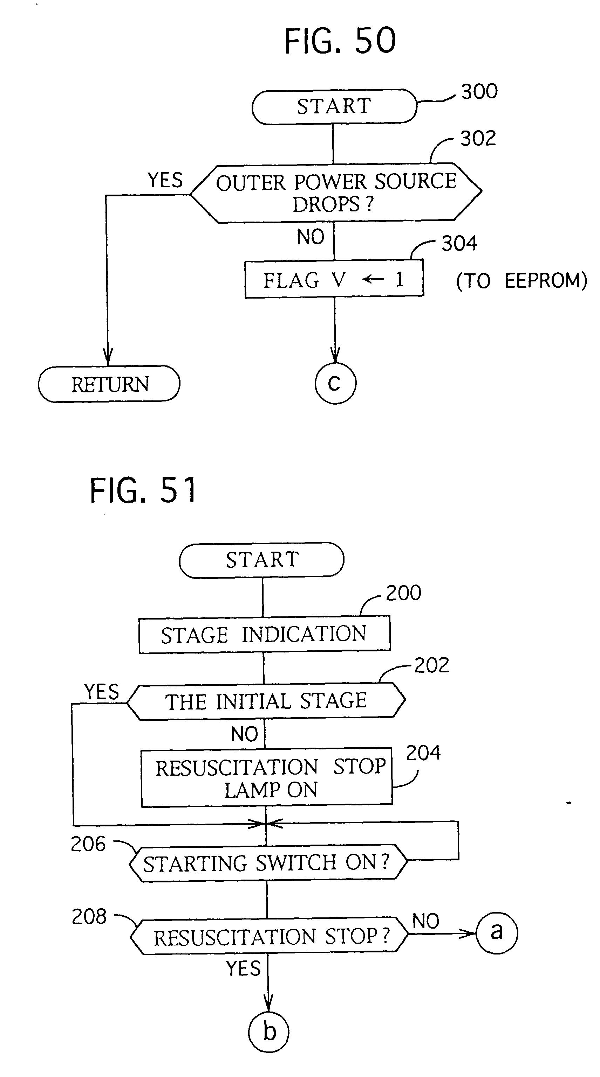

Figure 50 shows a searching routine to find the cause of the resuscitation operation break.

The searching routine is executing at each constant interval. Initially, at the step 302, it is judged whether the inputted voltage supplied by the voltage divider 58 is greater than a standard voltage or not.

If the voltage is greater than the standard voltage, it is judged that the power supplied to the switches 55 and 56 is normal and the noise drop had occurred. Then the routine goes on to the main routine. If the voltage is not greater than the standard voltage, it is judged that the power drop had occurred.

Therefore, the flag V is set to "1" and it is memorized in the EEPROM at the step 304. Then the routine goes on to the special step which is not shown in Figure 46-51.

At the above special step, a switch (not shown) for decreasing a power consumption is turn off and the routine ends in order to inhibit that the routine (control sequence) of the controller 8 goes on. Therefore, the cause of the break can be judged by the flag V.

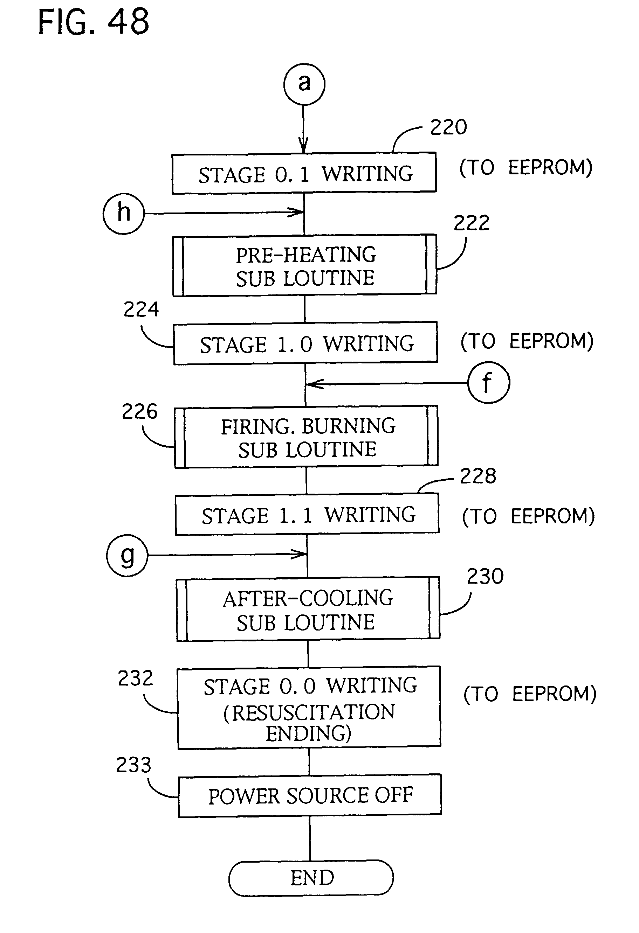

When it is judged that the resuscitation operation had ended completely at the step 208, a following burning control sub routine shown in Figure 48 is executed.

Initially, at the step 220, the stage "01" (a pre-heating stage) is memorized into the EEPROM. At the next step 222, the pre-heating sub routine is executed. After the pre-heating sub routine, the stage "10" (a burning stage) is memorized into the EEPROM at the step 224. At the next step 226, the firing and burning sub routine is executed at the step 226. After the firing and burning sub routine, the stage "11" (an after-cooling stage) is memorized into the EEPROM at the step 228. Then, after-cooling sub routine is executing at the step 230. the stage "00" (the resuscitation completion) is memorized to the EEPROM at the next step 232.

Then, the power supplied to the controller 8 is cut off at the step 233 and the routine ends.

The above mentioned pre-heating sub routine (pre-heating period), the firing and burning sub routine (firing period and burning period) and the after-cooling sub routine (after-cooling period which consists of the first blowing period and the second blowing period) are described in the foregoing embodiments.

The pre-heating sub routine executes the supply of the pre-heating power supplied to the heater 11 for the predetermined time Tb if the predetermined time Ta (1 minute in the present embodiment) had passed after the blower 13 had been driven. The firing and burning sub routine executes the supply of the firing power supplied to the heater 11 for the predetermined time Td after the supply of the pre-heating power had ended. The after-cooling sub routine executes cutting off the power supply after the time Td had passed and drives the blower for the predetermined time Te.

Figure 49 shows the resuscitation operation after the resuscitation operation break had occurred.

Initially, at the step 240, it is judged whether the break had occurred in the pre-heating period in accordance with the memorized stage of the EEPROM or not.

If the break had occurred in the pre-heating period (namely stage "01"), it is judged whether a time is longer than 5 minutes after the break or not, at the step 249. If the time is not longer than 5 minutes, it is judged whether the power supply had been recovered or not, at the step 250.

If the power supply had not been covered, the routine returns at the step 249. If the power supply is recovered within 5 minutes after the break of the resuscitation operation had occurred, the flag V is reset to "0" at the step 251. Further, the routine goes to the step 222 and the pre-heating operation is executed again.

If the power supply is not recovered within 5 minutes at the step 249, the alarm lamp 9 is turned on in order to indicate the restart of the resuscitation operation to the operator at the step 216 and the routine ends.

At the step 240, if the break of the resuscitation operation had not occurred, it is judged whether the break of the resuscitation operation had occurred in the firing or burning period (namely stage 10) or not, at the step 242.

If the break had occurred in the firing or burning period, it is judged whether a time is longer than 5 minutes after the break or not, at the step 252. If the time is not longer than 5 minutes (namely within 5 minutes), it is judged whether the power supply had been recovered or not, at the step 253.

If the power supply had not been recovered, the routine returns the step 252. If the power had recovered within 5 minutes after the break of the resuscitation operation had occurred, the flag V is reset to "0" at the step 254. Further, the routine goes to the step 226 and the firing and burning period is executed again.

If the power supply is not recovered within 5 minutes, the alarm lamp 9 is turned on in order to indicate the restart of the resuscitation operation to the operator at the step 216 and the routine ends.

At the step 242, if the break of the resuscitation operation had not occurred in the firing and burning period, it is judged that the break had occurred in the after-cooling period (namely stage "11"). Therefore, at the step 255, it is judged whether a time is longer than 5 minutes after the break or not.

If the time is not longer than 5 minutes (namely within 5 minutes), it is judged whether the power supply had recovered or not, at the step 256.

If the power supply had not recovered, the routine returns at the step 255. If the power had recovered within 5 minutes after the break of the resuscitation operation had occurred, the flag V is reset to "0" at the step 258. Further, the routine goes to the step 230 and the after-cooling operation is executed again.

If the power supply had not been recovered within 5 minutes, the filter 2 is too hot to start the engine. Therefore, the controller 8 inhibits the power supply to a starter (not shown) of the engine at the step 257.

(Arranged embodiment)

In the above embodiment, if the power supply is recovered within 5 minutes after the break in the firing and burning operation, the firing and the burning operation is executed from the beginning of firing and burning operation.

However, in the present embodiment, the firing and burning operation (the firing and burning period, the stage 10) is divided into plural substages, for example, to 5 sub-stages, which have the sub-stage number individually.

Further, if the power supply is recovered within 5 minutes after the break in the firing and the burning operation, the firing and the burning operation is executed from the sub-stage in which the break had occurred. The number of sub-stage in which the break had occurred is memorized in the EEPROM.

Naturally, the resuscitation operation can start again from the sub-stage which is previous sub-stage in comparison with the sub-stage which is the broken sub-stage.

Further, it is possible to divide the resuscitation operation into plural sub-stages.

(The feature of the present embodiment)

The power supplied to the heater and the blower is controlled in accordance with a predetermined sequence.

A controller 8 has the EEPROM and indicating means. A resuscitation execution signal (stage number in the present embodiment) is written into the EEPROM during the executing the resuscitation.

The resuscitation execution signal is erased after ending resuscitation operation. The indicating means indicates and alarms some informations related to the memorized data in the EEPROM before starting the resuscitation operation.

Therefore, if the break of the resuscitation operation had occurred in the period executing the resuscitation operation, the operator can know that the break of the resuscitation operation had occurred.

Further, in the present embodiment, the controller 8 judges that the break of the resuscitation operation had occurred when the EEPROM holds the resuscitation executing signal at the starting of resuscitation operation.

Accordingly, the controller 8 can recognize the occurring of the break at start of the resuscitation operation and can select a appropriate operation to decrease influences of the break.

Further, in the present embodiment, the EEPROM memories the stages of the resuscitation operation sequentially.

Accordingly, the operator can recognize the stage of the break and select the appropriate action in accordance with the indicating stage.

Further, in the present embodiment, the outer power source supplies the power to the heater and blower and the car battery supplies the power to the controller 8. The controller 8 detects the break of the power supply from the outer power source and stops the sequence (routine) control of the resuscitation operation.

Therefore, it can be prevented that the sequence in the controller goes on.

## Preferred Embodiment 18

Figure 51 illustrates the Preferred Embodiment 18.

A flow chart illustrating in the figure 51 shows a embodiment for supplying the power from the outer power source 5 to the controller 8.

Figure 51 is similar to the figure 47 fundamentally. However, the routine showing in Figure 51 does not have the steps 210 - 216 of the routine shown in Figure 47.

Further, in the present embodiment, the flag V is not reset to "0" and the routine shown in the Figure 50 is abbreviated.

Accordingly, the operation goes on to the same routine after the break on account of the noise drop and the break on account of the power drop.

## Claims

1. An exhaust gas purifier comprising:

   a filter (2) placed in an exhaust tube (3) of a diesel engine so as to collect particulates exhausted out of said diesel engine;
   a heating means (11) placed near an end surface of an upper stream side of said filter (2) so as to fire said particulates;
   an air supply means (13) driven by electric power so as to supply the air into an upper stream portion of said exhaust tube (3) located between said engine and said filter (2); and
   a control means (8) for controlling the regeneration operation and for controlling a heating power supplied to said heating means (11) and an air flow rate of said air supply means (13);

   **characterized in that**

   said control means (8) changes said air flow rate in accordance with a predetermined pattern during a regeneration period in which at least one of said air supply means (13) and said heating means (11) is driven, and
   said regeneration period includes a burning period and at least one blowing period, wherein said control means (8) keeps a slow burning velocity during said burning period and keeps a high burning velocity during the first blowing period set after said burning period.

2. An exhaust gas purifier according to claim 1, **characterized in that**
   said control means (8) changes said air flow rate in accordance with a predetermined pattern after firing of said particulates.

3. An exhaust gas purifier according to claim 1,
**characterized in that**
said control means (8) changes said air flow rate in accordance with a predetermined pattern after ending of supplying of said heating power.

4. An exhaust gas purifier according to claim 2, **characterized in that**
   said control means (8) keeps said slow burning velocity at a center portion in a radial direction in a down stream portion of said filter (2) during a predetermined period by means of supplying a reduced volume of said air supply and changes said burning velocity at said center portion into high before a burning area reaches an end surface of a down stream side of said filter (2) by means of increasing said air flow rate.

5. An exhaust gas purifier according to claim 4, **characterized in that**
   said control means (8) decreases or cuts off said heating power during said first air blowing period.

6. An exhaust gas purifier according to claim 4, **characterized in that**
   said control means (8) increases said air flow rate during a second blowing period set after said first blowing period in order to cool said filter (2).

7. An exhaust gas purifier according to claim 4, **characterized in that**
   said control means (8) increases an air flow rate during a pre-heating period in comparison with said air flow rate during said burning period, said pre-heating period has a period set from ending of said heating power supplying till firing of said particulates.

8. An exhaust gas purifier according to claim 1 or 4 or 7,
   **characterized in that**
   said control means (8) decreases said heating power supplied during a pre-heating period in comparison with said heating power supplied during said burning period, said pre-heating period has a period set from ending of said heating power supplying till firing of said particulates.

9. An exhaust gas purifier according to claim 1 or 4 or 7,
   **characterized by**
   further comprising air flow rate detecting means (15) for detecting said air flow rate, wherein said control means (8) controls said heating power in accordance with said air flow rate and heats said particulates during a pre-heating period set before firing of said particulates.

**10.** An exhaust gas purifier according to claim 1 or 4 or 7,

**characterized by**

further comprising an air flow rate detecting means (15) for detecting said air flow rate, wherein said control means (8) controls said air flow rate by means of a feedback control method in order to correspond said air flow rate with a predetermined value.

**11.** An exhaust gas purifier according to claim 1 or 4 or 7,

**characterized by**

futher comprising air temperature detecting means (6) for detecting an air temperature, wherein said control means (8) controls said volume of air supply in accordance with said air temperature and said air flow rate in order to correspond an air mass flow with a predetermined value.

**12.** An exhaust gas purifier according to claim 1 or 4 or 7,

**characterized by**

further comprising an air pressure detecting means (7) for detecting an air pressure, wherein said control means (8) controls said volume of air supply in accordance with said air pressure and said air flow rate in order to correspond an air mass flow with a predetermined value.

**13.** An exhaust gas purifier according to claim 1 or 4 or 7,

**characterized in that**

said control means (8) sets a pre-cooling period for cooling said filter (2) by means of feeding a predetermined air flow rate of air before starting of said heating power supply.


**Patentansprüche**

**1.** Auspuff-Gas-Reiniger, umfassend:

einen Filter (2), der sich in einem Auspuff-Rohr (3) eines Dieselmotors befindet, um Partikel zu sammeln, die aus dem Dieselmotor ausgestoßen werden;
ein Heiz-Mittel (11), das sich nahe einer Stirnfläche einer stromaufwärtigen Seite des Filters (2) befindet, um die Partikel zu entzünden;
ein Luft-Zuführungs-Mittel (13), das von elektrischer Energie angetrieben ist, um die Luft in einen stromaufwärtigen Abschnitt des Abgas-Rohres (3) zuzuführen, das sich zwischen dem Motor und dem Filter (2) befindet; und
ein Steuerungs-Mittel (8) zum Steuern des Regenerierungs-Vorganges und zum Steuern einer dem Heiz-Mittel (11) zugeführten Heiz-Leistung und einer Luft-Durchfluß-Rate des Luft-Zuführungs-Mittels (13);

dadurch gekennzeichnet, daß

das Steuerungs-Mittel (8) die Luft-Durchfluß-Rate entsprechend einem vorbestimmten Zeitmuster während einer Regenerations-Periode verändert, in der zumindest eines der Luft-Zuführungs-Mittel (13) und der Heiz-Mittel (11) angetrieben sind, und daß
die Regenerations-Periode eine Verbrennungs-Periode und zumindest eine Blase-Periode beinhaltet, worin das Steuerungs-Mittel (8) eine geringe Verbrennungs-Geschwindigkeit während der Verbrennungs-Periode und eine hohe Verbrennungs-Geschwindigkeit während der ersten Blase-Periode, die nach der Verbrennungs-Periode stattfindet, aufrecht erhält.

**2.** Auspuff-Gas-Reiniger nach Anspruch 1,
dadurch gekennzeichnet, daß
das Steuerungs-Mittel (8) die Luft-Durchfluß-Rate entsprechend einem vorbestimmten Zeitmuster nach dem Entzünden der Partikel verändert.

**3.** Auspuff-Gas-Reiniger nach Anspruch 1,
dadurch gekennzeichnet, daß
das Steuerungs-Mittel (8) die Luft-Durchfluß-Rate entsprechend einem vorbestimmten Zeitmuster nach dem Beenden der Zufuhr der Heiz-Leistung verändert.

**4.** Auspuff-Gas-Reiniger nach Anspruch 2,
dadurch gekennzeichnet, daß
das Steuerungs-Mittel (8) die geringe Verbrennungs-Geschwindigkeit an einem zentralen Anschnitt in einer radialen Richtung in einem stromabwärtigen Abschnitt des Filters (2) während einer vorbestimmten Periode mittels Zuführen eines verringerten Umfangs der Luft-Zufuhr aufrecht erhält und die Verbrennungs-Geschwindigkeit beim zentralen Abschnitt mittels Erhöhen der Luft-Durchfluß-Rate zu einer hohen verändert, bevor ein Verbrennungs-Bereich eine Stirnfläche einer stromabwärtigen Seite des Filters (2) erreicht.

**5.** Auspuff-Gas-Reiniger nach Anspruch 4,
dadurch gekennzeichnet, daß
das Steuerungs-Mittel (8) die Heiz-Leistung während der ersten Luft-Blase-Periode verringert oder unterbricht.

**6.** Auspuff-Gas-Reiniger nach Anspruch 4,
dadurch gekennzeichnet, daß
das Steuerungs-Mittel (8) die Luft-Durchfluß-Rate während einer zweiten Blase-Periode, die an die erste Blase-Periode anschließt, erhöht, um den Filter (2) zu kühlen.

7. Auspuff-Gas-Reiniger nach Anspruch 4, dadurch gekennzeichnet, daß das Steuerungs-Mittel (8) eine Luft-Durchfluß-Rate während einer Vorheiz-Periode im Vergleich zur Luft-Durchfluß-Rate während der Verbrennungs-Periode erhöht, wobei die Vorheiz-Periode einen Zeitraum umfaßt, der vom Beenden der Heiz-Leistungs-Zufuhr bis zum Entzünden der Partikel reicht.

8. Auspuff-Gas-Reiniger nach Anspruch 1 oder 4 oder 7, dadurch gekennzeichnet, daß das Steuerungs-Mittel (8) die Heiz-Leistung, die während einer Vorheiz-Periode zugeführt ist, im Vergleich zur Heiz-Leistung, die während der Verbrennungs-Periode zugeführt wird, verringert, wobei die Vorheiz-Periode einen Zeitraum umfaßt, der vom Beenden der Heiz-Leistungs-Zufuhr bis zum Entzünden der Partikel reicht.

9. Auspuff-Gas-Reiniger nach Anspruch 1 oder 4 oder 7, dadurch gekennzeichnet, daß er weiters ein Luft-Durchfluß-Erfassungs-Mittel (15) zum Erfassen der Luft-Durchfluß-Rate beinhaltet, worin das Steuerungs-Mittel (8) die Heiz-Leistung entsprechend der Luft-Durchfluß-Rate steuert und die Partikel während einer Vorheiz-Periode, die vor dem Entzünden der Partikel stattfindet, erwärmt.

10. Auspuff-Gas-Reiniger nach Anspruch 1 oder 4 oder 7, dadurch gekennzeichnet, daß er weiters ein Luft-Durchfluß-Erfassungs-Mittel (15) zum Erfassen der Luft-Durchfluß-Rate umfaßt, worin das Steuerungs-Mittel (8) die Luft-Durchfluß-Rate mittels eines Rückkopplungs-Steuerungs-Verfahrens steuert, um die Luft-Durchfluß-Rate mit einem vorbestimmten Wert in Übereinstimmung zu bringen.

11. Auspuff-Gas-Reiniger nach Anspruch 1 oder 4 oder 7, dadurch gekennzeichnet, daß er weiters ein Luft-Temperatur-Erfassungs-Mittel (6) zum Erfassen einer Luft-Temperatur umfaßt, worin besagtes Steuerungs-Mittel (8) den Umfang an Luft-Zufuhr entsprechend der Luft-Temperatur und der Luft-Durchfluß-Rate steuert, um einen Luft-Mengen-Durchfluß mit einem vorbestimmten Wert in Übereinstimmung zu bringen.

12. Auspuff-Gas-Reiniger nach Anspruch 1 oder 4 oder 7, dadurch gekennzeichnet, daß

er weiters ein Luftdruck-Erfassungs-Mittel (7) zum Erfassen eines Luftdruckes beinhaltet, worin das Steuerungs-Mittel (8) den Umfang an Luft-Zufuhr entsprechend dem Luftdruck und der Luft-Durchfluß-Rate steuert, um einen Luft-Mengen-Durchfluß mit einem vorbestimmten Wert in Übereinstimmung zu bringen.

13. Auspuff-Gas-Reiniger nach Anspruch 1 oder 4 oder 7, dadurch gekennzeichnet, daß das Steuerungs-Mittel (8) eine Vorkühl-Periode zum Kühlen des Filters (2) mittels Zuführen einer vorbestimmten Luft-Durchfluß-Rate an Luft vor dem Starten der Heiz-Leistungs-Zuführung setzt.

## Revendications

1. Un purificateur de gaz d'échappement comprenant :

un filtre (2) placé dans un tuyau d'échappement (3) d'un moteur diesel, de manière à collecter les particules évacuées par ledit moteur diesel; des moyens de chauffage (11) placés près d'une surface d'extrémité de la partie amont de l'écoulement dudit filtre (2), de manière à brûler lesdites particules; des moyens d'alimentation en air (13) alimentés par une puissance électrique, de manière à fournir de l'air dans la partie amont de l'écoulement du tuyau d'échappement (3), situé entre ledit moteur et ledit filtre (2); et des moyens de commande (8) prévus pour commander l'opération de régénération et pour commander une alimentation en puissance de chauffage vers lesdits moyens de chauffage (11), et une vitesse d'écoulement d'air desdits moyens d'alimentation en air (13);

caractérisé en ce que

lesdits moyens de commande (8) modifient ladite vitesse d'écoulement de l'air en fonction d'un modèle prédéterminé pendant un intervalle de temps de régénération, pendant lequel au moins un desdits moyens d'alimentation en air (13) et desdits moyens de chauffage (11) sont alimentés, et ledit intervalle de temps de régénération comprend un intervalle de temps de brûlage et au moins un intervalle de temps de soufflage, pendant lesquels lesdits moyens de commande (8) maintiennent une faible vitesse de brûlage durant l'intervalle de temps de brûlage, et maintiennent une grande vitesse de brûlage durant le premier intervalle de temps de soufflage, fixé à la suite de l'intervalle de temps de brûlage.

2. Un purificateur de gaz d'échappement selon la revendication 1, caractérisé en ce que
lesdits moyens de commande (8) modifient ladite vitesse d'écoulement de l'air en fonction d'un modèle prédéterminé à la suite du brûlage desdites particules.

3. Un purificateur de gaz d'échappement selon la revendication 1, caractérisé en ce que
lesdits moyens de commande (8) modifient ladite vitesse d'écoulement de l'air en fonction d'un modèle prédéterminé une fois que l'alimentation en puissance de chauffage est terminée.

4. Un purificateur de gaz d'échappement selon la revendication 2, caractérisé en ce que
lesdits moyens de commande (8) maintiennent une faible vitesse de brûlage au niveau d'une partie centrale, suivant une direction radiale, dans la partie inférieure de l'écoulement dudit filtre (2), pendant un intervalle prédéterminé, en fournissant un volume réduit d'alimentation en air, et augmentent ladite vitesse de brûlage au niveau de ladite partie centrale, avant qu'une zone de brûlage atteigne une surface d'extrémité d'une partie inférieure de l'écoulement dudit filtre (2), par le biais d'une augmentation de ladite vitesse d'écoulement de l'air.

5. Un purificateur de gaz d'échappement selon la revendication 4, caractérisé en ce que
lesdits moyens de commande (8) diminuent ou coupent ladite puissance de chauffage, pendant ledit premier intervalle de temps de soufflage d'air.

6. Un purificateur de gaz d'échappement selon la revendication 4, caractérisé en ce que
lesdits moyens de commande (8) augmentent ladite vitesse d'écoulement de l'air, pendant ledit deuxième intervalle de temps de soufflage, établi à la suite dudit premier intervalle de temps de soufflage, de manière à refroidir ledit filtre (2).

7. Un purificateur de gaz d'échappement selon la revendication 4, caractérisé en ce que
lesdits moyens de commande (8) augmentent ladite vitesse d'écoulement de l'air, pendant un intervalle de temps de pré-chauffage, par comparaison avec ladite vitesse d'écoulement de l'air, pendant ledit deuxième intervalle de temps de brûlage, ledit intervalle de temps de pré-chauffage ayant un intervalle de temps établi depuis la fin de l'alimentation en puissance de chauffage, jusqu'au brûlage desdites particules.

8. Un purificateur de gaz d'échappement selon la revendication 1 ou 4 ou 5, caractérisé en ce que
lesdits moyens de commande (8) diminuent ladite alimentation en puissance de chauffage, pendant un intervalle de temps de pré-chauffage, par comparaison avec ladite alimentation en puissance de chauffage, pendant ledit intervalle de temps de brûlage, ledit intervalle de temps de pré-chauffage ayant un intervalle établi depuis la fin de l'alimentation en puissance de chauffage, jusqu'au brûlage desdites particules.

9. Un purificateur de gaz d'échappement selon la revendication 1 ou 4 ou 7, caractérisé en ce qu'
il contient en outre des moyens de détection de vitesse d'écoulement d'air (15), prévus pour détecter ladite vitesse d'écoulement d'air, dans lequel lesdits moyens de commande (8) commandent ladite puissance de chauffage en fonction de ladite vitesse d'écoulement d'air et chauffent lesdites particules pendant un intervalle de temps de pré-chauffage établi avant le brûlage desdites particules.

10. Un purificateur de gaz d'échappement selon la revendication 1 ou 4 ou 7, caractérisé en ce qu'
il contient en outre des moyens de détection de vitesse d'écoulement d'air (15), prévus pour détecter ladite vitesse d'écoulement d'air, dans lequel lesdits moyens de commande (8) commandent ladite vitesse d'écoulement d'air, au moyen d'un procédé de commande par rétroaction, afin de faire correspondre ladite vitesse d'écoulement d'air avec une valeur prédéterminée.

11. Un purificateur de gaz d'échappement selon la revendication 1 ou 4 ou 7, caractérisé en ce qu'
il contient en outre des moyens de détection de la température de l'air (6), prévus pour détecter ladite température de l'air, dans lequel lesdits moyens de commande (8) commandent ledit volume d'alimentation en air, en jonction de ladite température de l'air et de ladite vitesse d'écoulement d'air, afin de faire correspondre un débit massique d'air avec une valeur prédéterminée.

12. Un purificateur de gaz d'échappement selon la revendication 1 ou 4 ou 7, caractérisé en ce qu'
il contient en outre des moyens de détection de la pression de l'air (7), prévus pour détecter ladite pression de l'air, dans lequel lesdits moyens de commande (8) commandent ledit volume d'alimentation en air, en fonction de ladite pression de l'air et de ladite vitesse d'écoulement d'air, afin de faire correspondre un débit massique d'air avec une valeur prédéterminée.

13. Un purificateur de gaz d'échappement selon la revendication 1 ou 4 ou 7, caractérisé en ce que
lesdits moyens de commande (6) établissent un intervalle de temps de pré-refroidissement, prévu pour le refroidissement dudit filtre (2), en alimentant à un débit d'air prédéterminé, avant le début de ladite alimentation en puissance de chauffage.

# FIG. 1

19··· TEMPERATURE SENSOR

EP 0 632 189 B1

# FIG. 2

START

CALCULATE COLLECTED PARTICULATE WEIGHT G — 100

NO ← G > Gt — 108

YES

RESUSCITATION LAMP ON — 111

END

START

BLOWER ON — 112

TIMER START — 114

TIMER CONTROL SUB LOUTINE — 116

END

# FIG. 3

```
        ( TIMER CONTROL SUB LOUTINE )————116

        ┌──────────────────────────────┐
   NO  /  LONGER THAN 1 MINUTE   ╲————1161        ←—— PRE-COOLING
  ┌────╲     AFTER BLOWER ON     ╱                        PERIOD
  │       └─────────┬──────────┘                          0 kw
  │                YES              1162                  190ℓ/MINUTE
  │        ┌─────────────────────┐
  │        │   HEATER TURN ON     │
  │        └─────────┬───────────┘

  │       ┌──────────────────────────┐
   NO  /  LONGER THAN 10 MINUTES ╲————1163       ←—— PRE-HEATING
  ┌────╲     AFTER HEATER ON     ╱                        PERIOD
  │       └─────────┬──────────┘                          0.8 kw
  │                YES              1164                  190ℓ/MINUTE
  │        ┌─────────────────────┐
  │        │  HEATER POWER UP AND │
  │        │  BLOWER POWER DOUN   │
  │        └─────────┬───────────┘

  │       ┌──────────────────────────┐
   NO  /  LONGER THAN 3 MINUTES  ╲————1165       ←—— FIRING PERIOD
  ┌────╲    AFTER STEP 1164      ╱                        1.3 kw
  │       └─────────┬──────────┘                          20ℓ/MINUTE
  │                YES              1166
  │        ┌─────────────────────┐
  │        │  HEATER POWER DOWN   │
  │        └─────────┬───────────┘

  │       ┌──────────────────────────┐
   NO  /  LONGER THAN 22 MINUTES ╲————1167       ←—— BURNING PERIOD
  ┌────╲    AFTER STEP 1166      ╱                        1.2 kw
  │       └─────────┬──────────┘                          20ℓ/MINUTE
  │                YES              1168
  │        ┌─────────────────────┐
  │        │   HEATER OFF AND     │
  │        │  BLOWER POWER UP     │
  │        └─────────┬───────────┘

  │       ┌──────────────────────────┐
   NO  /  LONGER THAN 7 MINUTES  ╲————1169              FIRST
  ┌────╲    AFTER STEP 1168      ╱                 BLOWING PERIOD
  │       └─────────┬──────────┘                          0 kw
  │                YES              1170                  60ℓ/MINUTE
  │        ┌─────────────────────┐
  │        │  BLOWER FURTHER      │
  │        │    POWER UP          │
  │        └─────────┬───────────┘

  │       ┌──────────────────────────┐
   NO  /  LONGER THAN 3 MINUTES  ╲————1172             SECOND
  └────╲    AFTER STEP 1170      ╱                 BLOWING PERIOD
          └─────────┬──────────┘                          0 kw
                   YES              1174                  190ℓ/MINUTE
           ┌─────────────────────┐
           │     BLOWER OFF       │
           └─────────┬───────────┘

              (    RETURN    )
```

# FIG. 4

2
FILTER
MIDDLE PORTION
CENTER PORTION
OUTER PERIPHERAL PORTION

# FIG. 5

| A• | B• | C• | ← OUTER PERIPHERAL PORTION |
| D• | E• | F• | ← CENTER PORTION |
| G• | H• | I• | ← MIDDLE PORTION |

PRESH AIR →

DOWN STREAM PORTION

MIDDLE STREAM PORTION

UPPER STREAM PORTION

FIG.6

# FIG.7

FIRING PERIOD

AFTER-COOLING PERIOD

PRE-HEATING PERIOD

BURNING PERIOD

TEMPRATURE (AIR FLOW RATE) ℃ (ℓ/m)

UPPERSTREAM PORTION

MIDDLE STREAM PORTION

600

DOWN STREAM PORTION

0

0                                                    45

TIME ⟶ (MINUTE)

MIDDLE PORTION

EP 0 632 189 B1

# FIG.8

PRE-HEATING PERIOD · FIRING PERIOD · BURNING PERIOD · AFTER-COOLING PERIOD

TEMPRATURE °C (AIR FLOW RATE) (ℓ/m)

UPPERSTREAM PORTION

600

MIDDLE STREAM PORTION

DOWN STREAM PORTION

0

0     45

TIME → (MINUTE)

, OUTER PERIPHERAL PORTION

EP 0 632 189 B1

# FIG.9

## THE FIRST EMBODIMENT

# FIG.10

## PRIOR ARTS

# FIG.11

PATICULATES
AT END OF THE
BURNING PERIOD

PATICULATES
JUST AFTER
STARTING OF
BLOWING PERIOD

PATICULATES
DURING THE FIRST
BLOWING PERIOD

# FIG.12

(a)     AT END OF THE
BURNING PERIOD

(b)     DURING THE FIRST
BLOWING PERIOD
$\longrightarrow$ BLOW OUT

EP 0 632 189 B1

# FIG. 13

AIR FLOW RATE CONTROL
SUB LOUTINE — 1180

LONGER THAN A PRE DETERMINED
TIME AFTER THE BLOWER 13 ON — 1181
NO | YES

AIR FLOW RATE F,
AIR TEMPERATURE T INPUT — 1182

CALCULATE AIR MASS FLOW — 1183

$\triangle m = m - m x$ CALCULATE — 1184

$\triangle m > + \alpha$ — 1185
YES | NO

$\triangle m < - \alpha$ — 1187
YES | NO

1186
$D \leftarrow D - \triangle D$

1188
$D \leftarrow D + \triangle D$

BLOWER CONTROL — 1189

RETURN

37

# FIG. 14

TIMER CONTROL SUB LOUTINE — 116

1191
TEMPERATURE T1, T2
INPUT

1192
BLOWER ON

1193
NO ⟨ LONGER THAN 1 MINUTE ⟩

YES

1194
TEMPERATURE T1′ , T2′
INPUT

1195
$\Delta T1 = T1 - T1'$ OR
$\Delta T2 = T2 - T2'$ IS LARGE ?  YES → TO MAIN LOUTINE

NO
1196
$T \leftarrow (T1' + T2') / 2$

TO STEP 1162

# FIG. 15

TIMER CONTROL SUB LOUTINE

1160
PRESSURE P INPUT

TO STEP 1161

# FIG. 16

TIMER CONTROL SUB LOUTINE —— 116

1161
NO — LONGER THAN 1 MINUTE AFTER BLOWER ON

YES — 1190

PRE HEAT POWER CONTROL

1162
HEATER TURN ON

⟵ PRE—COOLING PERIOD
0 kw
190 ℓ /MINUTE

1163
NO — LONGER THAN 10 MINUTES AFTER HEATER ON

YES

HEATER POWER UP AND BLOWER POWER DOWN — 1164

⟵ PRE—HEATING PERIOD
0. 8 kw
190 ℓ /MINUTE

1165
NO — LONGER THAN 3 MINUTES AFTER STEP 1164

YES

HEATER POWER DOWN — 1166

⟵ FIRING PERIOD
1. 3 kw
20 ℓ /MINUTE

1167
NO — LONGER THAN 22 MINUTES AFTER STEP 1166

YES

HEATER OFF AND BLOWER POWER UP — 1168

⟵ BURNING PERIOD
1. 2 kw
20 ℓ /MINUTE

1169
NO — LONGER THAN 7 MINUTES AFTER STEP 1168

YES — 1170

BLOWER FURTHER POWER UP

⟵ FIRST BLOWING PERIOD
0 kw
60 ℓ /MINUTE

1172
NO — LONGER THAN 3 MINUTES AFTER STEP 1170

YES — 1174

BLOWER OFF

⟵ SECOND BLOWING PERIOD
0 kw
190 ℓ /MINUTE

RETURN

# FIG. 17

```
┌─────────────────────────────────┐
│   PRE HEATING TEMPERATURE       │
│   CONTROL SUB LOUTINE           │
└─────────────────────────────────┘
               │
    ┌──────────────────────┐  1191
    │    AIR  FLOW  RATE    │
    │      F INPUT          │
    └──────────────────────┘
               │
    ┌──────────────────────┐  1192
    │  SEARCH  HEATER POWER P │
    └──────────────────────┘
               │
    ┌──────────────────────┐  1193
    │  HEATER POWER CONTROL │
    └──────────────────────┘
               │
         ┌───────────┐
         │  RETURN   │
         └───────────┘
```

# FIG. 18

FROM  STEP  1192

```
    ┌──────────────────────────┐  1194
    │  INPUT TEMPETATURE T     │
    │  OF OUTLET OF THE FILTER │
    └──────────────────────────┘
               │
    ┌──────────────────────────┐  1195
    │  SEARCH CORRECTIVE       │
    │  COEFFICIENT K           │
    └──────────────────────────┘
               │
    ┌──────────────────────────┐  1196
    │       P ← K × P          │
    └──────────────────────────┘
               │
               ▼
```

TO  STEP  1193

# FIG. 19

EP 0 632 189 B1

FIG. 20

TIMER CONTROL SUB LOUTINE — 116

LONGER THAN 1 MINUTE AFTER BLOWER ON — 1161  NO ← PRE-COOLING PERIOD 0 kw 190 ℓ/MINUTE

YES

HEATER TURN ON — 1162

2000

PRE HEAT POWER CONTROL

LONGER THAN 10 MINUTES AFTER HEATER ON — 1163  NO ← PRE-HEATING PERIOD 0. 8 kw 190 ℓ/MINUTE

YES

HEATER POWER UP AND BLOWER POWER DOWN — 1164

LONGER THAN 3 MINUTES AFTER STEP 1164 — 1165  NO ← FIRING PERIOD 1. 3 kw 20 ℓ/MINUTE

YES

HEATER POWER DOWN — 1166

LONGER THAN 22 MINUTES AFTER STEP 1166 — 1167  NO ← BURNING PERIOD 1. 2 kw 20 ℓ/MINUTE

YES

HEATER OFF AND BLOWER POWER UP — 1168

LONGER THAN 7 MINUTES AFTER STEP 1168 — 1169  NO ← FIRST BLOWING PERIOD 0 kw 60 ℓ/MINUTE

YES

BLOWER FURTHER POWER UP — 1170

LONGER THAN 3 MINUTES AFTER STEP 1170 — 1172  NO ← SECOND BLOWING PERIOD 0 kw 190 ℓ/MINUTE

YES

BLOWER OFF — 1174

RETURN

# FIG. 21

PRE-HEATING CONTROL SUB LOUTINE —— 2000

FLAG A = 0 —— 2001
NO ←

YES

LONGER THAN A PREDETERMINED PERIOD AFTER HEATER ON —— 2002
NO ←

YES

INPUT VOLTAGE V AND CURRENT I OF HEATER —— 2003

CALUCULATE HEATER RESISTANCE R( = V/ I ) —— 2004

SEARCH TEMEPERATURE OF HEATER FROM MAP —— 2005

SEARCH HEATER POWER VALUE —— 2006

OUTPUT HEATER POWER VALUE —— 2007

A ← 1 —— 2008

RETURN

# FIG. 22

START

VALVE CLOSE DETECTING SUB LOUTINE — 300

CALCULATE COLLECTED PARTICULATE WEIGHT G — 100

$G > Gt$ — 102

NO

YES

RESUSCITATION LAMP ON — 103

END

# FIG. 23

START

BROWER ON — 104

TIMER STARTS — 106

VALVE OPEN DETECTION SUB LOUTINE — 400

TIMER CONTROL SUB LOUTINE — 108

END

# FIG. 24

START

P1, P2, n, T
INPUT — 1001

CALCULATE
COLLECTED
PRESSURE
DIFFERENCE
eqi — 1002

CALCULATE
$\Delta$ peqm — 1003

1004

RETURN

# FIG. 25

START

ORDER OF BLOWER ON INPUT ?    — 200

NO ←

YES

AIR FLOW RATE DETECTION    — 202

CALCULATE DIFFERENCE OF AIR FLOW RATE ΔF    — 204

CALCURATE VALUE OF DUTY RATIO    — 206

OUTPUT VALUE OF DUTY RATIO    — 208

PRESENT VALUE OF DUTY RATIO = 100% ?    — 210

NO ←

YES

PREVIOUS VALUE OF DUTY RATIO = 100% ?    — 212    NO

YES

TIMER STARTS    — 214

TIMER OVER ?    — 216

NO ←

YES

ALARM SIGNAL OUTPUT    — 218

RETURN

# FIG. 26

VALVE CLOSE DETECTION SUB LOUTINE — 300

AIR FLOW RATE INPUT — 302

NO ← Q > Q t 1 — 304

YES

ALARM SIGNAL OUTPUT — 306 (TO EEPROM)

RETURN

# FIG. 27

VALVE OPEN DETECTION SUB LOUTINE — 400

AIR FLOW RATE Q INPUT — 402

YES ← Q > Q t 2 — 404

NO

ALARM SIGNAL OUTPUT — 406 (TO EEPROM)

RETURN     END

47

# FIG. 28

FROM STEP 1163 (YES)

```
┌─────────────────────────┐
│   TEMPERATURE T          │ ⟍ 502
│      INPUT               │
└─────────────────────────┘
```

504 ⟍

```
        ╱─────────────────────╲      NO
       ⟨       T > T t         ⟩ ─────────→
        ╲─────────────────────╱
                 YES
```

506

```
                      ┌─────────────────────────┐
(TO EEPROM)           │   ALARM  SIGNAL          │ ⟍ 506
                      │      OUTPUT              │
                      └─────────────────────────┘
```

TO STEP 1164

```
              ╭──────────────╮
              │     END      │
              ╰──────────────╯
```

FIG. 29

19···PRESSURE SENSOR

EP 0 632 189 B1

# FIG. 30

START

POWER SUPPLY ? — 200

NO

YES

READ VOLTAGE V — 201

READ CURRENT I — 202

$Dk = Po / (V \times I)$ CALCURATE — 203

MEMORIZED DUTY RATIO Dm SEARCH — 204

OUTPUT DUTY RATIO $Dm \times Dk$ CALCURATE — 205

D OUTPUT — 206

RETURN

FIG. 31

## FIG.32

# FIG.33

92

L1
L2
L3
L4
L5
L6
L7
L8
L9
L10
L11
L12
L13
L14
L15

912a

912

# FIG.34

912

912

912

91

913    920

92

# FIG. 35

```
          ┌─────────────────────┐
         (  TIMER CONTROL        )
         (  SUB LOUTINE          )
          └─────────────────────┘
                     │
          ┌─────────────────────┐    40
          │ PRE HEAT SUB LOUTINE │
          └─────────────────────┘
                     │
          ┌─────────────────────┐    50
          │   FIRING,  BURNING   │
          │     SUB LOUTINE      │
          └─────────────────────┘
                     │
          ┌─────────────────────┐    60
          │    AFTER COOLING     │
          │     SUB LOUTINE      │
          └─────────────────────┘
                     │
            ┌─────────────┐
           (     END       )
            └─────────────┘
```

# FIG. 36

```
                    ┌──────────┐
                    │  START   │
                    └──────────┘
                         │
         NO      ┌───────────────────┐  ╱200
    ◄────────────┤   IDLE DRIVING ?  │
                 └───────────────────┘
                       YES│
         NO      ┌───────────────────┐  ╱201
    ◄────────────┤ COLD STARTING OF  │
                 │     ENGINE ?      │
                 └───────────────────┘
                       YES│
                 ┌───────────────────┐  202
                 │   TIMER STARTS    │
                 └───────────────────┘
                         │
     204                 │
         NO      ┌───────────────────┐
    ◄────────────┤   IDLE DRIVING ?  │
                 └───────────────────┘
                       YES│
     206         ┌───────────────────┐    NO
                 │   T > 60SECONDS   ├────────
                 └───────────────────┘
                       YES│
     208         ┌───────────────────┐
                 │ HEATER 9a ON (2kw)│
                 └───────────────────┘
                         │
                         │              ╱210
                 ┌───────────────────┐    NO
                 │   IDLE DRIVING ?  ├────────
                 └───────────────────┘
                       YES│           ╱212
         NO      ┌───────────────────┐
     ◄───────────┤  T > 120SECONDS   │
                 └───────────────────┘
                       YES│
     214         ┌───────────────────┐
                 │HEATER 9a TURNS OFF│
                 └───────────────────┘
```

# FIG. 37

```
        ┌─────────────────────┐
        │   HEATER CHECK      │
        │   SUB LOUTINE       │
        └─────────────────────┘
                  │
                  │                    ─1001
        ┌─────────────────────┐
        │ HEATER RESISTANCE INPUT │
        └─────────────────────┘
                  │                    ─1002
                  │              NO
        <  HEATER RESISTANCE OK ? >─────────┐
                  │ YES              ─1003  │
    NO    < LONGER THAN Tt AFTER          │
    ┌────<      HEATER ON ? >              │
    │             │ YES          ─1004     │
    │     < GAS TEMPERATURE T      NO      │
    │     <     NORMAL ? >─────────────────┤
    │             │ YES                    │
    └────────────►│              ─1005     │
    YES           │                        │
    ┌────< CURRENT VALUE >  120A ? >       │
    │             │ NO                     │
    │                                      │
  1007│                        1006        │
┌──────────┐                         ┌──────────────┐
│HEATER OFF│                         │ ALARM SIGNAL │
│BLOWER OFF│                         │   OUTPUT     │
└──────────┘                         └──────────────┘
    │                 │                   │
  ( END )          ( RETURN )          ( END )
```

# FIG. 38

# FIG. 39

NORMAL | ABNORMAL

DUTY RATIO
CONTROL SIGNAL

HIGH LEVEL —

(A)

LOW LEVEL —

POTENTIAL OF THE
CONNECTING POINT a

HIGH LEVEL —

(B)

LOW LEVEL —

OUTPUT OF NOT CIRCUIT

HIGH LEVEL —

(C)

LOW LEVEL —

POTENTIAL OF THE CONNECTING
POINT a ( REAL LINE )
THRESHHOLD VOLTAGE OF
SHUMITT TRIGGER CIRCUIT
( DOT LINE )

HIGH LEVEL —                          HIGH THRESHHOLD
                                       VOLTAGE VH

(D)

LOW LEVEL —                           LOW THRESHHOLD
                                       VOLTAGE VL

OUTPUT OF SHUMITT
TRIGGER CIRCUIT

HIGH LEVEL —

(E)

LOW LEVEL —

FIG. 40

TO CPU13

# FIG. 41

# FIG. 42

DETECTING MODE
OF INITIAL RESISTANCE VALUE
OF HEATER ? — 100

NO

YES

HEATER CONTROL STARTS — 101

VOLTAGE AND CURRENT INPUT — 102

CALCULATE THE INITIAL
RESISTANCE VALUE Ro — 103

NO

Ro IS NORMAL ? — 104

YES

STORE Ro TO EEPROM — 105

HEATER CONTROL ENDS — 106

# FIG. 43

200 — PRESSURE INPUT

201 — RESUSCITATION POSSIBLE ? — NO

YES

202 — VALVE OPEN

203 — DECISION OF RESUSCITATION CONDITIONS

204 — AIR PUMP CONTROL HEATER CONTROL

205 — LONGER THAN A CONSTANT PERIOD ? — NO

YES

# FIG. 44

300 — HEATER ON ?  **NO**

**YES**

301 — VOLTAGE AND CURRENT INPUT

302 — CALCULATE HEATER RESISTANCE R 1

303 — $R_0 - a < R_1 < R_0 + a$

**NO**

**YES**

304 — LAMP ON

# FIG. 45

VOLTAGE SIGNAL

CURRENT SIGNAL

EP 0 632 189 B1

# FIG. 46

```
        ┌──────────────┐
        │    START     │
        └──────────────┘
               │
  ┌───────────►│
  │     ┌───────────────────────────┐  ┌─ 100
  │     │  COLLECTTED PARTICULATE   │
  │     │   WEIGHT G  DETECTION     │
  │     └───────────────────────────┘
  │            │
  │   NO    ╱─────────────╲   ┌─ 108
  └────────┤   G > G t    ├─── (TO EEPROM)
           ╲─────────────╱
               │ YES
        ┌───────────────────────┐  ┌─ 111
        │  RESUSCITATION LAMP   │
        │          ON           │
        └───────────────────────┘
               │
        ┌──────────────┐
        │     END      │
        └──────────────┘
```

# FIG. 47

```
              ( START )
                 |
      +----------------------+
      | STAGE INDICATION     |  (FROM EEPROM)    200
      +----------------------+
                 |
YES    / THE INITIAL STAGE /    (FROM EEPROM)    202
 |           | NO
 |     +----------------------+
 |     | RESUSCITATION STOP   |    204
 |     | LAMP ON              |
 |     +----------------------+
 |           |
 +-----------+
             |
206  / START SWITCH ON ? /------ NO
             | YES
208  / RESUSCITATION STOP ? /---- NO ----> ( a )
             | YES
210  / VOLTAGE DROP ? /----------- YES ---+
             | NO                          |
212  +----------------------+              |
     | FLAG N ← N+1          |------(TO EEPROM)
     +----------------------+              |
             |                             |
214  /      N > 4          /---- NO -------+
             | YES                 |       |
             |<-------( e )        |       v
216  +----------------------+              ( b )
     | LAMP 9  ON           |
     +----------------------+
             |
          ( END )
```

## FIG. 48

```
                    ( a )
                      │
                      ▼
        ┌─────────────────────────┐ ─── 220
        │   STAGE 0. 1  WRITING   │      (TO EEPROM)
        └─────────────────────────┘
( h )───────────────►│
        ┌─────────────────────────┐ ─── 222
        │      PRE-HEATING        │
        │      SUB LOUTINE        │
        └─────────────────────────┘
  224   ┌─────────────────────────┐
        │   STAGE 1. 0  WRITING   │      (TO EEPROM)
        └─────────────────────────┘
                      │◄──────────────( f )
  226   ┌─────────────────────────┐
        │     FIRING. BURNING     │
        │      SUB LOUTINE        │
        └─────────────────────────┘
        ┌─────────────────────────┐ ─── 228
        │   STAGE 1. 1  WRITING   │      (TO EEPROM)
        └─────────────────────────┘
( g )───────────────►│
        ┌─────────────────────────┐ ─── 230
        │     AFTER-COOLING       │
        │      SUB LOUTINE        │
        └─────────────────────────┘
  232   ┌─────────────────────────┐
        │   STAGE 0. 0  WRITING   │      (TO EEPROM)
        │    (RESUSCITATION       │
        │      ENDING)            │
        └─────────────────────────┘
  233   ┌─────────────────────────┐
        │   POWER SOURCE OFF      │
        └─────────────────────────┘
                      │
                ( END )
```

# FIG. 49

(b)

240 — STOP IN PRE-HEATING PERIOD?

**YES**

**NO**

242 — STOP IN FIRING, BURNING PERIOD?

**NO**

**YES**

252 — LONGER THAN 5 MINUTES AFTER STOP?

249 — LONGER THAN 5 MINUTES AFTER STOP?

**YES** **YES**

**NO**

250 — RESUSCITATION OF POWER SOURCE?

**NO**

253 — RESUSCITATION OF POWER SOURCE?

**NO**

**YES**

**NO**

**YES**

251 — FLAG V ← 0

254 — FLAG V ← 0

(h)

(e)

(f)

255 — LONGER THAN 5 MINUTES AFTER STOP?

**YES**

**NO**

256 — RESUSCITATION OF POWER SOURCE?

**NO**

**YES**

257 — STOP THE STARTER DURING 30 MINUTES

258 — FLAG V ← 0

(g)

(e)

## FIG. 50

```
                    START  ────── 300

        YES   OUTER POWER SOURCE  ────── 302
      ┌───────   DROPS ?
      │            │ NO
      │         FLAG V ← 1  ────── 304    (TO EEPROM)
      │            │
      ▼            ▼
   RETURN          C
```

## FIG. 51

```
              START
                │
         STAGE INDICATION  ────── 200
                │
        YES  THE INITIAL STAGE  ────── 202
      ┌─────────   │ NO
      │      RESUSCITATION STOP  ────── 204
      │          LAMP ON
      │            │
      │            ▼
  206 ─── STARTING SWITCH ON ?
      │            │
  208 ─── RESUSCITATION STOP ?  ──NO──→  a
                │ YES
                ▼
                b
```